# EUROPEAN PATENT SPECIFICATION

(11) **EP 3 566 457 B1**
(45) Date of publication and mention of the grant of the patent: **23.12.2020**
(21) Application number: 17817981.8
(22) Date of filing: 30.11.2017
(51) Int. Cl.: H04N 21/431, H04N 21/442, H04N 21/45, H04N 21/466, H04N 21/475, H04N 21/482, H04N 21/8405, H04H 60/46, G06F 3/048, H04N 21/433

(54) **SYSTEMS AND METHODS FOR PREDICTING VIEWING BEHAVIOR**
SYSTEME UND VERFAHREN ZUR VORHERSAGE DES BETRACHTUNGSVERHALTENS
SYSTÈMES ET PROCÉDÉS DE PRÉDICTION DE COMPORTEMENT DE VISUALISATION

(30) Priority: 03.01.2017 US 201762441897 P; 13.02.2017 US 201715431437; 15.02.2017 US 201715433878; 27.03.2017 US 201715470202; 13.09.2017 US 201762558328 P
(43) Date of publication of application: 13.11.2019
(73) Proprietor: Rovi Guides, Inc., San Jose, CA 95002 (US)
(72) Inventor: SCHMIDT, Margret, B., Redwood City, CA 94061 (US); LISTON, Alexander, W., Menlo Park, CA 94025 (US); PATEL, Pratik, Durham, NC 27713 (US); ROCHE, Brendan, Westminster, CO 80021 (US); CHAWLA, Vinay, Bainbridge Island, WA 98110 (US); TANAKA, Kenichiro, Menlo Park, CA 94025 (US); RILEY, Elizabeth, V., Mountain View, CA 94043 (US)
(74) Representative: Haley Guiliano International LLP
(86) International application number: PCT/US2017/063963
(87) International publication number: WO 2018/128728

(56) References cited:
- EP-A1- 2 432 225
- EP-A1- 2 947 891
- WO-A1-2016/069306
- US-A1- 2009 178 083
- US-A1- 2013 061 266
- US-A1- 2013 247 081
- US-A1- 2013 283 317
- US-A1- 2015 163 554
- US-A1- 2015 245 105
- US-A1- 2015 370 818
- US-A1- 2016 066 040
- US-A1- 2016 142 783
- US-B1- 8 707 376
- KUNAVER ET AL: "Optimisation of combined collaborative recommender systems", AEU - INTERNATIONAL JOURNAL OF ELECTRONICS AND COMMUNICATIONS, ELSEVIER, AMSTERDAM, NL, vol. 61, no. 7, 1 June 2007 (2007-06-01), pages 433-443, XP022102091, ISSN: 1434-8411, DOI: 10.1016/J.AEUE.2007.04.003

## Description

This application claims the benefit of United States Provisional Application Nos. 62/441,897 filed January 3, 2017; and 62/558,328 filed September 13, 2017, and also claims the benefit of United States Non-Provisional Patent Application Nos. 15/470,202 filed March 27, 2017; 15/431,437 filed February 13, 2017; and 15/433,878 filed February 15, 2017.

### Background

Various systems are available today for recommending media to a user. Some systems track media that the user consumes over time and based on that media try to predict future media the user may desire to consume. For example, if a user prefers action movies, currently available systems may search through media listings to find all available action movies to recommend to the user. However, these systems do not predict media asset consumption based on previous viewing history that is specific to a series that the media asset belongs to.

In the related art, linear services (e.g., cable television program providers) that provide scheduled programming sometimes offer a user an ability to restart a program if the user tunes to that program after its start time. The related art generally offers this option by recording the program at a server when the start time of the program begins and transmitting the missed, recorded portion to the user upon request, or by transmitting to the user an on-demand copy of the program upon receipt of a restart request. The related art, however, is limited to the same linear service providing both the scheduled programming and the restart copy. Thus, if the linear service does not have a restart copy available, no restart option will be available to the user.

Given the plethora of media assets available to consumers, it is often difficult for users to quickly determine media assets they are interested in accessing. In order to aid users, systems exist that visually present media asset identifiers, which contain information relating to media assets. To aid users searching for particular media assets, some systems categorize media assets into groups. The groups of media assets, which, for example, may be based on genre or source, are then presented to users. A selection of a particular group may then enable a user to take an action related to that group.

However, even with categorizing media assets into groups, there still may be a large number of groups that cannot be quickly navigated by a user. Specifically, present systems lack the ability to efficiently navigate between groups of media assets.

### Summary

Therefore, systems and methods are disclosed herein for predicting media asset consumption based on a user's media asset consumption history of a previous season of a series. Predictions of media asset consumption may be performed in different ways. For example, one way of predicting user consumption may be based on previous user behavior. Another way to predict media asset consumption may be based on popularity of a media asset. Some factors that may be used in predicting media asset consumption may include the user's favorite genre, shows that the user watches regularly, time of day, shows that the user recently watched, series that the user most frequently watches, shows that have been requested to be recorded for the first time, as well as other suitable factors. For example, if the user's consumption history includes an affinity for a particular sport or a particular sports team, a system may, when predicting user behavior, weight media assets associated with the specific sports higher than media assets associated with a different sport. If there is an affinity for a specific team, media assets associated with that team are weighed even more when predicting what the user is going to watch.

Furthermore, episodes of recently watched series may be weighted higher than episodes of series that have not recently been watched. For example, a system may determine that a user watched episodes of a specific for three weeks in a row, while the user watched fifty episodes of another series one year ago. Based on that information, the system may weigh the recently watched series higher in predicting user behavior.

A media guidance application may be used to perform actions to make predictions and all actions will be described in terms of the media guidance application. However, it should be noted that the actions described below may be performed outside of a media guidance application. Another way to recommend media assets is the user of collaborative filtering, where shows that are highly rated or liked by other users are recommended to the user.

The media guidance application may be configured to select programs for a specific timeslot that are part of a series that the user may be interested in. The media guidance application may narrow down the selection to programs that are being released for the first time. The media guidance application may determine how many episodes of those respective series of a previous season the user consumed when first released, and determine which program the user will consume based on the number of episodes of a previous season of the respective series that the user has consumed.

In some aspects, the media guidance application may predict, for a user, a media asset that the user will consume during a specific timeslot. The media guidance application may make the prediction by identifying, for a timeslot, those media assets that may be of interest to a user. The media guidance application may determine which of those media assets are first run episodes of their respective series. The media guidance application may identify, for each series, episodes associated with the previous season of the respective series and compare those episodes with media assets that the user has consumed. Based on that comparison, the media guidance application may determine an amount of episodes for each respective series the user has consumed and predict, based on those amounts, which media asset the user will consume during the timeslot.

The media guidance application may identify, for a timeslot, media assets that are part of a series that the user may be interested in. Specifically, the media guidance application may determine, for a timeslot, that each of a plurality of media assets is of interest to a user, where each of the plurality of media assets is scheduled to be transmitted to a plurality of users during the timeslot and is associated with a respective series of media assets. For example, the media guidance application may search through media guidance listings for all media assets that are part of a series and that will be transmitted between 7PM and 8PM. The media guidance application may determine which of those media assets the user may be interested in (e.g., based on the user's media asset consumption history). In one example, the media guidance application may determine which genre the user is interested in, based on the genres of the shows that the user has consumed in the past. In another example, the media guidance application may determine which shows are more popular than others to determine which ones would be of interest to the user.

The media guidance application may identify those media assets that are being released for the first time during the timeslot. Although this process is described in relation to two media assets, the process may be performed on any number of media assets for the timeslot. Specifically, the media guidance application may retrieve, for a first media asset of the plurality of media assets, a release date associated with the first media asset and a season number within a first series that corresponds to the first media asset. For example, the media guidance application may retrieve the release date and the season number from metadata included with the media guidance listing associated with the first media asset. Additionally or alternatively, the media guidance application may retrieve the release date and season number from a database that stores information describing media assets. Please note that a release date may be used interchangeably with "original air date."

The same retrieval process may be repeated for a second media asset being transmitted during the timeslot. Specifically, the media guidance application may retrieve, for a second media asset of the plurality of media assets, a release date associated with the second media asset and a season number within a second series that corresponds to the second media asset. For example, the media guidance application may retrieve the release date and the season number from metadata included with the media guidance listing associated with the second media asset. Additionally or alternatively, the media guidance application may retrieve the release date and season number from a database that stores information describing media assets.

The media guidance application may compare the release dates for both the first media asset and the second media asset to determine whether both are released for the first time (i.e., first run episodes) during the timeslot. It should be noted that the comparison described herein is for two media assets. However, any number of media assets transmitted during the timeslot may be compared to determine which are first run episodes of a respective series (i.e., are being released for the first time). Specifically, the media guidance application may compare the release date associated with the first media asset with a current date and the release date associated with the second media asset with the current date. For example, the media guidance application may have retrieved the release date of a specific media asset and the current date. If those dates are the same, the media asset is a first run episode of a corresponding series. The same process may be performed for the second media asset. It should be noted that this process may be performed for any number of media assets transmitted during the timeslot that are part of a series.

The media guidance application may determine, based on the comparing, that both the first media asset and the second media asset are first run episodes of the first series of media assets and the second series of media assets, respectively. For example, for those media assets where the release date matches the current date, the media guidance application may determine that those media assets are first run episodes of a respective series.

The media guidance application may proceed to identify, for each of the first series and the second series, episodes of a previous season of the respective series. Specifically, the media guidance application may generate a first set of media asset identifiers and a second set of media asset identifiers, where the first set of media asset identifiers includes media asset identifiers corresponding to episodes of a previous season of the first series and the second set of media asset identifiers includes media asset identifiers corresponding to episodes of a previous season of the second series. For example, the media guidance application may identify the first media asset as being a new episode of the series "The Big Bang Theory" and a second media asset being a new episode of the series "Suits." The media guidance application may identify all episodes of the series "The Big Bang Theory" and of the series "Suits" associated with a previous season of each show, respectively.

The media guidance application may proceed to determine which episodes of the previous season of the respective series the user has consumed. Specifically, the media guidance application may compare each media asset identifier in the first set with media asset identifiers corresponding to media assets consumed by the user, and each media asset identifier in the second set with the media asset identifiers corresponding to the media assets consumed by the user. For example, the media guidance application may compare all episodes of the series "The Big Bang Theory" of the previous season with all media assets that the user has consumed, and all episodes of the series "Suits" of the previous season with all media assets that the user has consumed.

The media guidance application may identify those media assets of the respective previous seasons that the user has previously consumed. Specifically, the media guidance application may generate a third set of media asset identifiers and a fourth set of media assets identifiers, where the third set of media asset identifiers includes media asset identifiers corresponding to episodes of the previous season of the first series that the user consumed, and where the fourth set of media asset identifiers includes media asset identifiers corresponding to episodes of the previous season of the second series that the user consumed. The media guidance application may perform the generation based on comparing each media asset identifier in the first set with media asset identifiers corresponding to the media assets consumed by the user and each media asset identifier in the second set with the media asset identifiers corresponding to the media assets consumed by the user. For example, the media guidance application may determine that the user consumed ten of twelve episodes of the previous season of "The Big Bang Theory," and eleven of twelve episodes of the previous season of "Suits." The media guidance application may include, in the third set, media asset identifiers corresponding to episodes of the previous season of the series "The Big Bang Theory" that the user previously consumed, and, in the fourth set, media asset identifiers corresponding to episodes of the previous season of the series "Suits" that the user previously consumed.

The media guidance application may proceed to identify those episodes, from all the episodes of the previous season of the respective series that the user consumed at first run. Specifically, the media guidance application may compare, for each media asset identifier in the third set, a release date associated with a corresponding media asset of the third set with a respective consumption date when the user consumed the corresponding media asset of the third set. For example, the media guidance application may compare the release dates of all episodes of a previous season of the series "The Big Bang Theory" with the dates of when the user consumed the corresponding episode. The media guidance application may perform the same actions with respect to a previous season of "Suits."

If the dates match, the media guidance application may determine that the user consumed the particular episodes on their release date (i.e., at first run). Specifically, the media guidance application may determine, based on comparing, for each media asset identifier in the third set, the release date associated with the corresponding media asset of the third set with the respective consumption date when the user consumed the corresponding media asset of the third set, a first amount of first run episodes of the previous season of the first series that the user previously consumed. For example, the media guidance application may determine that the user consumed ten of twelve first run episodes of the previous season of "The Big Bang Theory." In some embodiments, the media guidance application may calculate a percentage of first run episodes of the previous season of the series "The Big Bang Theory" that the user consumed. In some embodiments, the media guidance application may calculate a ratio of first run episodes consumed to total episodes in the previous season.

The media guidance application may repeat the process described above for the fourth set of media asset identifiers. Specifically, the media guidance application may compare, for each media asset identifier in the fourth set, a release date associated with a corresponding media asset of the fourth set with a respective consumption date when the user consumed the corresponding media asset of the fourth set, and determine, based on comparing, for each media asset identifier in the fourth set, the release date associated with the corresponding media asset of the fourth set with the respective consumption date when the user consumed the corresponding media asset of the fourth set, a second amount of first run episodes of the previous season of the second series that the user previously consumed. For example, the media guidance application may determine that the user consumed ten of twelve first run episodes of "Suits." In some embodiments, the media guidance application may calculate a percentage of first run episodes of the previous season of the series "Suits" that the user consumed. In some embodiments, the media guidance application may calculate a ratio of first run episodes consumed to total episodes in the previous season.

The media guidance application may determine based on the first and second amounts which of the two media assets the user will consume. It should be noted that the media guidance application may perform the actions described with respect to more than two media assets. Specifically, the media guidance application may determine, based on the first amount of first run episodes that the user previously consumed and the second amount of first run episodes that the user previously consumed, whether the user will consume the first media asset or the second media asset. For example, if the user consumed ten of twelve first run episodes of the previous season of "The Big Bang Theory," and eleven of twelve first run episodes of the previous season of "Suits," the media guidance application may determine that the user will consume the episode of the series "Suits" and not the episode of "The Big Bang Theory."

Based on determining that the user will consume the first media asset, the media guidance application may generate for display an indicator of the first media asset, and based on the determining that the user will consume the second media asset, the media guidance application may generate for display an indicator of the second media asset. For example, if the media guidance application determines that the user will consume an episode of "The Big Bang Theory," the media guidance application may generate for display graphics, text, or a combination of those. The media guidance application may, additionally or alternatively, generate an audio cue.

In some embodiments, the media guidance application may utilize metadata associated with the media asset and a database to retrieve release date information and season information. Specifically, the media guidance application may, when retrieving, for the first media asset of the plurality of media assets, the release date associated with the first media asset and the season number within the first series that corresponds to the media asset, retrieve, from metadata associated with the first media asset, a first media asset identifier associated with the first media asset. The media guidance application may transmit a query for (1) the release date associated with the first media asset and (2) the season number within the first series that corresponds to the first media asset, where the first query includes the first media asset identifier, and receive, in response to the query, the release date associated with the first media asset and the season number within the first series that corresponds to the media asset. For example, the media guidance application may retrieve from program listings an identifier associated with the episode of the "Big Bang Theory" that will be transmitted during the timeslot. The identifier may be a string of numbers, a string of letters and numbers, a title with a season number and episode number, or any other suitable identifier. The media guidance application may generate a query for the season number and release date that includes the identifier and transmit the query to a database.

In some embodiments, the media guidance application may generate the first set of media asset identifiers and the second set of media asset identifiers by taking the following actions. The media guidance application may retrieve, from metadata associated with the first media asset, (1) a series identifier corresponding to the first series and (2) a season number within the first series that corresponds to the media asset. For example, the media guidance application may parse the metadata associated with the program listing for the episode of the "Big Bang Theory" that will be transmitted during the timeslot and retrieve the series identifier along with a season number. The series identifier may be the title of the series, a string of numbers, a string of numbers and letters, or another suitable identifier.

The media guidance application may use the series identifier to identify all episodes of the first series. Specifically, the media guidance application may transmit a request for episode metadata corresponding to episodes of the first series. For example, the media guidance application may generate a query that includes the series name (e.g., "The Big Bang Theory") and transmit the query to a database that stores media asset information.

In response, the media guidance application may receive metadata associated with all episodes of the first series. Specifically, the media guidance application may receive, in response to the request, the episode metadata, where the episode metadata includes (1) a respective media asset identifier for each episode of the first series and a plurality of season numbers, each associated with a corresponding episode of the first series. For example, the media guidance application may receive metadata for all episodes of "The Big Bang Theory."

The media guidance application may determine, based on the season number associated with the first media asset, a previous season number. For example, if the season number of the episode of the series "The Big Bang Theory" that will be transmitted during the timeslot is eleven, the media guidance application may determine that the previous season is season ten. The media guidance application may compare the previous season number with each of the plurality of season numbers. For example, the media guidance application may compare the season number of each episode of the series "The Big Bang Theory" with season ten to determine which episodes correspond to season ten.

The media guidance application may identify all episodes of the previous season of the first series and generate a set of the corresponding media asset identifiers. Specifically, the media guidance application may generate, based on comparing the previous season number with each of the plurality of season numbers, the first set that includes episodes with corresponding season numbers matching the previous season number. For example, the media guidance application may generate a set of all episodes of the series "The Big Bang Theory" that correspond to season ten. It should be noted that the same process may be performed for other media assets that will be transmitted during the timeslot to identify all episodes of the previous season for those media assets.

In some embodiments, the media guidance application may determine an amount of first run episodes of the previous season of a series that the user previously consumed by performing the following actions. The media guidance application may calculate, for each first run episode of the previous season of the first series that the user previously consumed, a respective portion of a total length of each episode that the user previously consumed, and determine the first amount of the first run episodes of the previous season of the first series that the user previously consumed based on the respective portion of the total length of each episode that the user previously consumed. For example, the media guidance application may determine that the user consumed ninety percent of each of the ten first run episodes of "The Big Bang Theory." Therefore, the media guidance application may determine the amount of episodes that were consumed as nine.

In some embodiments, two or more media assets may have an identical amount of first run episodes of a previous season of a respective series that the user consumed. In those instances, the media guidance application may predict the media asset that the user will consume based on a number of episodes of the respective series that the user has consumed between the last first run episode of the previous season of the respective series and the current date. Specifically, the media guidance application may determine that the first amount and the second amount are identical. In response to determining that the first amount and the second amount are identical, the media guidance application may retrieve a first release date associated with a final episode of the previous season of the first series and a second release date associated with a final episode of the previous season of the second series. For example, the media guidance application may determine that the last episode of the previous season of the series "The Big Bang Theory" was first released (i.e., had its first run) on January 1, 2017, and that the last episode of the previous season of the series "Suits" was first released (i.e., had its first run) on February 1, 2017.

The media guidance application may determine for each series the respective number of episodes that the user consumed between the current date and those respective release dates. Specifically, the media guidance application may determine a first number of episodes of the first series that the user consumed between the first release date and the current date, and determine a second number of episodes of the second series that the user consumed between the second release date and the current date. For example, the media guidance application may determine, from media asset consumption history associated with the user, that the user consumed fifteen episodes of the series "The Big Bang Theory" and sixteen episodes of the series "Suits" between the respective last episodes of previous season of each respective series and the current date.

The media guidance application may determine whether the user will consume the first media asset or the second media asset based on the first number of episodes and the second number of episodes. To continue with the example above, if the user consumed fifteen episodes of the series "The Big Bang Theory" and sixteen episodes of the series "Suits" between the respective last episodes of previous season of each respective series and the current date, the media guidance application may determine that the user will consume the new episode of the series "Suits" and not the new episode of "The Big Bang Theory."

In some embodiments, the media guidance application may take into account media asset consumption habits of another user that may be consuming media with the user during the timeslot. Specifically, the media guidance application may detect that a second user is consuming content with the user using a first device. The media guidance application may determine, based on media asset consumption history associated with the second user, a third amount of first run episodes of the previous season of the first series the second user previously consumed, and a fourth amount of first run episodes of the previous season of the second series that the second user previously consumed, and modify, based on the third amount and the fourth amount, the first amount and the second amount, respectively. For example, the media guidance application may determine, from media asset consumption history associated with the user, that the user consumed ten first run episodes of the previous season of the series "The Big Bang Theory" and nine first run episodes of the previous season of "Suits." However, the media guidance application may determine that a second user will be consuming content with the user during the timeslot. The media guidance application may determine that the second user consumed four first run episodes of the previous season of the series "The Big Bang Theory" and seven first run episodes of the previous season of "Suits." Thus, together those users consumed fourteen first run episodes of the previous season of the series "The Big Bang Theory" and sixteen first run episodes of the previous season of "Suits." Therefore, the media guidance application may predict that the new episode of the series "Suits" will be chosen for consumption.

In some embodiments, the media guidance application may take into account characteristics of the last media asset that the user has consumed when predicting a media asset for the timeslot. Specifically, the media guidance application may determine, based on series metadata, a first characteristic associated with the first series and a second characteristic associated with the second series. The media guidance application may retrieve a plurality of characteristics associated with a media asset that the user has consumed last, and determine whether the plurality of characteristics includes the first characteristic or the second characteristic. Based on determining that the plurality of characteristics includes the first characteristic, the media guidance application may increase the first amount of first run episodes. Based on determining that the plurality of characteristics includes the second characteristic, the media guidance application may increase the second amount of first run episodes.

For example, the media guidance application may determine that the last media asset the user has consumed is a comedy. The media guidance application may determine that the series "The Big Bang Theory" is also a comedy while the series "Suits" is a drama series. Thus, the media guidance application may increase the amount of first run episodes that the user has consumed of the series "The Big Bang Theory" by one or another suitable number.

In some embodiments, the media guidance application may determine the amount of first run episodes of the previous season that the user has consumed based on a number of first run episodes that the user was consuming live versus those that are time-shifted. Specifically, the media guidance application may determine, for each media asset corresponding to a respective media asset identifier of the first set, whether the user consumed each respective media asset at transmission time. For example, the media guidance application may determine whether the user was consuming each first run episode live or whether the user recorded each first run episode and consumed it at a later time.

The media guidance application may calculate, based on determining whether the user consumed each respective media asset at transmission time, a number of media assets corresponding to media asset identifiers in the first set that the user did not consume at transmission time. For example, if the user consumed eight of the fifteen first run episodes live and recorded or time shifted two first run episodes, the media guidance application may calculate that two episodes were not consumed at transmission time.

The media guidance application may modify the total number of first run episodes consumed by the user based on the episodes that were recorded or time shifted. Specifically, the media guidance application may modify the first amount based on the number of media assets corresponding to media asset identifiers in the first set that the user did not consume at transmission time. For example, if the media guidance application determined that two first run episodes were recorded or time shifted, the media guidance application may subtract the two episodes from the total amount of first run episodes that the user consumed.

In some embodiments, the media guidance application may, when comparing, for each media asset identifier in the third set, release dates and consumption dates, perform the following actions. The media guidance application may search, using a first media asset identifier in the first set, a database that stores media asset consumption history associated with the user, for an entry associated with the first media asset identifier. For example, the media guidance application may query a database that stores media asset consumption history associated with one or more users in order to find an entry associated with the appropriate user. It should be noted that in this embodiment, or any other embodiment of this disclosure, a user may be equivalent to a household of users and a database entry may correspond to a household of users.

The media guidance application may retrieve, from a database, data corresponding to the user's media asset consumption history. Specifically, the media guidance application may retrieve, based on the searching, data of the entry. For example, the media guidance application may query the database for the appropriate user entry and receive back a data structure that includes a plurality of fields describing the user's media asset consumption history

The media guidance application may parse the data structure for the field that indicates when the user consumed a specific media asset (e.g., a first run episode that is being processed by the media guidance application). Specifically, the media guidance application may locate a field, in the data of the entry, that stores a first consumption date associated with a media asset corresponding to the first media asset identifier. For example, the media guidance application may search the user's media asset consumption history for a specific first run episode of the series "Suits" and retrieve a date corresponding to the first time that the user consumed the specific first run episode. When the appropriate field is located, the media guidance application may retrieve the first consumption date from the field, and compare the retrieved first consumption date with a release date associated with the media asset corresponding to the first media asset identifier. For example, the media guidance application may compare the consumption date associated with the specific first run episode of the series "Suits" with the release date associated with that episode of "Suits."

In some embodiments, the media guidance application may inform the user why a specific media asset was predicted for consumption and why another media asset, or in some embodiments, multiple other media assets, will not be consumed. Specifically, the media guidance application may, based on determining that the user will consume the first media asset, generate for display an indicator of the second media asset, a first criterion used to predict that the user will consume the first media asset during the timeslot, and a second criterion used to predict that the user will not consume the second media asset during the timeslot. For example, if the media guidance application predicts that the user will consume a new episodes of the series "The Big Bang Theory" and not a new episode of the series "Suits" based on the user consuming more first run episodes of a previous season of the series "The Big Bang Theory" than "first run episodes of a previous season of "Suits," the media guidance application may generate for display a title of each episode together with an amount of first run episodes of the previous season consumed for each series, visually distinguishing the new episode of the series "The Big Bang Theory" to indicate that it will be consumed.

In some embodiments, the actions above may be performed in relation to on-demand media asset. For example, a user may desire to consume an on-demand media asset and enter an on-demand application. The media guidance application may determine, for every series available to the user, a number associated with the latest season that is available. The media guidance application may determine a previous season that is available to the user based on the last available season. The media guidance application may perform actions similar to those described above to determine which series or episode to recommend to the user. For example, the media guidance application may identify, for each series available on demand, all episodes of a previous season (i.e., the season immediately prior to the last season available), and determine a number of first run episodes of the previous season that the user previously consumed. The media guidance application may perform these actions in a manner similar to the actions described above. The media guidance application may compare the results in order to determine the series with the highest amount of episodes of the previous season consumed by the user. The media guidance application may generate a prediction to the user based on the results of the comparison (e.g., select the series with the highest amount of consumed episodes of the previous season).

In some embodiments, the media guidance application may perform actions described above with respect to streaming programs, recorded programs, or programs otherwise stored for consumption that are part of a series. These actions may be performed in a manner similar to what has been described above. For example, the media guidance application may identify, for each series that will be streamed or is streaming, has been recorded, or otherwise stored, all episodes of a previous season (i.e., the season immediately prior to the last season available), and determine a number of first run episodes of the previous season that the user previously consumed. The media guidance application may compare the results in order to determine the series with the highest amount of episodes of the previous season consumed by the user. The media guidance application may generate a prediction to the user based on the results of the comparison (e.g., select the series with the highest amount of consumed episodes of the previous season).

In some embodiments, the media guidance application may predict which of multiple recorded episodes of various series the user will consume. For example, the media guidance application may determine that there are three episodes of two different shows that were previously recorded (e.g., two episodes of the series "Suits" and one episode of the series "The Big Bang Theory"). If the user prefers the series "Suits" over the series "The Big Bang Theory," the media guidance application may predict that the user will consume both episodes of the series "Suits" before consuming the episode of the series "The Big Bang Theory."

In some embodiments, the media guidance application may generate for display a series identifier associated with the predicted series. The series identifier may be selectable. In response to a user selection of the series identifier, the media guidance application may generate for display identifiers of specific episodes of the series that are available for the user. For example, the media guidance application may generate for display indicators of episodes of the series that have been recorded or are available from an on-demand application as well as those episodes that are currently airing.

In some embodiments, the actions described above may be performed in relation to any episodes of any series (i.e., not just first run episodes). For example, if two or more episodes of two or more different series are available to a user to consume, the media guidance application may predict which series the user may consume, based on the previous season's consumption. The media guidance application may determine, as described above, an amount of episodes of a previous season (e.g., the season previous to the season that the particular episode is associated with) the user has consumed and determine based on those amounts which series of the different series the user will consume.

In some embodiments, the media guidance application may generate for display an ordered list of different series predicted for a user based the amount of episodes of a previous season of the corresponding series the user has previously consumed. For example, the media guidance application may determine that a number of episodes of different series are available to the user that include episodes that are airing at a current time, recordings/streaming content available from a DVR and/or a service provider or a streaming provider. The media guidance application may determine for each series, based on a respective amount of episodes of a previous season consumed by the user, an order in which the user is likely to consume the available episodes. The media guidance application may generate for display the ordered list for the user. In some embodiments, the media guidance application may prioritize, in the ordered list, media content that the user has set for recording. For example, if a user set to record a specific episode of the series "Suits," the media guidance application may determine that another episode of the same series is currently available, and move that episode to the top of the list.

Systems and methods according to the invention are provided herein for enabling a user to start playback of a scheduled video over when a first service to which the user subscribes does not offer an option to the user to start playback of the video over from a beginning of the video. As an illustrative example, when a broadcast television provider does not offer an option to restart a television program, the media guidance application may determine whether other non-linear services, such as the video streaming services Netflix and Hulu, offer the program to their subscribers. In the event that these services offer the program to their subscribers, and the user subscribes to at least one of these services, the media guidance application may provide a restart option to the user.

To this end and others, in some aspects of the disclosure, the media guidance application may receive a request from a user to access a video that is scheduled for transmission, simultaneously to a plurality of users, beginning from a scheduled start time, where the request is received after the scheduled start time, and where the transmission is performed by a linear service to which the user subscribes. For example, the media guidance application may receive a selection of a program on a television schedule guide for a program whose broadcast has already begun.

In response to receiving the request, the media guidance application may generate for display, based on the transmission, the video to the user. For example, the media guidance application may tune to the channel on which the program is broadcast, and may thereby generate for display the program for display to the user.

The media guidance application may receive, during display of the video, a command from the user to start playback of the video over from the beginning. For example, the media guidance application may generate for display a selectable option to restart the program. The command may be received by way of the media guidance application detecting a selection of the selectable option.

In response to receiving the command, the media guidance application may retrieve information of a profile of the user. For example, the media guidance application may access a user profile and retrieve therefrom information about which non-linear services the user subscribes to. The media guidance application may determine, from the information, a plurality of non-linear services to which the user subscribes, where the non-linear services provide non-linear content over an Internet link.

The media guidance application queries a database corresponding to each non-linear service of the plurality of non-linear services to determine whether each non-linear service offers a non-linear copy of the video. For example, if the user subscribes to the video streaming services Netflix, Hulu, and Amazon, the media guidance application may query each of those video streaming services to determine which ones, if any, offer a copy of the program for streaming to the user. As another example, the media guidance application may ingest catalogs for each non-linear service, based on the ingestion, the media guidance application may add metadata to a data structure corresponding to each media asset identifier for which the non-linear service offers a corresponding media asset that indicates that the non-linear service offers that media asset. The media guidance application may query a database housing the data structure to determine whether the non-linear services offers a non-linear copy of the video (or other media asset).

The media guidance application may determine, in response to the querying, that a non-linear service of the plurality of non-linear services offers the non-linear copy of the video. In response to determining that the non-linear service offers the non-linear copy, the media guidance application may play back the non-linear copy of the video from the beginning.

In some embodiments, in order to play back the non-linear copy of the video from the beginning, the media guidance application may launch a platform corresponding to the non-linear service, where the platform corresponding to the non-linear service is different from a platform corresponding to the linear service that is used to generate for display the video using the linear service. For example, the media guidance application may launch an application or website from which media offered by the non-linear service is accessed. The media guidance application may play back the non-linear copy of the video using the platform corresponding to the non-linear service.

In some embodiments, the media guidance application may determine whether playback of the non-linear copy of the video has terminated. For example, the media guidance application may monitor for an end of playback of the non-linear copy of the video (e.g., the runtime of the non-linear copy of the video has completely elapsed), or may monitor for a command from the user to terminate playback of the non-linear copy of the video (e.g., a command that indicates playback should be stopped). In response to detecting the end of playback of the non-linear copy of the video, or detecting the command from the user to terminate playback of the non-linear copy of the video, the media guidance application may determine that playback of the non-linear copy of the video has terminated.

In some embodiments, in response to determining that playback of the non-linear copy of the video has terminated, the media guidance application may exit the platform corresponding to the non-linear service and may resume generating for display video using the platform corresponding to the linear service. For example, the media guidance application may exit an application dedicated to the non-linear service, and may revert to whatever application was used to generate for display the video received by the linear service.

In some embodiments, the media guidance application may automatically determine, while the video is being generated for display using the transmission of the linear service, and without receiving the command, that the non-linear service offers the non-linear copy of the video. For example, the media guidance application may monitor services to which the user subscribes each time the user tunes to a broadcast channel to determine if a copy of a program on that broadcast channel is offered by a non-linear service to which the user subscribes. The media guidance application may thus determine that there is a linear service that the user subscribes to that offers the program.

In some embodiments, in response to the automatic determining, the media guidance application may automatically pre-cache the non-linear copy of the video at a cache local to the user. For example, the media guidance application may automatically access the non-linear service and buffer the program at the user equipment so that no buffer or download time will be experienced by the user if the user wants to restart the program. In response to receiving the command, the media guidance application may access the pre-cached non-linear copy of the video.

In some embodiments, the media guidance application may determine, in response to the querying, that no non-linear service of the plurality of non-linear services to which the user subscribes offers the non-linear copy of the video. In response to determining that no non-linear service of the plurality of non-linear services to which the user subscribes offers the non-linear copy of the video, the media guidance application may query a second plurality of non-linear services to which the user does not subscribe to determine whether a second non-linear service of the second plurality of non-linear services offers a second non-linear copy of the program. For example, the media guidance application may go beyond the non-linear services to which the user subscribes to determine whether any known non-linear service offers a copy of the program. In response to determining that the second non-linear service offers the second non-linear copy of the program, the media guidance application may generate for display to the user a selectable option to subscribe to the second non-linear service.

In some embodiments, the media guidance application, further in response to determining that the second non-linear service offers the second non-linear copy of the program, may pre-cache the second non-linear copy of the program at a cache local to the user, and, in response to receiving a selection of the selectable option to subscribe to the second non-linear service, may access the pre-cached second non-linear copy of the program. Thus, in the event the user chooses to subscribe to the second non-linear service, the non-linear copy of the video will be available to the user for immediate consumption without any time needed for buffering or download.

In some embodiments, the media guidance application may generate for display, in response to the querying, a menu indicating each non-linear service to which the user subscribes that offers the copy of the non-linear program. The media guidance application may receive a user selection from the menu of an indication corresponding to the non-linear service, where the playing back the non-linear copy of the video from the beginning comprises playing back the non-linear copy of the video from the beginning in response to receiving the user selection. The menu may additionally indicate non-linear services to which the user does not subscribe that offer the copy of the non-linear program.

In some embodiments, the media guidance application may determine whether the non-linear service provider offers a premium version of the non-linear copy of the video. For example, the media guidance application may determine that the broadcast video was received in high definition, but the non-linear service provider offers, in addition to a high definition copy, a 4K copy of the video. In response to determining that the non-linear service provider offers the premium version, the media guidance application may generate for display, during playback of the non-linear copy of the video, a selectable option for accessing the premium version.

Accordingly, systems and methods are provided herein for navigating between groups of media assets based on multiple user inputs of directional navigation commands received within a period of time. Specifically, the system may navigate through a number of ordered groups of media assets without presenting information to the user related to the specific groups (e.g., presenting to the user media assets associated with the group) in response to receiving the multiple directional navigation commands, thus allowing a user to navigate to a desired group of media assets with fewer distractions. To this end, a media guidance application may generate for display, based on a first display template, indicators for a plurality of groups of media assets and media asset identifiers associated with one of the groups of media assets. The media guidance application may receive a first user input corresponding to a directional navigation command (e.g., a user depressing a key on the remote control corresponding to a down direction) and a second user input corresponding to an additional directional navigational command within a threshold period of time (e.g., 0.5 seconds). In response, the media guidance application may generate for display, based on a second display template, indicators for additional groups of media assets, as well as the plurality of groups of media assets. The media guidance application may determine a new group of media assets to navigate to (e.g., 4 groups down) based on the received directional navigation commands and may generate for display, based on the first display template, indicators for media asset identifiers associated with the new group of media assets.

The above systems and methods may be implemented for a "My Shows" menu that allows a user to quickly navigate between a large number of tailored media asset identifiers and groups of media assets. For example, the "My Shows" menu may include a group of media assets, "May Also Like," which includes media asset identifiers for media assets that the user is likely to enjoy (e.g., based on the user's viewing history and preferences from a user profile). As another example, the "My Shows" menu may include a "Continue Watching" group of media assets, which includes media assets the user has partially viewed based on viewing history stored in a user profile for the user. For media assets a user has previously viewed, an indication of the progress of the user may be displayed with the media asset identifier (e.g., a progress bar) to inform the user whether he or she was nearly finished with a given media asset or had just started it. Additionally, the media asset identifier may include an indication of whether the media asset is a stored recording or from another source (e.g., video-on-demand).

In some aspects, the media guidance application may be configured to accept commands to navigate from a first group of media assets to a second group of media assets based on receiving multiple directional navigation commands within a threshold period of time of one another. Specifically, the media guidance application may link a plurality of groups of media assets and a first plurality of media asset identifiers with a first instance of a first display template, where the first plurality of media asset identifiers is associated with a first group of media assets of the plurality of groups of media assets. For example, the media guidance application may retrieve, either locally from storage or remotely from a server via a communications network, the first display template. The first display template may be any suitable data structure, such as a class or a table, which contains parameters for displaying groups of media assets and media asset identifiers. The media guidance application may generate a first instance of the first display template. The media guidance application may store links to particular locations in storage (e.g., pointers) for the particular groups of media assets and media asset identifiers to be displayed. For example, each group of media assets may be an object that has a plurality of associated media assets. As a specific example, a group of media assets may be for the genre, "Comedy," which may be associated with media assets such as "Happy Gilmore."

The media guidance application may generate for display the first instance of the first display template including a first plurality of indicators for the plurality of groups of media assets and a second plurality of indicators for the first plurality of media asset identifiers. For example, the media guidance application may generate for display rectangular objects of a first size including identifiers for the first plurality of groups of media assets and rectangular objects of a second size including identifiers for the first plurality of media asset identifiers. The media guidance application may generate each indicator based on formatting instructions for the indicator. For example, if one indicator corresponds to a media asset identifier with a long title, then the indicator may be larger than other indicators. Alternatively or additionally, the title may be scaled such that it fits in its entirety in a same sized indicator as other displayed indicators. In some embodiments, the media guidance application may generate for display, with an indicator, additional information based on data stored in a user profile related to the media asset identifier or group of media assets corresponding to the indicator. For example, if a user has viewed a portion of a media asset for which an indicator for the corresponding media asset identifier is displayed, the media guidance application may add a progress bar to denote the user's progress in the media asset.

In some embodiments, the media guidance application may generate a data structure containing a plurality of fields with information needed to generate for display indicators for media asset identifiers and groups of media assets appropriately on the screen (e.g., size and/or location). Specifically, the media guidance application may generate a first data structure according to the first display template, for the first instance of the first display template, where the first data structure includes for each of the plurality of groups of media assets and for each of the first plurality of media asset identifiers a first field, a second field, and a third field. For example, the media guidance application may generate, based on the first display template, a data structure containing a plurality of fields. The data structure may be organized as a table, where each row in the table corresponds to an indicator to be displayed, and each field in the row contains information relating to the indicator. Alternatively, the data structure may be organized as an object of a class, where the class contains attributes for each indicator corresponding to the first display template. The media guidance application may execute an instruction to create an object (e.g., the first instance) of the class (e.g., the first display template) and define the attributes for each indicator.

The media guidance application may store in each of the first field an identifier associated with one of the plurality of groups of media assets or one of the first plurality of media asset identifiers. For example, the media guidance application may generate pointers to locations in memory (i.e., an identifier) containing data associated with a group of media assets or a media asset identifier. For example, the media guidance application may generate a pointer to a location in memory containing a title, pixel information for an image, or any other associated data that may be used to identify the group of media assets or media asset identifier. Alternatively or additionally, the media guidance application may store a URL or other identifier that defines a location remote from the media guidance application containing the data associated with a group of media assets or a media asset identifier as described above.

The media guidance application may store in each of the second field an indication of whether a corresponding identifier in the associated first field is associated with one of the plurality of groups of media assets or associated with one of the first plurality of media asset identifiers. For example, the media guidance application may store a single character, string of characters, or integer indicating whether an identifier stored in a first field corresponds to a group of media assets or a media asset identifier. For example, if media asset identifiers and groups of media assets are the only types of identifiers, a single flag may be stored indicating whether the corresponding identifier is a group of media assets (e.g., set to "true"). The media guidance application may also store in each of the third field a flag indicating whether an indicator associated with the corresponding identifier is to be displayed as selected. For example, the media guidance application may determine that a particular group of media assets or media asset identifier was navigated to and thus was selected. In response, the media guidance application may set the flag in the third field corresponding to the appropriate identifier stored in the first field to "true."

In some embodiments, the media guidance application, when generating for display the first instance of the first display template, formats (e.g., the size, location, shape, etc.) the indicators based on data contained in a data structure corresponding to the first instance of the first display template. Specifically, the media guidance application may retrieve, from each first field in the first data structure, a corresponding identifier. The media guidance application may access the location in memory or at a remote server linked by the identifier to retrieve information (e.g., a title) to be displayed for the particular associated group of media assets or media asset identifier.

The media guidance application may retrieve, from each second field in the data structure, the indication of whether the identifier in the associated first field is for one of the plurality of groups of media assets or one of the first plurality of media asset identifiers. For example, the media guidance application may retrieve the stored indication associated with each identifier of whether the identifier is a group of media assets or a media asset identifier. As a specific example, the media guidance application may retrieve "1" for a media asset identifier and "2" for a group of media assets, "id" for a media asset identifier and "group" for a group of media assets, or any other stored values indicating whether the identifier is a group of media assets or a media asset identifier, as described above.

The media guidance application may format indicators differently based on whether each indicator is for a group of media assets or a media asset identifier. Specifically, the media guidance application may format indicators for each retrieved identifier based on the indication of whether the identifier in the associated first field is for one of the plurality of groups of media assets or one of the first plurality of media asset identifiers. Further to the example, the media guidance application may generate an instruction to generate for display each indicator corresponding to a group of media assets twice as large in length and width as each indicator corresponding to a media asset identifier. The media guidance application may format the size, shape, color, or any other display properties of the indicators by generating instructions transmitted to the graphics circuitry.

The media guidance application may generate for display groups of media assets visually distinguished from media asset identifiers. Specifically, the media guidance application may generate for display each formatted indicator, where each formatted indicator associated with the plurality of groups of media assets is visually distinguished from each formatted indicator associated with the first plurality of media asset identifiers. For example, the media guidance application may generate for display on a display (e.g., of user equipment such as a cell phone) the groups of media assets and media asset identifiers such that the groups of media assets have a different size, shape, color, or other graphical property that allows them to be distinguished from the media asset identifiers.

The media guidance application may receive a user input of a first directional navigation command. For example, the media guidance application may receive a user input via a user input interface, such as a remote control. The media guidance application may determine whether the user input corresponds to a directional navigation command (e.g., navigating in the down direction with a "DOWN" button) or a different command (e.g., to enter a VOD menu with a "VOD" button) based on comparing the received user input with a stored list of commands associated with particular user inputs.

The media guidance application may determine whether a second directional navigation command is received within a threshold time period from when the first directional navigation command is received. For example, upon receiving the first directional navigation command, the media guidance application may start a timer for the threshold period of time (e.g., 5 seconds). The media guidance application may monitor for additional user input corresponding to a second directional navigation command (e.g., another user input of the "DOWN" button on a remote control). If no additional directional navigation command is received before the timer indicates the threshold time period has lapsed, the media guidance application may determine a direction associated with the first directional navigation command. Based on the determined direction, the media guidance application may determine a second group of media assets of the plurality of groups of media assets to navigate to and update the first instance of the first display template to display media asset identifiers associated with the second group of media assets.

The media guidance application may, in response to determining that the second directional navigation command is received within the threshold time period, determine a second group of media assets to navigate to and not generate media asset identifiers for groups of media assets between the initially selected group of media assets. Specifically, the media guidance application may link the plurality of groups of media assets and additional groups of media assets with a second instance of a second display template. For example, in order to fill the screen, since no media asset identifiers are generated with the second display template, the media guidance application may add additional groups of media assets, which may allow the user to see more groups of media assets at a time for easier navigation. For example, the media guidance application may generate pointers to locations in memory (i.e., an identifier) containing data associated with one of the plurality of groups of media assets or the additional groups of media assets. For example, the media guidance application may generate a pointer to a location in memory containing a title, pixel information for an image, or any other associated data that may be used to identify one of the groups of media assets. The media guidance application may store the pointers in fields of the second instance of the second display template.

In some embodiments, when linking the plurality of groups of media assets and additional groups of media assets with the second instance of the second display template, the media guidance application may generate a data structure containing a plurality of fields with information needed to generate for display indicators for groups of media assets in both rows and columns. Specifically, the media guidance application may generate a second data structure according to the second display template, for the second instance of the second display template, where the second data structure includes for each of the plurality of groups of media assets and for each of the additional groups of media assets a fourth field. For example, the media guidance application may generate, based on the first display template, a data structure containing a plurality of fields. The data structure may be organized as a table, where each row in the table corresponds to an indicator to be displayed, and each field contains information relating to the indicator. Alternatively, the data structure may be organized as an object of a class, where the class contains attributes for each indicator corresponding to the first display template. The media guidance application may execute an instruction to create an object (e.g., the first instance) of the class (e.g., the first display template) and define the attributes for each indicator. The media guidance application may store in each of the fourth field one or more coordinates defining a display location for a corresponding identifier stored in an associated first field, where the one or more coordinates define a row of a plurality of rows and a column of a plurality of columns for displaying an indicator associated with a corresponding identifier. For example, the media guidance application may store coordinates in Euclidean space corresponding to pixels where a given indicator should be displayed, or coordinates for specific rows and columns where the indicator should be displayed (e.g., (1,2) corresponding to column 1, row 2).

The media guidance application may generate for display additional groups of media assets in addition to the previously generated groups of media assets. Specifically, the media guidance application may generate for display the second instance of the second display template including a third plurality of indicators for (1) the plurality of groups of media assets and (2) the additional groups of media assets. For example, the media guidance application may generate for display rectangular objects including identifiers (e.g., a title) of each of both the plurality of groups of media assets and the additional groups of media assets. The media guidance application may generate each indicator based on formatting instructions for the indicator. For example, if one indicator corresponds to a group of media assets with a large image, the indicator may be larger than other indicators. Alternatively, the image may be scaled such that it fits in its entirety in a same-sized indicator as other displayed indicators. In some embodiments, the media guidance application may generate the second instance of the second display template for display immediately upon receiving the second user directional navigation command. However, in some embodiments, the media guidance application may generate the second instance of the second display template for display upon receiving the first user directional navigation command.

In some embodiments, the media guidance application, when generating for display the second instance of the second display template, may visually distinguish a selected indicator from other indicators. Specifically, the media guidance application may determine that a first indicator of the third plurality of indicators corresponds to a first identifier that is to be displayed as selected. For example, based on the value of a flag for whether an identifier is selected being "true" associated with the first identifier stored in a data structure for the second instance of the second display template, the media guidance application may determine that the first indicator is to be displayed as selected. The media guidance application may visually distinguish the first indicator from other indicators in the third plurality of indicators. For example, the media guidance application may generate a different graphical feature (e.g., a different color, size, location, or border) from the other indicators to visually distinguish that the first indicator is selected.

The media guidance application may compare the first directional navigation command and the second directional navigation command with a plurality of stored directional navigation commands to determine a first direction associated with the first directional navigation command and a second direction associated with the second directional navigation command. For example, the media guidance application may receive a first directional navigation command of a "DOWN" button and determine that the command corresponds to a request to move down (the first direction) to the next group of media assets that is displayed. The media guidance application may determine that the second received command, e.g., also of the "DOWN" button, is to move down (the second direction) one additional group of media assets. In some embodiments, groups of media assets may be arranged according to the second display template in rows and columns, such that the two directional navigation commands received by the media guidance application may correspond to navigation in two dimensions, which allows the user to see even more groups of media assets at a single time.

The media guidance application may navigate, according to the first direction and the second direction, from a first indicator for the first group of media assets to a second indicator for a second group of media assets. For example, the media guidance application may navigate to the indicator corresponding to the group of media assets based on the ordered combination of the directions of the two directional navigation commands. For example, if the ordered combination of the directions of the two directional navigation commands is to move two indicators down, then the media guidance application may navigate to the indicator corresponding to a second group of media assets two down from the previously selected one. Because the two directional navigation commands were received within the threshold time period, the media guidance application does not generate for display media asset identifiers associated with any of the groups of media assets that were navigated through (e.g., by updating the first display template). One of the advantages of this approach is to save processing time by not loading media asset identifiers that the user is uninterested in. Another advantage of this approach is allowing a user to navigate to a displayed indicator with fewer distractions since the user quickly entering multiple directional navigation commands indicates a desire to navigate through a number of the displayed indicators without stopping on an intermediate indictor. Yet another advantage of this is approach is allowing a user to see more groups of media assets on the display screen by removing media asset identifiers, which may help the user find a group of media assets that he or she is searching for.

In some embodiments, when navigating from a first indicator to a second indicator, the media guidance application may update a flag corresponding to whether a particular indicator is selected. Specifically, the media guidance application may update a first flag of a corresponding third field associated with the first indicator to indicate that the first indicator is no longer selected. For example, the media guidance application may, in response to determining that the first indicator is no longer selected based on the received directional navigation commands, update the first flag to "false," indicating that the first indicator is no longer selected. The media guidance application may update a second flag of a corresponding third field associated with the second indicator to indicate that the second indicator is selected. For example, the media guidance application may, in response to determining that the second indicator should now be selected based on the received directional navigation commands, update the second flag to "true" indicating that the second indicator is now selected.

In some embodiments, when determining which indicator to navigate to responsive to the received directional navigation commands, the media guidance application may determine a number of indicators to navigate through based on a duration that the second directional navigation command was selected. Specifically, the media guidance application may determine a duration associated with the second navigation command. For example, the media guidance application may start a timer when the second directional navigation command is first received and stop the timer when the second directional navigation command ceases to be received. As a specific example, the media guidance application may start the timer when a user depresses a button and stop the timer when the button is no longer depressed. The media guidance application may compare the duration with a plurality of stored durations, where each of the stored durations corresponds to instructions to a number of indicators to navigate through. For example, the media guidance application may access a data structure containing a plurality of durations and corresponding numbers of indicators to navigate through. The media guidance application may, based on comparing the duration with a plurality of stored durations, determine the number of indicators to navigate through. For example, the media guidance application may determine that a "DOWN" key was depressed for 3 seconds, which may correspond to navigating through 5 indicators based on the comparison with the data structure. As another example, the media guidance application may determine that a user selected a directional navigation command using a touch-screen interface of a touch-screen device for 3 seconds, which may correspond to navigating through 3 indicators based on the comparison with the data structure. In some embodiments, the data structure may contain device-specific corresponding numbers of indicators to navigate through. For example, the media guidance application may, for the same command received for the same duration, retrieve different values for the number of indicators to navigate through for different device (e.g., a smartphone and a set-top-box).

The media guidance application may link media asset identifiers associated with the newly selected second group of media assets to a display template. Specifically, the media guidance application may link a second plurality of media asset identifiers, instead of the first plurality of media asset identifiers, with the first instance of the first display template, where the second plurality of media asset identifiers is associated with the second group of media assets. For example, the media guidance application may update the first instance of the first display template to reflect that a new group of media assets is selected. For example, the media guidance application may determine that the group of media assets that was previously ordered three below the previously selected group of media assets is now selected based on the two directional navigation commands. The media guidance application may link media asset identifiers associated with the newly selected group of media assets with the first instance of the display template instead of the media asset identifiers that were previously linked (e.g., by clearing pointers to locations in memory that correspond to media asset identifiers in the first instance of the first template and generating and storing new pointers in their place).

The media guidance application may generate for display the first instance of the first display template including a fourth plurality of indicators for the second plurality of media asset identifiers. For example, the media guidance application may generate for display rectangular objects including identifiers for the second plurality of media asset identifiers, in the same manner as described above for the first plurality of media asset identifiers.

In some embodiments, when generating for display the first instance of the first display template including the fourth plurality of indicators for the second plurality of media asset identifiers, the media guidance application may remove groups of media assets that were navigated through. Specifically, the media guidance application may determine a subset of (1) the plurality of groups of media assets and (2) the additional groups of media assets that were not navigated through based on the first directional navigation command and the second directional navigation command. For example, the media guidance application may determine that originally indicators A, B, and C were linked to the first instance of the first display template and displayed. The media guidance application may have added indicators D and E of groups of media assets when the second instance of the second display template was generated for display. If, based on the received directional navigation commands, the media guidance application navigates to C, then group of media assets B was navigated through. Thus, groups A, C, D, and E were not navigated through and comprise the subset. In some embodiments, the initial selected group is included as being navigated through, in which case groups C, D, and E were not navigated through (or initially selected) and comprise the subset.

The media guidance application may remove links in the first instance of the first display template to the plurality of groups of media assets. For example, if the subset comprises groups C,D, and E and groups A, B, and C are linked in the first instance of the first display template, then the media guidance application removes the links to groups A and B, as they have been navigated through. The media guidance application may link the subset with the first instance of the first display template. For example, the media guidance application replaces the removed links to groups of media assets A and B with groups of media assets D and E. The media guidance application may generate for display a fifth plurality of indicators for the subset. For example, the media guidance application may generate, with the fourth plurality of indicators, indicators for the groups of media assets that are part of the subset of groups of media assets. In this way, the media guidance application does not generate for display groups of media assets that the user has already seen and chosen to navigate through.

In some embodiments, the media guidance application may determine a group of media assets to navigate to based on a sequence of user input received within a threshold time period. By utilizing a plurality of different sequences, a user can navigate quickly through groups of media assets more precisely and save time finding a category that he or she is looking for. Specifically, the media guidance application may receive a third directional navigation command within the threshold time period from when the second directional navigation command is received. For example, upon receiving the second directional navigation command the media guidance application may start a timer for the threshold period of time (e.g., 5 seconds). In some embodiments, the threshold period of time may be different depending on the previously received directional navigation command and/or the number of previously received directional navigation commands. The media guidance application may monitor for additional user input corresponding to a third directional navigation command (e.g., another user input of the "DOWN" button on a remote control).

The media guidance application may compare the third directional navigation command with each initial directional navigation command associated with each navigation sequence of a plurality of stored navigation sequences, where each navigation sequence comprises a series of ordered directional navigation commands. For example, the media guidance application may access a data structure containing navigation sequences, stored either locally in memory or remotely at a server accessible via a communications network, and compare the received third directional navigation command with the first navigation command of each stored navigation sequence in the data structure. The media guidance application may determine based on the comparing, that the third directional navigation command is an initial directional navigation command for one or more stored navigation sequences. For example, the media guidance application may determine that the initial directional navigation command for one or more of the stored navigation sequences in the data structure corresponds to the third directional navigation command received from the user.

The media guidance application, in response to determining that the third directional navigation command is the initial directional navigation command for one or more stored navigation sequences, may receive at least one subsequent directional navigation command, where each subsequent directional navigation command of the at least one subsequent directional navigation command is received within a threshold time from when an immediately preceding directional navigation command was received. For example, the media guidance application may receive a fourth directional navigation command from the user within the threshold period of time of the third directional navigation command. The media guidance application may continue to monitor for subsequent directional navigation commands until a directional navigation command is not received within the threshold time of the previous received directional navigation command.

The media guidance application may compare the at least one subsequent directional navigation command with remaining directional navigation commands of the one or more stored navigation sequences. For example, the media guidance application may compare the directional navigation commands, in the order that they were received, with directional navigation commands of navigation sequences that matched the third directional navigation command to determine if the subsequently received directional navigation commands complete any navigation sequences. The media guidance application may determine, based on the at least one subsequent directional navigation command matching the remaining directional navigation commands for a navigation sequence of the one or more navigation sequences, that the at least one subsequent directional navigation command completes the navigation sequence. For example, if the media guidance application receives four additional "DOWN" commands and a navigation sequence is completed by four additional "DOWN" commands, then the media guidance application may determine that the sequence matches the received input.

The media guidance application may navigate, based on an instruction associated with the completed navigation sequence, from the second indicator for the second group of media assets to a third indicator for a third group of media assets. For example, the media guidance application may retrieve a stored instruction associated with the completed navigation sequence from a field in a data structure. The media guidance application may determine, based on the instruction, a number of indicators to navigate through and a direction to navigate. In some embodiments, the instruction may contain multiple directions and numbers of indicators to navigate through in a particular order (e.g., if the indicators are arranged in a grid of rows and columns). As a specific example, an instruction for four "DOWN" commands received in a row may be to navigate to the indicator eight indicators down from the current indicator. In response, the media guidance application may navigate to the indicator eight below the current indicator and update the first instance of the first display template, as described above.

In some embodiments, a user may enter a navigation sequence multiple times, or once with a portion of the navigation sequence reentered. In this instance, the particular sequence may not be stored, but the media guidance application may adjust the instruction associated with the navigation sequence. Specifically, the media guidance application may determine that the at least one subsequent directional navigation command includes additional commands after the completed navigation sequence. For example, the media guidance application may determine that after matching a navigation sequence that requires four "DOWN" commands, the user also inputted an additional two "DOWN" commands. The media guidance application may determine whether the additional received commands correspond to a portion of the completed navigation sequence. For example, the media guidance application may determine that since two "DOWN" commands correspond to two commands in the matched sequence, they correspond to a portion of the completed navigation sequence. In some embodiments, the media guidance application may determine whether a threshold number of commands are matched in order to determine that a portion of the navigation sequence is matched. For example, the media guidance application may determine that two additional "DOWN" commands do not correspond to any adjustment to the instruction, but four "DOWN" commands would (e.g., if the threshold is three additional commands matching a portion of the navigation sequence).

The media guidance application, in response to determining that the additional commands correspond to the portion of the completed navigation sequence, may adjust the instruction associated with the completed navigation sequence. For example, the media guidance application may, based on a predefined rule-set for the number of additional commands matched to the navigation sequence, determine to adjust the instruction. For example, the media guidance application may determine that if three additional "DOWN" commands are received, to increase the number of indicators that are navigated through by three from the number indicated in the instruction associated with the navigation sequence. The media guidance application may navigate, based on the adjusted instruction, to a fourth indicator for a fourth group of media assets. For example, if the instruction was to navigate to an indicator eight below the currently selected indicator, the media guidance application may navigate to the indicator eleven below, based on the adjusted instruction.

It should be noted the systems and/or methods described above may be applied to, or used in accordance with, other systems, methods and/or apparatuses.

### Brief Description of the Drawings

The above and other objects and advantages of the disclosure will be apparent upon consideration of the following detailed description, taken in conjunction with the accompanying drawings, in which like reference characters refer to like parts throughout, and in which:
FIG. 1 shows an illustrative example of a media guidance display of a prediction made based on media asset consumption of first run episodes of a previous season of a series in accordance with some embodiments of the disclosure;
FIG. 2 shows an illustrative example of a media guidance display for navigating and selecting media assets in accordance with some embodiments of the disclosure;
FIG. 3 shows another illustrative example of a media guidance display for navigating and selecting media assets in accordance with some embodiments of the disclosure;
FIG. 4 is a block diagram of an illustrative user equipment device in accordance with some embodiments of the disclosure;
FIG. 5 is a block diagram of an illustrative media system in accordance with some embodiments of the disclosure;
FIG. 6 is an illustrative process for predicting media asset consumption based on a viewing history of a user in accordance with some embodiments of the disclosure;
FIG. 7 is an illustrative process for determining, for a media asset, a release date and season number within a series corresponding to the media asset in accordance with some embodiments of the disclosure; and
FIG. 8 is an illustrative process for generating a set of media assets corresponding to episodes of a previous season of a series in accordance with some embodiments of the disclosure.
FIG. 9 depicts an illustrative embodiment of a display screen being used to play back a scheduled media asset, and including a selectable option to restart the scheduled media asset using a non-linear media asset, in accordance with the claimed invention;
FIG. 10 depicts an illustrative flowchart of a process for enabling a user to restart a video provided by a linear service by playing back a copy of the video from a non-linear service to which the user subscribes, in accordance with the claimed invention;
FIG. 11 depicts an illustrative flowchart of a process for launching a platform to play back a non-linear copy of the program, and exiting the program when playback of the non-linear copy of the video is terminated, in accordance with some embodiments of the disclosure;
FIG. 12 depicts an illustrative flowchart of a process for accessing a pre-cached copy of the video when a restart command is received, in accordance with some embodiments of the disclosure; and
FIG. 13 depicts an illustrative flowchart of a process for restarting a video transmitted by a linear source when the linear source does not offer a restart mechanism, in accordance with some embodiments of the disclosure.
FIG. 14 shows an illustrative example of a display screen with indicators for both groups of media assets and media asset identifiers, in accordance with some embodiments of the disclosure;
FIG. 15 shows an illustrative example of a display screen with indicators for groups of media assets, in accordance with some embodiments of the disclosure;
FIG. 16 shows another illustrative example of a display screen with indicators for both groups of media assets and media asset identifiers, in accordance with some embodiments of the disclosure;
FIG. 17 is a flowchart of illustrative actions for navigating between groups of media assets, in accordance with some embodiments of the disclosure;
FIG. 18 is a flowchart of illustrative actions for linking a plurality of groups of media assets and a plurality of media asset identifiers with an instance of a display template, in accordance with some embodiments of the disclosure;
FIG. 19 is a flowchart of illustrative actions for navigating, according to directions corresponding to received user directional navigation commands, from a first indicator for a first group of media assets to a second indicator for a second group of media assets, in accordance with some embodiments of the disclosure; and
FIG. 20 is a flowchart of illustrative actions for determining whether received user inputs correspond to a navigation sequence, in accordance with some embodiments of the disclosure.

### Detailed Description

Systems and methods are disclosed herein for predicting media asset consumption based on a user's media asset consumption history of a previous season of a series. A media guidance application may be configured to select programs for a specific timeslot that are part of a series that the user may be interested in. The media guidance application may narrow down the selection to programs that are being released for the first time. The media guidance application may determine how many episodes of those respective series of a previous season the user consumed when first released, and determine which program the user will consume based on the number of episodes of a previous season of the respective series that the user has consumed.

In some embodiments, the media guidance application may predict, for a user, a media asset that the user will consume during a specific timeslot. The media guidance application may identify, for a timeslot, media assets that are part of a series that the user may be interested in. Specifically, the media guidance application may determine, for a timeslot, that each of a plurality of media assets is of interest to a user, where each of the plurality of media assets is scheduled to be transmitted to a plurality of users during the timeslot and is associated with a respective series of media assets. For example, the media guidance application may identify all media assets that the user may be interested in.

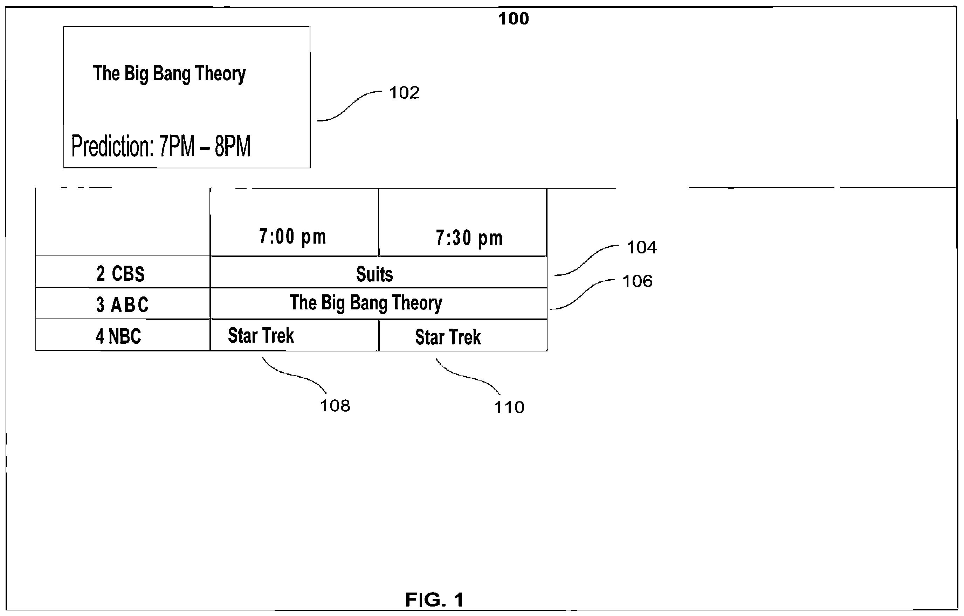

FIG. 1 illustrates one display screen that may be presented to the user in accordance with some embodiments of the disclosure. The media guidance application may determine that the user is interested in media asset 104 and media asset 106 (e.g., because the user enjoys comedies and dramas), but is not interested in media assets 108 and 110 (e.g., because the user does not enjoy sci-fi media assets). Thus, the media guidance application may determine which genres the user is interested is (comedy and drama), based on the genres of media assets that the user has consumed in the past. In another example, the media guidance application may determine which shows are more popular than others to determine which ones would be of interest to the user. The media guidance application may identify (e.g., based on metadata stored with the media guidance listing for media assets that the user is interested in) those media assets that are part of a series. The media guidance application may search, for each identified media asset in a corresponding program listing, for a flag indicating that the corresponding media asset is part of a series. In some embodiments, the media guidance application may search the program listing for a season number and/or episode number in order to determine whether a media asset is part of a series.

The media guidance application may identify those media assets that are being released for the first time during the timeslot. Although this process is described in relation to two media assets, the process may be performed on any number of media assets for the timeslot. Specifically, the media guidance application may retrieve, for a first media asset of the plurality of media assets, a release date associated with the first media asset and a season number within a first series that corresponds to the first media asset. For example, the media guidance application may retrieve the release date and the season number from metadata included with the media guidance listing associated with the first media asset. Additionally or alternatively, the media guidance application may retrieve a media asset identifier associated with each respective media asset, and query a database that stores information describing media assets for the release date and season number using the retrieved media asset identifier. As referred here, the term "release date" for an episode of a series refers to an "original air date" for that episode of the series.

The same retrieval process may be repeated for a second media asset being transmitted during the timeslot. Specifically, the media guidance application may retrieve, for a second media asset of the plurality of media assets, a release date associated with the second media asset and a season number within a second series that corresponds to the second media asset.

The media guidance application may compare the release dates for both the first media asset and the second media asset to determine whether both are released for the first time (i.e., are first run episodes) during the timeslot. It should be noted that the comparison described herein is for two media assets. However, any number of media assets transmitted during the timeslot may be compared herein to determine which are first run episodes of a respective series (i.e., are being released for the first time). Specifically, the media guidance application may compare the release date associated with the first media asset with a current date and the release date associated with the second media asset with the current date. For example, the media guidance application may have retrieved the release date of a specific media asset and the current date. If those dates are identical, the media asset is a first run episode of a corresponding series. The same process may be performed for the second media asset. It should be noted that this process may be performed for any number of media assets transmitted during the timeslot that are part of a series. If the release dates match, the media guidance application may determine, based on the comparing, that both the first media asset and the second media asset are first run episodes of the first series of media assets and the second series of media assets, respectively.

The media guidance application may proceed to identify for each of the first series and the second series episodes of a previous season of the respective series. Specifically, the media guidance application may generate a first set of media asset identifiers and a second set of media asset identifiers, where the first set of media asset identifiers includes media asset identifiers corresponding to episodes of a previous season of the first series and the second set of media asset identifiers includes media asset identifiers corresponding to episodes of a previous season of the second series. For example, the media guidance application may retrieve metadata associated with each episode of the first series and also metadata associated with each episode of a second series. The media guidance application may determine a number associated with a previous season based on a number of the current season (e.g., subtract one from the current season number). The media guidance application may compare the previous season number with a season number stored in the metadata associated with each episode of the first series and also with each episode of the second series. The media guidance application may identify those episodes that have a season number in the metadata matching the previous season number.

The media guidance application may proceed to determine which episodes of the previous season corresponding to the respective media assets the user has consumed. Specifically, the media guidance application may compare each media asset identifier in the first set with media asset identifiers corresponding to media assets consumed by the user, and each media asset identifier in the second set with the media asset identifiers corresponding to the media assets consumed by the user. For example, the media guidance application may retrieve user's media asset consumption history. The user's media asset consumption history may include media asset identifiers (e.g., alphanumeric value, a combination of title, season, and episode number, or another suitable media asset identifier). The media guidance application may compare, for each of the first set and the second set, media asset identifiers with media asset identifiers in the user's media asset consumption history.

The media guidance application may identify those media assets of the respective previous seasons that the user has previously consumed. Specifically, the media guidance application may generate, based on comparing each media asset identifier in the first set with media asset identifiers corresponding to the media assets consumed by the user and each media asset identifier in the second set with the media asset identifiers corresponding to the media assets consumed by the user, a third set of media asset identifiers and a fourth set of media assets identifiers, where the third set of media asset identifiers includes media asset identifiers corresponding to episodes of the previous season of the first series that the user consumed, and where the fourth set of media asset identifiers includes media asset identifiers corresponding to episodes of the previous season of the second series that the user consumed. For example, the media guidance application, upon comparing, as described above, the media asset identifiers of the respective sets with media asset identifiers in the user's media asset consumption history, stores the matching media asset identifiers in the third and the fourth set, respectively.

The media guidance application may proceed to identify those episodes, from all the episodes of the previous season of the respective series that the user consumed at first run. Specifically, the media guidance application may compare, for each media asset identifier in the third set, a release date associated with a corresponding media asset of the third set with a respective consumption date when the user consumed the corresponding media asset of the third set. For example, the media guidance application may iterate through each media asset identifier in the third set and the fourth set, respectively, and compare the associated release dates with the dates that the user consumed those respective media assets.

If the corresponding dates match, the media guidance application may determine that the user consumed the particular episode on its release date (i.e., at first run). Specifically, the media guidance application may determine, based on comparing, for each media asset identifier in the third set, the release date associated with the corresponding media asset of the third set with the respective consumption date when the user consumed the corresponding media asset of the third set, a first amount of first run episodes of the previous season of the first series that the user previously consumed. For example, the media guidance application may store in a data structure media asset identifiers from the third set that correspond to media assets that the user consumed at first run. The media guidance application may, additionally or alternatively, store a first amount (e.g., a number of media assets) of first run episodes of a first series that the user consumed.

The media guidance application may repeat the process described above for the fourth set of media asset identifiers. Specifically, the media guidance application may compare, for each media asset identifier in the fourth set, a release date associated with a corresponding media asset of the fourth set with a respective consumption date when the user consumed the corresponding media asset of the fourth set, and determine, based on comparing, for each media asset identifier in the fourth set, the release date associated with the corresponding media asset of the fourth set with the respective consumption date when the user consumed the corresponding media asset of the fourth set, a second amount of first run episodes of the previous season of the first series that the user previously consumed. For example, the media guidance application may store in a data structure media asset identifiers from the fourth set that correspond to media assets that the user consumed at first run. The media guidance application may, additionally or alternatively, store a first amount (e.g., a number of media assets) of first run episodes of a second series that the user consumed.

The media guidance application may determine based on the first and second amounts which of the two media assets the user will consume. It should be noted that the media guidance application may perform the actions described with respect to more than two media assets. For example, the media guidance application may compare a number of episodes of a previous season of a first series that the user consumed at first run with a number of episodes of a previous season of a second series that the user consumed at first run. In some embodiments, the media guidance application may compare a ratio of the number of episodes of a previous season of a first series that the user consumed at first run to a total number of episodes in the previous season with a ratio of the number of episodes of a previous season of a second series that the user consumed at first run to a total number of episodes in the previous season. In some embodiments, the media guidance application may compare percentages.

Based on determining that the user will consume the first media asset, the media guidance application may generate for display an indicator of the first media asset, and based on the determining that the user will consume the second media asset, the media guidance application may generate for display an indicator of the second media asset. For example, the media guidance application may generate for display graphics, text, or a combination of those. The media guidance application may, additionally or alternatively, generate an audio cue. In some embodiments the media guidance application may generate for display an indication 102 of FIG. 1 that indicates to the user the prediction associated with the specific timeslot.

In some embodiments, the media guidance application may utilize metadata associated with the media asset and a database to retrieve release date information and season information. Specifically, the media guidance application may, when retrieving, for the first media asset of the plurality of media assets, the release date associated with the first media asset and the season number within the first series that corresponds to the media asset, retrieve, from metadata associated with the first media asset, a first media asset identifier associated with the first media asset. For example, the media guidance application may access metadata corresponding to a program listing associated with the media asset. That metadata may include a field for storing a media asset identifier. The media guidance application may retrieve the media asset identifier from the field.

The media guidance application may transmit a query for (1) the release date associated with the first media asset and (2) the season number within the first series that corresponds to the first media asset, where the first query includes the first media asset identifier. For example, the media guidance application may generate a query to a database that stores information about media assets. The query may include the retrieved media asset identifier for looking up the proper record. The query may also include a request for the release date associated with the corresponding media asset and a season number within a series associated with the media asset.

The media guidance application may receive, in response to the query, the release date associated with the first media asset and the season number within the first series that corresponds to the media asset. For example, the media guidance application may receive the information and store it in a data structure.

In some embodiments, the media guidance application may generate the first set of media asset identifiers and the second set of media asset identifiers by taking the following actions. The media guidance application may retrieve, from metadata associated with the first media asset, (1) a series identifier corresponding to the first series and (2) a season number within the first series that corresponds to the media asset. For example, the media guidance application may parse the metadata associated with the program listing for a corresponding media asset that will be transmitted during the timeslot and retrieve the series identifier along with a season number. The series identifier may be the title of the series, a string of numbers, a string of numbers and letters, or another suitable identifier. The metadata may be stored in a database format, or another file format (e.g., XML format)

The media guidance application may use the series identifier to identify all episodes of the first series. Specifically, the media guidance application may transmit a request for episode metadata corresponding to episodes of the first series. For example, the media guidance application may generate a query that includes the series name and transmit the query to a database that includes media asset information. In some embodiments, the media guidance application may transmit an alphanumeric identifier associated with a series or another suitable identifier.

In response, the media guidance application may receive metadata associated with all episodes of the first series. Specifically, the media guidance application may receive, in response to the request, the episode metadata, where the episode metadata includes (1) a respective media asset identifier for each episode of the first series and a plurality of season numbers each associated with a corresponding episode of the first series. For example, the media guidance application may receive metadata for all episodes of a first series. The metadata may be stored in a data structure for convenient access.

The media guidance application may determine, based on the season number associated with the first media asset, a previous season number. For example, the media guidance application may subtract one from the current season to arrive at the previous season number. The media guidance application may compare the previous season number with each of the plurality of season numbers. For example, the media guidance application may iterate through each episode of the first series, as stored in the metadata data structure described above, and identify all episodes where the corresponding season matches the previous season number.

The media guidance application may identify all episodes of the previous season of the first series and generate a set of the corresponding media asset identifiers. Specifically, the media guidance application may generate, based on comparing the previous season number with each of the plurality of season numbers, the first set that includes episodes with corresponding season numbers matching the previous season number. For example, the media guidance application may store in another data structure media asset identifiers that correspond to episodes of the previous season of the series being processed. It should be noted that the same process may be performed for other media assets that will be transmitted during the timeslot to identify all episodes of the previous season for those media assets.

In some embodiments, the media guidance application may determine an amount of first run episodes of the previous season of a series that the user previously consumed by performing the following actions. The media guidance application may calculate, for each first run episode of the previous season of the first series that the user previously consumed, a respective portion of a total length of each episode that the user previously consumed, and determine the first amount of the first run episodes of the previous season of the first series that the user previously consumed based on the respective portion of the total length of each episode that the user previously consumed. For example, the media guidance application may iterate through each episode of the previous season of the series that the user consumed. As the media guidance application iterates through each episode, the media guidance application may retrieve from the user's media asset consumption history an amount (e.g., a percentage, a length, a ratio of length consumed to total length, or another suitable amount) of the corresponding episode that the user consumed. The media guidance application may use that information to determine an amount of episodes of a previous season that the user has consumed at first run. For example, the user may add all the percentages and divide the resulting value by one hundred percent multiplied by the total number of episodes in the previous season. In another example, the user may add all the total lengths consumed and divide by the total length. In yet another example, the media guidance application may add all ratios.

In some embodiments, two or more media assets may have an identical amount of first run episodes of a previous season of a respective series that the user consumed. In those instances, the media guidance application may predict the media asset that the user will consume based on a number of episodes of the respective series that the user has consumed between the last first run episode of the previous season of the respective series and the current date. Specifically, the media guidance application may determine that the first amount and the second amount are identical. For example, the media guidance application may compare respective numbers of episodes of a previous season consumed at first run, ratios of those episodes, percentages of those episodes, or other suitable amounts.

In response to determining that the first amount and the second amount are identical, the media guidance application may retrieve a first release date associated with a final episode of the previous season of the first series and a second release date associated with a final episode of the previous season of the second series. For example, the media guidance application may use media asset identifiers associated with episodes of a previous season of a corresponding series (e.g., obtained above), and determine a release date associated with each episode. The media guidance application may identify the latest release date associated with an episode of a previous season of each respective series.

The media guidance application may determine for each series the respective number of episodes that the user consumed between the current date and those respective release dates. Specifically, the media guidance application may determine a first number of episodes of the first series that the user consumed between the first release date and the current date, and determine a second number of episodes of the second series that the user consumed between the second release date and the current date. For example, the media guidance application may use a series identifier for each respective series (e.g., a series identifier described above) and parse through the user's media asset consumption history. For each media asset identifier in the user's media asset consumption history that matches the respective series identifier, the media guidance application may compare the consumption date with the respective latest release date. If the consumption date is later than the release date (or in some embodiments later or equal to the release date), the media guidance application may update a respective counter that keeps track of the number of episodes of the respective series consumed between the respective latest release date and the current date.

The media guidance application may determine whether the user will consume the first media asset or the second media asset based on the first number of episodes and the second number of episodes. For example, each episode of the respective series consumed between the respective release date of the last episode of the previous season and the current date may be added to the first amount and the second amount respectively.

In some embodiments, the media guidance application may take into account media asset consumption habits of another user that may be consuming media with the user during the timeslot. Specifically, the media guidance application may detect that a second user is consuming content with the user using a first device. For example, the media guidance application may reside on a device that includes a camera and may identify the second user using face recognition. In some embodiments, the media guidance application may reside on a device with a microphone. The media guidance application may identify the second user by recording and analyzing the second user's voice.

The media guidance application may determine, based on media asset consumption history associated with the second user, a third amount of first run episodes of the previous season of the first series the second user previously consumed, and a fourth amount of first run episodes of the previous season of the second series that the second user previously consumed. The media guidance application may make the determination in the same manner as making the determination for the user.

The media guidance application may modify, based on the third amount and the fourth amount, the first amount and the second amount, respectively. For example, the media guidance application may add to the first amount of media assets of the previous season of a first series consumed by the user the amount of media assets of the previous season of the first series consumed by the second user. The media guidance application may add to the amount of media assets of a second series consumed by the user the amount of media assets of the previous season of the second series consumed by the second user. It should be noted that in some embodiments, this process may be performed in response to determining that an identical amount of first run episodes of a previous season of a first series and a second series were consumed.

In some embodiments, the media guidance application may take into account characteristics of the last media asset that the user has consumed when predicting a media asset for the timeslot. Specifically, the media guidance application may determine, based on series metadata, a first characteristic associated with the first series and a second characteristic associated with the second series. For example, the media guidance application may retrieve, for the first and second series, series metadata that may include one or more characteristics associated with the respective series. Those characteristics may include one or more genres associated with the series, names of actors, directors, creators, characters, description of a series, plot keywords, taglines, and other suitable characteristics. The media guidance application may retrieve the metadata from program listing information or from a remote database using a series identifier (e.g., a series identifier described above) to query the database.

The media guidance application may retrieve a plurality of characteristics associated with a media asset that the user has consumed last, and determine whether the plurality of characteristics includes the first characteristic or the second characteristic. For example, the media guidance application may access the user's media asset consumption history and retrieve a media asset identifier associated with the last media asset that the user has consumed. The media guidance application may use the media asset identifier to access media listing information (e.g., on a remote server or in a local program listing database) associated with the media asset identifier.

Based on determining that the plurality of characteristics includes the first characteristic, the media guidance application may increase the first amount of first run episodes. Based on determining that the plurality of characteristics includes the second characteristic, the media guidance application may increase the second amount of first run episodes. For example, if one of the characteristics associated with the last media asset consumed by the user (e.g., genre) matches a characteristic of the first series, the media guidance application may increase the first amount by a value of one. The media guidance application may perform the same action for the second series. In some embodiments, the media guidance application may increase the first amount and/or the second amount based on a number of characteristics that match. For example, if two characteristics associated with the last consumed media asset match the first series, the media guidance application may increase the first amount by the value of two. If three characteristics associated with last consumed media asset match the second series, the media guidance application may increase the second amount by the value of three. In some embodiments, this process may be performed responsive to determining that the first amount and the second amount are equal when originally calculated.

In some embodiments, the media guidance application may determine the amount of first run episodes of the previous season that the user has consumed based on a number of first run episodes that the user was consuming live versus those that are time-shifted. Specifically, the media guidance application may determine, for each media asset corresponding to a respective media asset identifier of the first set, whether the user consumed each respective media asset at transmission time. For example, the media guidance application may store in the user's media asset consumption history data related to consumption for each media asset. For example, if the user consumed the media asset live (e.g., the channel was tuned to a tuner that is outputting a signal), the media guidance application may store an indication of that in the user's media asset consumption history. Likewise, if the user recorded a media asset and consumed it at another time, the media guidance application may store an indication of that in the user's media asset consumption history. The media guidance application may retrieve the stored indicator for each first run episode of the previous season of the respective series that the user consumed. The media guidance application may determine whether the user was consuming each first run episode live or whether the user recorded each first run episode and consumed it at a later time. For example, the media guidance application may make the determination based on the respective retrieved indicator.

The media guidance application may calculate, based on determining whether the user consumed each respective media asset at transmission time, a number of media assets corresponding to media asset identifiers in the first set that the user did not consume at transmission time. The media guidance application may modify the total number of first run episodes consumed by the user based on the episodes that were recorded or time shifted. Specifically, the media guidance application may modify the first amount based on the number of media assets corresponding to media asset identifiers in the first set that the user did not consume at transmission time. For example, the media guidance application may subtract a number of first run episodes of the previous season of the first series that the user did not consume at transmission time from the first amount. The media guidance application may also subtract a number of first run episodes of the previous season of the second series that the user did not consume at transmission time from the second amount.

In some embodiments, the media guidance application may, when comparing, for each media asset identifier in the third set, release dates and consumption dates, perform the following actions. The media guidance application may search, using a first media asset identifier in the first set, for an entry associated with the first media asset identifier. The search may be performed in a database that stores media asset consumption history associated with one or more users. It should be noted that in this embodiment, or any other embodiment of this disclosure, a user may be equivalent to a household of users and a database entry may correspond to a household of users.

The media guidance application may retrieve, from a database, data corresponding to the user's media asset consumption history. Specifically, the media guidance application may retrieve, based on the searching, data of the entry. For example, the media guidance application may query the database for the appropriate user entry and receive back a data structure that includes a plurality of fields describing the user's media asset consumption history

The media guidance application may parse the data structure for the field that indicates when the user consumed a specific media asset (e.g., a first run episode that is being processed by the media guidance application). Specifically, the media guidance application may locate a field, in the data of the entry, that stores a first consumption date associated with a media asset corresponding to the first media asset identifier. When the appropriate field is located, the media guidance application may retrieve the first consumption date from the field, and compare the retrieved first consumption date with a release date associated with the media asset corresponding to the first media asset identifier.

In some embodiments, the media guidance application may inform the user why a specific media asset was predicted for consumption and why another media asset, or in some embodiments, multiple other media assets will not be consumed. Specifically, the media guidance application may, based on determining that the user will consume the first media asset, generate for display an indicator of the second media asset, a first criterion used to predict that the user will consume the first media asset during the timeslot, and a second criterion used to predict that the user will not consume the second media asset during the timeslot. For example, the media guidance application may generate for display a title of each episode together with an amount of first run episodes of the previous season consumed for each series, visually distinguishing the episode that will be consumed.

The amount of content available to users in any given content delivery system can be substantial. Consequently, many users desire a form of media guidance through an interface that allows users to efficiently navigate content selections and easily identify content that they may desire. An application that provides such guidance is referred to herein as an interactive media guidance application or, sometimes, a media guidance application or a guidance application.

Interactive media guidance applications may take various forms depending on the content for which they provide guidance. One typical type of media guidance application is an interactive television program guide. Interactive television program guides (sometimes referred to as electronic program guides) are well-known guidance applications that, among other things, allow users to navigate among and locate many types of content or media assets. Interactive media guidance applications may generate graphical user interface screens that enable a user to navigate among, locate and select content. As referred to herein, the terms "media asset" and "content" should be understood to mean an electronically consumable user asset, such as television programming, as well as pay-per-view programs, on-demand programs (as in video-on-demand (VOD) systems), Internet content (e.g., streaming content, downloadable content, Webcasts, etc.), video clips, audio, content information, pictures, rotating images, documents, playlists, websites, articles, books, electronic books, blogs, chat sessions, social media, applications, games, and/or any other media or multimedia and/or combination of the same. Guidance applications also allow users to navigate among and locate content. As referred to herein, the term "multimedia" should be understood to mean content that utilizes at least two different content forms described above, for example, text, audio, images, video, or interactivity content forms. Content may be recorded, played, displayed or accessed by user equipment devices, but can also be part of a live performance.

The media guidance application and/or any instructions for performing any of the embodiments discussed herein may be encoded on computer readable media. Computer readable media includes any media capable of storing data. The computer readable media may be transitory, including, but not limited to, propagating electrical or electromagnetic signals, or may be non-transitory including, but not limited to, volatile and non-volatile computer memory or storage devices such as a hard disk, floppy disk, USB drive, DVD, CD, media cards, register memory, processor caches, Random Access Memory ("RAM"), etc.

With the advent of the Internet, mobile computing, and high-speed wireless networks, users are accessing media on user equipment devices on which they traditionally did not. As referred to herein, the phrase "user equipment device," "user equipment," "user device," "electronic device," "electronic equipment," "media equipment device," or "media device" should be understood to mean any device for accessing the content described above, such as a television, a Smart TV, a set-top box, an integrated receiver decoder (IRD) for handling satellite television, a digital storage device, a digital media receiver (DMR), a digital media adapter (DMA), a streaming media device, a DVD player, a DVD recorder, a connected DVD, a local media server, a BLU-RAY player, a BLU-RAY recorder, a personal computer (PC), a laptop computer, a tablet computer, a WebTV box, a personal computer television (PC/TV), a PC media server, a PC media center, a hand-held computer, a stationary telephone, a personal digital assistant (PDA), a mobile telephone, a portable video player, a portable music player, a portable gaming machine, a smart phone, or any other television equipment, computing equipment, or wireless device, and/or combination of the same. In some embodiments, the user equipment device may have a front facing screen and a rear facing screen, multiple front screens, or multiple angled screens. In some embodiments, the user equipment device may have a front facing camera and/or a rear facing camera. On these user equipment devices, users may be able to navigate among and locate the same content available through a television. Consequently, media guidance may be available on these devices, as well. The guidance provided may be for content available only through a television, for content available only through one or more of other types of user equipment devices, or for content available both through a television and one or more of the other types of user equipment devices. The media guidance applications may be provided as on-line applications (i.e., provided on a web-site), or as stand-alone applications or clients on user equipment devices. Various devices and platforms that may implement media guidance applications are described in more detail below.

One of the functions of the media guidance application is to provide media guidance data to users. As referred to herein, the phrase "media guidance data" or "guidance data" should be understood to mean any data related to content or data used in operating the guidance application. For example, the guidance data may include program information, guidance application settings, user preferences, user profile information, media listings, media-related information (e.g., broadcast times, broadcast channels, titles, descriptions, ratings information (e.g., parental control ratings, critic's ratings, etc.), genre or category information, actor information, logo data for broadcasters' or providers' logos, etc.), media format (e.g., standard definition, high definition, 3D, etc.), on-demand information, blogs, websites, and any other type of guidance data that is helpful for a user to navigate among and locate desired content selections.

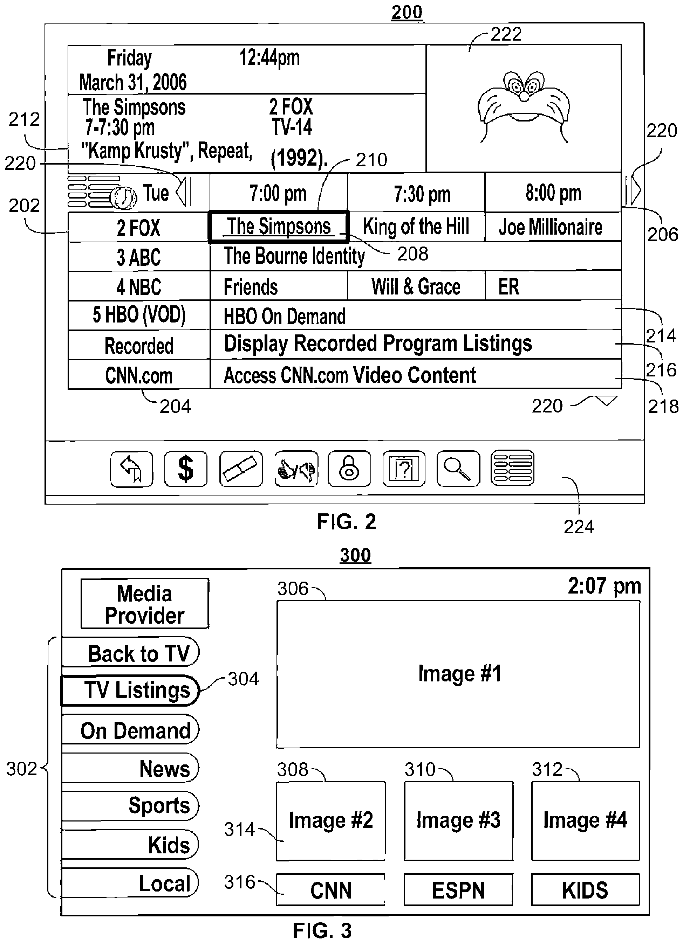

FIGS. 2-3 show illustrative display screens that may be used to provide media guidance data. The display screens shown in FIGS. 2-3 may be implemented on any suitable user equipment device or platform. While the displays of FIGS. 2-3 are illustrated as full screen displays, they may also be fully or partially overlaid over content being displayed. A user may indicate a desire to access content information by selecting a selectable option provided in a display screen (e.g., a menu option, a listings option, an icon, a hyperlink, etc.) or pressing a dedicated button (e.g., a GUIDE button) on a remote control or other user input interface or device. In response to the user's indication, the media guidance application may provide a display screen with media guidance data organized in one of several ways, such as by time and channel in a grid, by time, by channel, by source, by content type, by category (e.g., movies, sports, news, children, or other categories of programming), or other predefined, user-defined, or other organization criteria.

FIG. 2 shows illustrative grid of a program listings display 200 arranged by time and channel that also enables access to different types of content in a single display. Display 200 may include grid 202 with: (1) a column of channel/content type identifiers 204, where each channel/content type identifier (which is a cell in the column) identifies a different channel or content type available; and (2) a row of time identifiers 206, where each time identifier (which is a cell in the row) identifies a time block of programming. Grid 202 also includes cells of program listings, such as program listing 208, where each listing provides the title of the program provided on the listing's associated channel and time. With a user input device, a user can select program listings by moving highlight region 210. Information relating to the program listing selected by highlight region 210 may be provided in program information region 212. Region 212 may include, for example, the program title, the program description, the time the program is provided (if applicable), the channel the program is on (if applicable), the program's rating, and other desired information.

In addition to providing access to linear programming (e.g., content that is scheduled to be transmitted to a plurality of user equipment devices at a predetermined time and is provided according to a schedule), the media guidance application also provides access to non-linear programming (e.g., content accessible to a user equipment device at any time and is not provided according to a schedule). Non-linear programming may include content from different content sources including on-demand content (e.g., VOD), Internet content (e.g., streaming media, downloadable media, etc.), locally stored content (e.g., content stored on any user equipment device described above or other storage device), or other time-independent content. On-demand content may include movies or any other content provided by a particular content provider (e.g., HBO On Demand providing "The Sopranos" and "Curb Your Enthusiasm"). HBO ON DEMAND is a service mark owned by Time Warner Company L.P. et al. and THE SOPRANOS and CURB YOUR ENTHUSIASM are trademarks owned by the Home Box Office, Inc. Internet content may include web events, such as a chat session or Webcast, or content available on-demand as streaming content or downloadable content through an Internet web site or other Internet access (e.g. FTP).

Grid 202 may provide media guidance data for non-linear programming including on-demand listing 214, recorded content listing 216, and Internet content listing 218. A display combining media guidance data for content from different types of content sources is sometimes referred to as a "mixed-media" display. Various permutations of the types of media guidance data that may be displayed that are different than display 200 may be based on user selection or guidance application definition (e.g., a display of only recorded and broadcast listings, only on-demand and broadcast listings, etc.). As illustrated, listings 214, 216, and 218 are shown as spanning the entire time block displayed in grid 202 to indicate that selection of these listings may provide access to a display dedicated to on-demand listings, recorded listings, or Internet listings, respectively. In some embodiments, listings for these content types may be included directly in grid 202. Additional media guidance data may be displayed in response to the user selecting one of the navigational icons 220. (Pressing an arrow key on a user input device may affect the display in a similar manner as selecting navigational icons 220.)

Display 200 may also include video region 222, and options region 226. Video region 222 may allow the user to view and/or preview programs that are currently available, will be available, or were available to the user. The content of video region 222 may correspond to, or be independent from, one of the listings displayed in grid 202. Grid displays including a video region are sometimes referred to as picture-in-guide (PIG) displays. PIG displays and their functionalities are described in greater detail in Satterfield et al. U.S. Patent No. 6,564,378, issued May 13, 2003 and Yuen et al. U.S. Patent No. 6,239,794, issued May 29, 2001, which are hereby incorporated by reference herein in their entireties. PIG displays may be included in other media guidance application display screens of the embodiments described herein.

Options region 226 may allow the user to access different types of content, media guidance application displays, and/or media guidance application features. Options region 226 may be part of display 200 (and other display screens described herein), or may be invoked by a user by selecting an on-screen option or pressing a dedicated or assignable button on a user input device. The selectable options within options region 226 may concern features related to program listings in grid 202 or may include options available from a main menu display. Features related to program listings may include searching for other air times or ways of receiving a program, recording a program, enabling series recording of a program, setting program and/or channel as a favorite, purchasing a program, or other features. Options available from a main menu display may include search options, VOD options, parental control options, Internet options, cloud-based options, device synchronization options, second screen device options, options to access various types of media guidance data displays, options to subscribe to a premium service, options to edit a user's profile, options to access a browse overlay, or other options.

The media guidance application may be personalized based on a user's preferences. A personalized media guidance application allows a user to customize displays and features to create a personalized "experience" with the media guidance application. This personalized experience may be created by allowing a user to input these customizations and/or by the media guidance application monitoring user activity to determine various user preferences. Users may access their personalized guidance application by logging in or otherwise identifying themselves to the guidance application. Customization of the media guidance application may be made in accordance with a user profile. The customizations may include varying presentation schemes (e.g., color scheme of displays, font size of text, etc.), aspects of content listings displayed (e.g., only HDTV or only 3D programming, user-specified broadcast channels based on favorite channel selections, re-ordering the display of channels, recommended content, etc.), desired recording features (e.g., recording or series recordings for particular users, recording quality, etc.), parental control settings, customized presentation of Internet content (e.g., presentation of social media content, e-mail, electronically delivered articles, etc.) and other desired customizations.

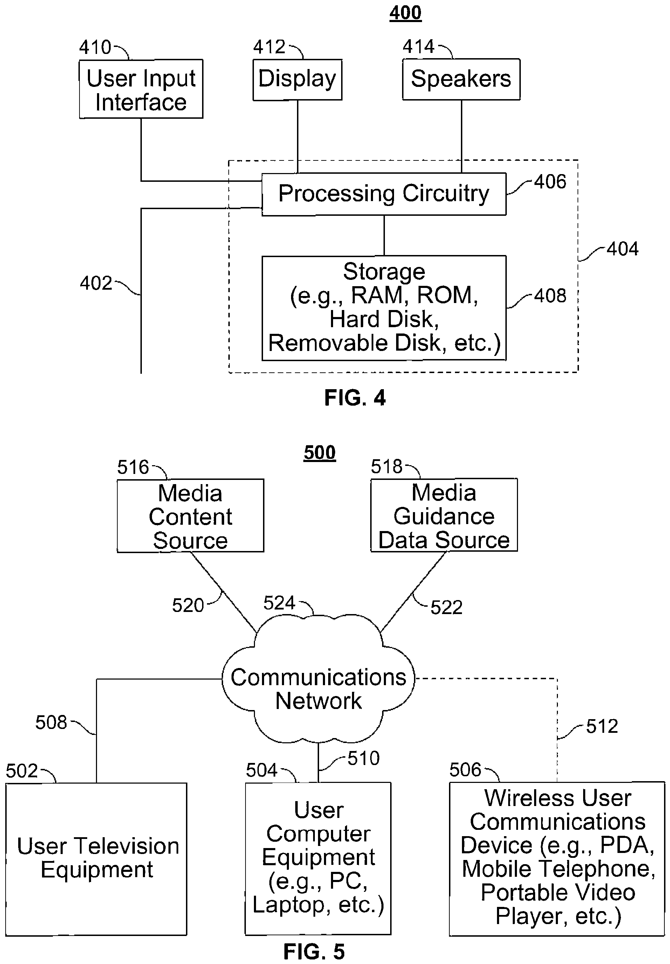

The media guidance application may allow a user to provide user profile information or may automatically compile user profile information. The media guidance application may, for example, monitor the content the user accesses and/or other interactions the user may have with the guidance application. Additionally, the media guidance application may obtain all or part of other user profiles that are related to a particular user (e.g., from other web sites on the Internet the user accesses, such as www.Tivo.com, from other media guidance applications the user accesses, from other interactive applications the user accesses, from another user equipment device of the user, etc.), and/or obtain information about the user from other sources that the media guidance application may access. As a result, a user can be provided with a unified guidance application experience across the user's different user equipment devices. This type of user experience is described in greater detail below in connection with FIG. 5. Additional personalized media guidance application features are described in greater detail in Ellis et al., U.S. Patent Application Publication No. 2005/0251827, filed July 11, 2005, Boyer et al., U.S. Patent No. 7,165,098, issued January 16, 2007, and Ellis et al., U.S. Patent Application Publication No. 2002/0174430, filed February 21, 2002, which are hereby incorporated by reference herein in their entireties.

Another display arrangement for providing media guidance is shown in FIG. 3. Video mosaic display 300 includes selectable options 302 for content information organized based on content type, genre, and/or other organization criteria. In display 300, television listings option 304 is selected, thus providing listings 306, 308, 310, and 312 as broadcast program listings. In display 300 the listings may provide graphical images including cover art, still images from the content, video clip previews, live video from the content, or other types of content that indicate to a user the content being described by the media guidance data in the listing. Each of the graphical listings may also be accompanied by text to provide further information about the content associated with the listing. For example, listing 308 may include more than one portion, including media portion 314 and text portion 316. Media portion 314 and/or text portion 316 may be selectable to view content in full-screen or to view information related to the content displayed in media portion 314 (e.g., to view listings for the channel that the video is displayed on).

The listings in display 300 are of different sizes (i.e., listing 306 is larger than listings 308, 310, and 312), but if desired, all the listings may be the same size. Listings may be of different sizes or graphically accentuated to indicate degrees of interest to the user or to emphasize certain content, as desired by the content provider or based on user preferences. Various systems and methods for graphically accentuating content listings are discussed in, for example, Yates, U.S. Patent Application Publication No. 2010/0153885, filed November 12, 2009, which is hereby incorporated by reference herein in its entirety.

Users may access content and the media guidance application (and its display screens described above and below) from one or more of their user equipment devices. FIG. 4 shows a generalized embodiment of illustrative user equipment device 400. More specific implementations of user equipment devices are discussed below in connection with FIG. 5. User equipment device 400 may receive content and data via input/output (hereinafter "I/O") path 402. I/O path 402 may provide content (e.g., broadcast programming, on-demand programming, Internet content, content available over a local area network (LAN) or wide area network (WAN), and/or other content) and data to control circuitry 404, which includes processing circuitry 406 and storage 408. Control circuitry 404 may be used to send and receive commands, requests, and other suitable data using I/O path 402. I/O path 402 may connect control circuitry 404 (and specifically processing circuitry 406) to one or more communications paths (described below). I/O functions may be provided by one or more of these communications paths, but are shown as a single path in FIG. 4 to avoid overcomplicating the drawing.

Control circuitry 404 may be based on any suitable processing circuitry such as processing circuitry 406. As referred to herein, processing circuitry should be understood to mean circuitry based on one or more microprocessors, microcontrollers, digital signal processors, programmable logic devices, field-programmable gate arrays (FPGAs), application-specific integrated circuits (ASICs), etc., and may include a multi-core processor (e.g., dual-core, quad-core, hexa-core, or any suitable number of cores) or supercomputer. In some embodiments, processing circuitry may be distributed across multiple separate processors or processing units, for example, multiple of the same type of processing units (e.g., two Intel Core i7 processors) or multiple different processors (e.g., an Intel Core i5 processor and an Intel Core i7 processor). In some embodiments, control circuitry 404 executes instructions for a media guidance application stored in memory (i.e., storage 408). Specifically, control circuitry 404 may be instructed by the media guidance application to perform the functions discussed above and below. For example, the media guidance application may provide instructions to control circuitry 404 to generate the media guidance displays. In some implementations, any action performed by control circuitry 404 may be based on instructions received from the media guidance application.

In client-server based embodiments, control circuitry 404 may include communications circuitry suitable for communicating with a guidance application server or other networks or servers. The instructions for carrying out the above mentioned functionality may be stored on the guidance application server. Communications circuitry may include a cable modem, an integrated services digital network (ISDN) modem, a digital subscriber line (DSL) modem, a telephone modem, Ethernet card, or a wireless modem for communications with other equipment, or any other suitable communications circuitry. Such communications may involve the Internet or any other suitable communications networks or paths (which is described in more detail in connection with FIG. 5). In addition, communications circuitry may include circuitry that enables peer-to-peer communication of user equipment devices, or communication of user equipment devices in locations remote from each other (described in more detail below).

Memory may be an electronic storage device provided as storage 408 that is part of control circuitry 404. As referred to herein, the phrase "electronic storage device" or "storage device" should be understood to mean any device for storing electronic data, computer software, or firmware, such as random-access memory, read-only memory, hard drives, optical drives, digital video disc (DVD) recorders, compact disc (CD) recorders, BLU-RAY disc (BD) recorders, BLU-RAY 3D disc recorders, digital video recorders (DVR, sometimes called a personal video recorder, or PVR), solid state devices, quantum storage devices, gaming consoles, gaming media, or any other suitable fixed or removable storage devices, and/or any combination of the same. Storage 408 may be used to store various types of content described herein as well as media guidance data described above. Nonvolatile memory may also be used (e.g., to launch a boot-up routine and other instructions). Cloud-based storage, described in relation to FIG. 5, may be used to supplement storage 408 or instead of storage 408.

Control circuitry 404 may include video generating circuitry and tuning circuitry, such as one or more analog tuners, one or more MPEG-2 decoders or other digital decoding circuitry, high-definition tuners, or any other suitable tuning or video circuits or combinations of such circuits. Encoding circuitry (e.g., for converting over-the-air, analog, or digital signals to MPEG signals for storage) may also be provided. Control circuitry 404 may also include scaler circuitry for upconverting and downconverting content into the preferred output format of the user equipment 400. Circuitry 404 may also include digital-to-analog converter circuitry and analog-to-digital converter circuitry for converting between digital and analog signals. The tuning and encoding circuitry may be used by the user equipment device to receive and to display, to play, or to record content. The tuning and encoding circuitry may also be used to receive guidance data. The circuitry described herein, including for example, the tuning, video generating, encoding, decoding, encrypting, decrypting, scaler, and analog/digital circuitry, may be implemented using software running on one or more general purpose or specialized processors. Multiple tuners may be provided to handle simultaneous tuning functions (e.g., watch and record functions, picture-in-picture (PIP) functions, multiple-tuner recording, etc.). If storage 408 is provided as a separate device from user equipment 400, the tuning and encoding circuitry (including multiple tuners) may be associated with storage 408.

A user may send instructions to control circuitry 404 using user input interface 410. User input interface 410 may be any suitable user interface, such as a remote control, mouse, trackball, keypad, keyboard, touch screen, touchpad, stylus input, joystick, voice recognition interface, or other user input interfaces. Display 412 may be provided as a stand-alone device or integrated with other elements of user equipment device 400. For example, display 412 may be a touchscreen or touch-sensitive display. In such circumstances, user input interface 410 may be integrated with or combined with display 412. Display 412 may be one or more of a monitor, a television, a liquid crystal display (LCD) for a mobile device, amorphous silicon display, low temperature poly silicon display, electronic ink display, electrophoretic display, active matrix display, electro-wetting display, electrofluidic display, cathode ray tube display, light-emitting diode display, electroluminescent display, plasma display panel, high-performance addressing display, thin-film transistor display, organic light-emitting diode display, surface-conduction electron-emitter display (SED), laser television, carbon nanotubes, quantum dot display, interferometric modulator display, or any other suitable equipment for displaying visual images. In some embodiments, display 412 may be HDTV-capable. In some embodiments, display 412 may be a 3D display, and the interactive media guidance application and any suitable content may be displayed in 3D. A video card or graphics card may generate the output to the display 412. The video card may offer various functions such as accelerated rendering of 3D scenes and 2D graphics, MPEG-2/MPEG-4 decoding, TV output, or the ability to connect multiple monitors. The video card may be any processing circuitry described above in relation to control circuitry 404. The video card may be integrated with the control circuitry 404. Speakers 414 may be provided as integrated with other elements of user equipment device 400 or may be stand-alone units. The audio component of videos and other content displayed on display 412 may be played through speakers 414. In some embodiments, the audio may be distributed to a receiver (not shown), which processes and outputs the audio via speakers 414.

The guidance application may be implemented using any suitable architecture. For example, it may be a stand-alone application wholly-implemented on user equipment device 400. In such an approach, instructions of the application are stored locally (e.g., in storage 408), and data for use by the application is downloaded on a periodic basis (e.g., from an out-of-band feed, from an Internet resource, or using another suitable approach). Control circuitry 404 may retrieve instructions of the application from storage 408 and process the instructions to generate any of the displays discussed herein. Based on the processed instructions, control circuitry 404 may determine what action to perform when input is received from input interface 410. For example, movement of a cursor on a display up/down may be indicated by the processed instructions when input interface 410 indicates that an up/down button was selected.

In some embodiments, the media guidance application is a client-server based application. Data for use by a thick or thin client implemented on user equipment device 400 is retrieved on-demand by issuing requests to a server remote to the user equipment device 400. In one example of a client-server based guidance application, control circuitry 404 runs a web browser that interprets web pages provided by a remote server. For example, the remote server may store the instructions for the application in a storage device. The remote server may process the stored instructions using circuitry (e.g., control circuitry 404) and generate the displays discussed above and below. The client device may receive the displays generated by the remote server and may display the content of the displays locally on equipment device 400. This way, the processing of the instructions is performed remotely by the server while the resulting displays are provided locally on equipment device 400. Equipment device 400 may receive inputs from the user via input interface 410 and transmit those inputs to the remote server for processing and generating the corresponding displays. For example, equipment device 400 may transmit a communication to the remote server indicating that an up/down button was selected via input interface 410. The remote server may process instructions in accordance with that input and generate a display of the application corresponding to the input (e.g., a display that moves a cursor up/down). The generated display is then transmitted to equipment device 400 for presentation to the user.

In some embodiments, the media guidance application is downloaded and interpreted or otherwise run by an interpreter or virtual machine (run by control circuitry 404). In some embodiments, the guidance application may be encoded in the ETV Binary Interchange Format (EBIF), received by control circuitry 404 as part of a suitable feed, and interpreted by a user agent running on control circuitry 404. For example, the guidance application may be an EBIF application. In some embodiments, the guidance application may be defined by a series of JAVA-based files that are received and run by a local virtual machine or other suitable middleware executed by control circuitry 404. In some of such embodiments (e.g., those employing MPEG-2 or other digital media encoding schemes), the guidance application may be, for example, encoded and transmitted in an MPEG-2 object carousel with the MPEG audio and video packets of a program.

User equipment device 400 of FIG. 4 can be implemented in system 500 of FIG. 5 as user television equipment 502, user computer equipment 504, wireless user communications device 506, or any other type of user equipment suitable for accessing content, such as a non-portable gaming machine. For simplicity, these devices may be referred to herein collectively as user equipment or user equipment devices, and may be substantially similar to user equipment devices described above. User equipment devices, on which a media guidance application may be implemented, may function as a standalone device or may be part of a network of devices. Various network configurations of devices may be implemented and are discussed in more detail below.

A user equipment device utilizing at least some of the system features described above in connection with FIG. 4 may not be classified solely as user television equipment 502, user computer equipment 504, or a wireless user communications device 506. For example, user television equipment 502 may, like some user computer equipment 504, be Internet-enabled allowing for access to Internet content, while user computer equipment 504 may, like some television equipment 502, include a tuner allowing for access to television programming. The media guidance application may have the same layout on various different types of user equipment or may be tailored to the display capabilities of the user equipment. For example, on user computer equipment 504, the guidance application may be provided as a web site accessed by a web browser. In another example, the guidance application may be scaled down for wireless user communications devices 506.

In system 500, there is typically more than one of each type of user equipment device but only one of each is shown in FIG. 5 to avoid overcomplicating the drawing. In addition, each user may utilize more than one type of user equipment device and also more than one of each type of user equipment device.

In some embodiments, a user equipment device (e.g., user television equipment 502, user computer equipment 504, wireless user communications device 506) may be referred to as a "second screen device." For example, a second screen device may supplement content presented on a first user equipment device. The content presented on the second screen device may be any suitable content that supplements the content presented on the first device. In some embodiments, the second screen device provides an interface for adjusting settings and display preferences of the first device. In some embodiments, the second screen device is configured for interacting with other second screen devices or for interacting with a social network. The second screen device can be located in the same room as the first device, a different room from the first device but in the same house or building, or in a different building from the first device.

The user may also set various settings to maintain consistent media guidance application settings across in-home devices and remote devices. Settings include those described herein, as well as channel and program favorites, programming preferences that the guidance application utilizes to make programming recommendations, display preferences, and other desirable guidance settings. For example, if a user sets a channel as a favorite on, for example, the web site www.Tivo.com on their personal computer at their office, the same channel would appear as a favorite on the user's in-home devices (e.g., user television equipment and user computer equipment) as well as the user's mobile devices, if desired. Therefore, changes made on one user equipment device can change the guidance experience on another user equipment device, regardless of whether they are the same or a different type of user equipment device. In addition, the changes made may be based on settings input by a user, as well as user activity monitored by the guidance application.

The user equipment devices may be coupled to communications network 514. Namely, user television equipment 502, user computer equipment 504, and wireless user communications device 506 are coupled to communications network 514 via communications paths 508, 510, and 512, respectively. Communications network 514 may be one or more networks including the Internet, a mobile phone network, mobile voice or data network (e.g., a 4G or LTE network), cable network, public switched telephone network, or other types of communications network or combinations of communications networks. Paths 508, 510, and 512 may separately or together include one or more communications paths, such as, a satellite path, a fiber-optic path, a cable path, a path that supports Internet communications (e.g., IPTV), free-space connections (e.g., for broadcast or other wireless signals), or any other suitable wired or wireless communications path or combination of such paths. Path 512 is drawn with dotted lines to indicate that in the exemplary embodiment shown in FIG. 5 it is a wireless path and paths 508 and 510 are drawn as solid lines to indicate they are wired paths (although these paths may be wireless paths, if desired). Communications with the user equipment devices may be provided by one or more of these communications paths, but are shown as a single path in FIG. 5 to avoid overcomplicating the drawing.

Although communications paths are not drawn between user equipment devices, these devices may communicate directly with each other via communication paths, such as those described above in connection with paths 508, 510, and 512, as well as other short-range point-to-point communication paths, such as USB cables, IEEE 1394 cables, wireless paths (e.g., Bluetooth, infrared, IEEE 802-11x, etc.), or other short-range communication via wired or wireless paths. BLUETOOTH is a certification mark owned by Bluetooth SIG, INC. The user equipment devices may also communicate with each other directly through an indirect path via communications network 514.

System 500 includes content source 516 and media guidance data source 518 coupled to communications network 514 via communication paths 520 and 522, respectively. Paths 520 and 522 may include any of the communication paths described above in connection with paths 508, 510, and 512. Communications with the content source 516 and media guidance data source 518 may be exchanged over one or more communications paths, but are shown as a single path in FIG. 5 to avoid overcomplicating the drawing. In addition, there may be more than one of each of content source 516 and media guidance data source 518, but only one of each is shown in FIG. 5 to avoid overcomplicating the drawing. (The different types of each of these sources are discussed below.) If desired, content source 516 and media guidance data source 518 may be integrated as one source device. Although communications between sources 516 and 518 with user equipment devices 502, 504, and 506 are shown as through communications network 514, in some embodiments, sources 516 and 518 may communicate directly with user equipment devices 502, 504, and 506 via communication paths (not shown) such as those described above in connection with paths 508, 510, and 512.

Content source 516 may include one or more types of content distribution equipment including a television distribution facility, cable system headend, satellite distribution facility, programming sources (e.g., television broadcasters, such as NBC, ABC, HBO, etc.), intermediate distribution facilities and/or servers, Internet providers, on-demand media servers, and other content providers. NBC is a trademark owned by the National Broadcasting Company, Inc., ABC is a trademark owned by the American Broadcasting Company, Inc., and HBO is a trademark owned by the Home Box Office, Inc. Content source 516 may be the originator of content (e.g., a television broadcaster, a Webcast provider, etc.) or may not be the originator of content (e.g., an on-demand content provider, an Internet provider of content of broadcast programs for downloading, etc.). Content source 516 may include cable sources, satellite providers, on-demand providers, Internet providers, over-the-top content providers, or other providers of content. Content source 516 may also include a remote media server used to store different types of content (including video content selected by a user), in a location remote from any of the user equipment devices. Systems and methods for remote storage of content, and providing remotely stored content to user equipment are discussed in greater detail in connection with Ellis et al., U.S. Patent No. 7,761,892, issued July 20, 2010, which is hereby incorporated by reference herein in its entirety.

Media guidance data source 518 may provide media guidance data, such as the media guidance data described above. Media guidance data may be provided to the user equipment devices using any suitable approach. In some embodiments, the guidance application may be a stand-alone interactive television program guide that receives program guide data via a data feed (e.g., a continuous feed or trickle feed). Program schedule data and other guidance data may be provided to the user equipment on a television channel sideband, using an in-band digital signal, using an out-of-band digital signal, or by any other suitable data transmission technique. Program schedule data and other media guidance data may be provided to user equipment on multiple analog or digital television channels.

In some embodiments, guidance data from media guidance data source 518 may be provided to users' equipment using a client-server approach. For example, a user equipment device may pull media guidance data from a server, or a server may push media guidance data to a user equipment device. In some embodiments, a guidance application client residing on the user's equipment may initiate sessions with source 518 to obtain guidance data when needed, e.g., when the guidance data is out of date or when the user equipment device receives a request from the user to receive data. Media guidance may be provided to the user equipment with any suitable frequency (e.g., continuously, daily, a user-specified period of time, a system-specified period of time, in response to a request from user equipment, etc.). Media guidance data source 518 may provide user equipment devices 502, 504, and 506 the media guidance application itself or software updates for the media guidance application.

In some embodiments, the media guidance data may include viewer data. For example, the viewer data may include current and/or historical user activity information (e.g., what content the user typically watches, what times of day the user watches content, whether the user interacts with a social network, at what times the user interacts with a social network to post information, what types of content the user typically watches (e.g., pay TV or free TV), mood, brain activity information, etc.). The media guidance data may also include subscription data. For example, the subscription data may identify to which sources or services a given user subscribes and/or to which sources or services the given user has previously subscribed but later terminated access (e.g., whether the user subscribes to premium channels, whether the user has added a premium level of services, whether the user has increased Internet speed). In some embodiments, the viewer data and/or the subscription data may identify patterns of a given user for a period of more than one year. The media guidance data may include a model (e.g., a survivor model) used for generating a score that indicates a likelihood a given user will terminate access to a service/source. For example, the media guidance application may process the viewer data with the subscription data using the model to generate a value or score that indicates a likelihood of whether the given user will terminate access to a particular service or source. In particular, a higher score may indicate a higher level of confidence that the user will terminate access to a particular service or source. Based on the score, the media guidance application may generate promotions that entice the user to keep the particular service or source indicated by the score as one to which the user will likely terminate access.

Media guidance applications may be, for example, stand-alone applications implemented on user equipment devices. For example, the media guidance application may be implemented as software or a set of executable instructions which may be stored in storage 408, and executed by control circuitry 404 of a user equipment device 400. In some embodiments, media guidance applications may be client-server applications where only a client application resides on the user equipment device, and server application resides on a remote server. For example, media guidance applications may be implemented partially as a client application on control circuitry 404 of user equipment device 400 and partially on a remote server as a server application (e.g., media guidance data source 518) running on control circuitry of the remote server. When executed by control circuitry of the remote server (such as media guidance data source 518), the media guidance application may instruct the control circuitry to generate the guidance application displays and transmit the generated displays to the user equipment devices. The server application may instruct the control circuitry of the media guidance data source 518 to transmit data for storage on the user equipment. The client application may instruct control circuitry of the receiving user equipment to generate the guidance application displays.

Content and/or media guidance data delivered to user equipment devices 502, 504, and 506 may be over-the-top (OTT) content. OTT content delivery allows Internet-enabled user devices, including any user equipment device described above, to receive content that is transferred over the Internet, including any content described above, in addition to content received over cable or satellite connections. OTT content is delivered via an Internet connection provided by an Internet service provider (ISP), but a third party distributes the content. The ISP may not be responsible for the viewing abilities, copyrights, or redistribution of the content, and may only transfer IP packets provided by the OTT content provider. Examples of OTT content providers include YOUTUBE, NETFLIX, and HULU, which provide audio and video via IP packets. Youtube is a trademark owned by Google Inc., Netflix is a trademark owned by Netflix Inc., and Hulu is a trademark owned by Hulu, LLC. OTT content providers may additionally or alternatively provide media guidance data described above. In addition to content and/or media guidance data, providers of OTT content can distribute media guidance applications (e.g., web-based applications or cloud-based applications), or the content can be displayed by media guidance applications stored on the user equipment device.

Media guidance system 500 is intended to illustrate a number of approaches, or network configurations, by which user equipment devices and sources of content and guidance data may communicate with each other for the purpose of accessing content and providing media guidance. The embodiments described herein may be applied in any one or a subset of these approaches, or in a system employing other approaches for delivering content and providing media guidance. The following four approaches provide specific illustrations of the generalized example of FIG. 5.

In one approach, user equipment devices may communicate with each other within a home network. User equipment devices can communicate with each other directly via short-range point-to-point communication schemes described above, via indirect paths through a hub or other similar device provided on a home network, or via communications network 514. Each of the multiple individuals in a single home may operate different user equipment devices on the home network. As a result, it may be desirable for various media guidance information or settings to be communicated between the different user equipment devices. For example, it may be desirable for users to maintain consistent media guidance application settings on different user equipment devices within a home network, as described in greater detail in Ellis et al., U.S. Patent Publication No. 2005/0251827, filed July 11, 2005. Different types of user equipment devices in a home network may also communicate with each other to transmit content. For example, a user may transmit content from user computer equipment to a portable video player or portable music player.

In a second approach, users may have multiple types of user equipment by which they access content and obtain media guidance. For example, some users may have home networks that are accessed by in-home and mobile devices. Users may control in-home devices via a media guidance application implemented on a remote device. For example, users may access an online media guidance application on a website via a personal computer at their office, or a mobile device such as a PDA or web-enabled mobile telephone. The user may set various settings (e.g., recordings, reminders, or other settings) on the online guidance application to control the user's in-home equipment. The online guide may control the user's equipment directly, or by communicating with a media guidance application on the user's in-home equipment. Various systems and methods for user equipment devices communicating, where the user equipment devices are in locations remote from each other, is discussed in, for example, Ellis et al., U.S. Patent No. 8,046,801, issued October 25, 2011, which is hereby incorporated by reference herein in its entirety.

In a third approach, users of user equipment devices inside and outside a home can use their media guidance application to communicate directly with content source 516 to access content. Specifically, within a home, users of user television equipment 502 and user computer equipment 504 may access the media guidance application to navigate among and locate desirable content. Users may also access the media guidance application outside of the home using wireless user communications devices 506 to navigate among and locate desirable content.

In a fourth approach, user equipment devices may operate in a cloud computing environment to access cloud services. In a cloud computing environment, various types of computing services for content sharing, storage or distribution (e.g., video sharing sites or social networking sites) are provided by a collection of network-accessible computing and storage resources, referred to as "the cloud." For example, the cloud can include a collection of server computing devices, which may be located centrally or at distributed locations, that provide cloud-based services to various types of users and devices connected via a network such as the Internet via communications network 514. These cloud resources may include one or more content sources 516 and one or more media guidance data sources 518. In addition or in the alternative, the remote computing sites may include other user equipment devices, such as user television equipment 502, user computer equipment 504, and wireless user communications device 506. For example, the other user equipment devices may provide access to a stored copy of a video or a streamed video. In such embodiments, user equipment devices may operate in a peer-to-peer manner without communicating with a central server.

The cloud provides access to services, such as content storage, content sharing, or social networking services, among other examples, as well as access to any content described above, for user equipment devices. Services can be provided in the cloud through cloud computing service providers, or through other providers of online services. For example, the cloud-based services can include a content storage service, a content sharing site, a social networking site, or other services via which user-sourced content is distributed for viewing by others on connected devices. These cloud-based services may allow a user equipment device to store content to the cloud and to receive content from the cloud rather than storing content locally and accessing locally-stored content.

A user may use various content capture devices, such as camcorders, digital cameras with video mode, audio recorders, mobile phones, and handheld computing devices, to record content. The user can upload content to a content storage service on the cloud either directly, for example, from user computer equipment 504 or wireless user communications device 506 having content capture feature. Alternatively, the user can first transfer the content to a user equipment device, such as user computer equipment 504. The user equipment device storing the content uploads the content to the cloud using a data transmission service on communications network 514. In some embodiments, the user equipment device itself is a cloud resource, and other user equipment devices can access the content directly from the user equipment device on which the user stored the content.

Cloud resources may be accessed by a user equipment device using, for example, a web browser, a media guidance application, a desktop application, a mobile application, and/or any combination of access applications of the same. The user equipment device may be a cloud client that relies on cloud computing for application delivery, or the user equipment device may have some functionality without access to cloud resources. For example, some applications running on the user equipment device may be cloud applications, i.e., applications delivered as a service over the Internet, while other applications may be stored and run on the user equipment device. In some embodiments, a user device may receive content from multiple cloud resources simultaneously. For example, a user device can stream audio from one cloud resource while downloading content from a second cloud resource. Or a user device can download content from multiple cloud resources for more efficient downloading. In some embodiments, user equipment devices can use cloud resources for processing operations such as the processing operations performed by processing circuitry described in relation to FIG. 4.

As referred herein, the term "in response to" refers to initiated as a result of. For example, a first action being performed in response to a second action may include interstitial steps between the first action and the second action. As referred herein, the term "directly in response to" refers to caused by. For example, a first action being performed directly in response to a second action may not include interstitial steps between the first action and the second action.

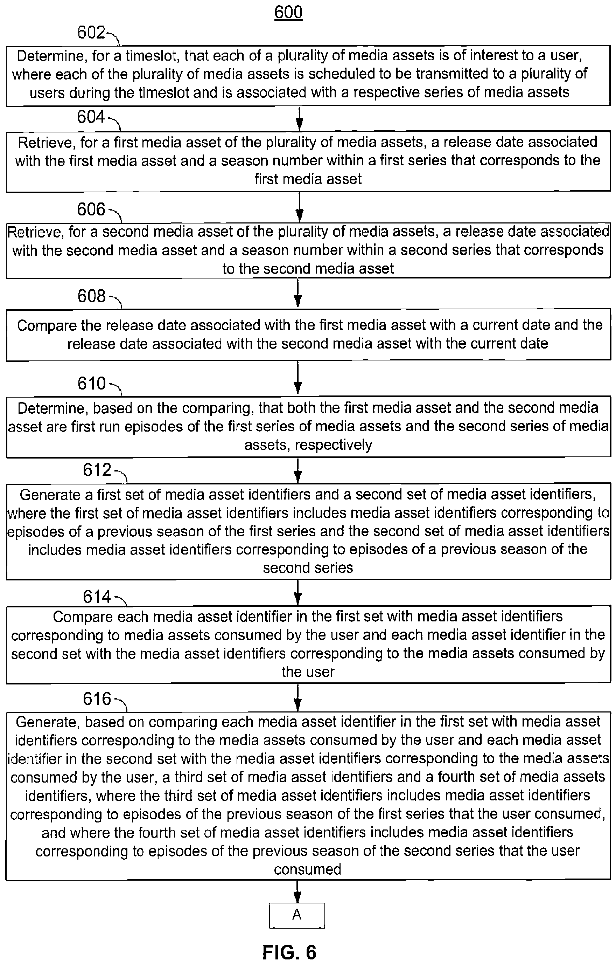

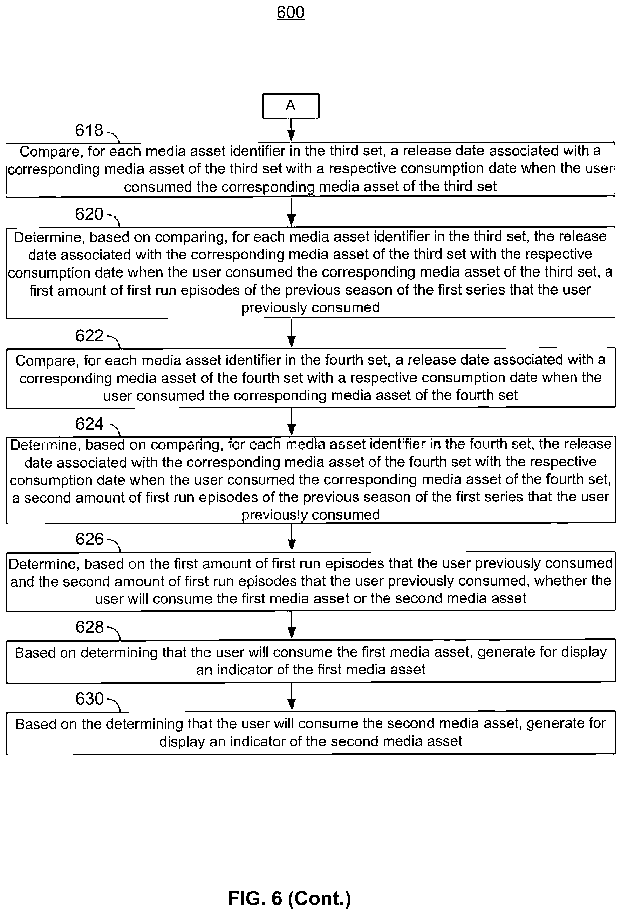

FIG. 6 is an illustrative process 600 for predicting media asset consumption based on a viewing history of a user in accordance with some embodiments of the disclosure. At 602, the media guidance application determines (e.g., via control circuitry 404), for a timeslot, that each of a plurality of media assets is of interest to a user, where each of the plurality of media assets is scheduled to be transmitted to a plurality of users during the timeslot and is associated with a respective series of media assets. For example, the media guidance application may retrieve (e.g., from storage 408) a user's media asset consumption history. In some embodiments, the media guidance application may retrieve the user's media asset consumption history from a remote server (e.g., media content source 516 and/or media guidance data source 518). The media guidance application may compare (e.g., via control circuitry 404) characteristics of each of the plurality of media assets with characteristics of media that the user is interested in based on the user's media asset consumption history. The media guidance application may identify those media assets with matching characteristics.

At 604, the media guidance application retrieves (e.g., via control circuitry 404), for a first media asset of the plurality of media assets, a release date associated with the first media asset and a season number within a first series that corresponds to the first media asset. The media guidance application may retrieve the release date and a season number from program listing information associated with the first media asset. The program listing may reside in storage 408. In some embodiments, the media guidance application may retrieve the release date and season number from a remote server (e.g., media content source 516 and/or media guidance data source 518). The media guidance application may transmit a query to the remote server that includes a media asset identifier associated with the first media asset and receive in response the release date and the season number.

At 606, the media guidance application retrieves (e.g., via control circuitry 404), for a second media asset of the plurality of media assets, a release date associated with the second media asset and a season number within a second series that corresponds to the second media asset. The media guidance application may retrieve the release date and a season number from program listing information associated with the second media asset. The program listing may reside in storage 408. In some embodiments, the media guidance application may retrieve the release date and season number from a remote server (e.g., media content source 516 and/or media guidance data source 518). The media guidance application may transmit a query to the remote server that includes a media asset identifier associated with the second media asset and receive in response the release date and the season number.

At 608, the media guidance application compares (e.g., via control circuitry 404) the release date associated with the first media asset with a current date and the release date associated with the second media asset with the current date. For example, the media guidance application may execute a date comparison function that compares the two dates.

At 610, the media guidance application determines (e.g., via control circuitry 404), based on the comparing, that both the first media asset and the second media asset are first run episodes of the first series of media assets and the second series of media assets, respectively. The media guidance application may receive an output of the date comparison function, for each of the first media asset's release date and the second media asset's release date as compared with the current date) that indicates that two dates are identical. Thus, the media guidance application may determine that the media asset is a first run transmission.

At 612, the media guidance application generates (e.g., via control circuitry 404) a first set of media asset identifiers and a second set of media asset identifiers, where the first set of media asset identifiers includes media asset identifiers corresponding to episodes of a previous season of the first series and the second set of media asset identifiers includes media asset identifiers corresponding to episodes of a previous season of the second series. For example, the media guidance application may store a data structure in storage 408 that stores the first set and a second data structure also in storage 408 that stores the second set. Additionally or alternatively, the media guidance application may store both data structures on a remote server (e.g., media content source 516 and/or media guidance data source 518).

At 614, the media guidance application compares (e.g., via control circuitry 404) each media asset identifier in the first set with media asset identifiers corresponding to media assets consumed by the user and each media asset identifier in the second set with the media asset identifiers corresponding to the media assets consumed by the user. For example, the media guidance application may retrieve information (e.g., from storage 408, media content source 516 and/or media guidance data source 518) associated with the user's media asset consumption history. The information may include media asset identifiers (e.g., alphanumeric strings or a combination of any of title, episode number, and season, or another suitable identifier) associated with media assets that the user previously consumed. The media guidance application may compare those identifiers with media asset identifiers in the first set and also media asset identifiers in the second set. The media guidance application may determine if the identifiers match (e.g., alphanumeric strings are identical).

At 616, the media guidance application generates (e.g., via control circuitry 404), based on comparing each media asset identifier in the first set with media asset identifiers corresponding to the media assets consumed by the user and each media asset identifier in the second set with the media asset identifiers corresponding to the media assets consumed by the user, a third set of media asset identifiers and a fourth set of media assets identifiers, where the third set of media asset identifiers includes media asset identifiers corresponding to episodes of the previous season of the first series that the user consumed, and where the fourth set of media asset identifiers includes media asset identifiers corresponding to episodes of the previous season of the second series that the user consumed. The media guidance application may store (e.g., in storage 408, at media content source 516, and/or media guidance data source 518) those media asset identifiers in the first set that match media asset identifiers consumed by the user. The media guidance application may generate a data structure to store the media asset identifiers and label the data structure as the third set. The media guidance application may perform the same actions for media asset identifiers in the second set.

At 618, the media guidance application compares (e.g., via control circuitry 404), for each media asset identifier in the third set, a release date associated with a corresponding media asset of the third set with a respective consumption date when the user consumed the corresponding media asset of the third set. For example, the media guidance application may execute a date comparison function in order to determine if the dates match.

At 620, the media guidance application determines (e.g., via control circuitry 404), based on comparing, for each media asset identifier in the third set, the release date associated with the corresponding media asset of the third set with the respective consumption date when the user consumed the corresponding media asset of the third set, a first amount of first run episodes of the previous season of the first series that the user previously consumed. The media guidance application may generate a data structure where all media asset identifiers with the matching dates as determined at 618 are to be stored. The media guidance application may store the data structure in storage 408, media content source 516, and/or media guidance data source 518.

At 622, the media guidance application compares (e.g., via control circuitry 404), for each media asset identifier in the fourth set, a release date associated with a corresponding media asset of the fourth set with a respective consumption date when the user consumed the corresponding media asset of the fourth set. For example, the media guidance application may execute a date comparison function in order to determine if the dates match.

At 624, the media guidance application determines (e.g., via control circuitry 404), based on comparing, for each media asset identifier in the fourth set, the release date associated with the corresponding media asset of the fourth set with the respective consumption date when the user consumed the corresponding media asset of the fourth set, a second amount of first run episodes of the previous season of the first series that the user previously consumed. The media guidance application may generate a data structure where all media asset identifiers with the matching dates as determined at 622 are to be stored. The media guidance application may store the data structure in storage 408, media content source 516, and/or media guidance data source 518.

At 626, the media guidance application determines (e.g., via control circuitry 404), based on the first amount of first run episodes that the user previously consumed and the second amount of first run episodes that the user previously consumed, whether the user will consume the first media asset or the second media asset. For example, the media guidance application may compare the first amount and the second amount using a mathematical function (e.g., a number comparison) to determine which amount is larger.

At 628, the media guidance application, based on determining that the user will consume the first media asset, generates for display (e.g., via control circuitry 404 on display 412) an indicator of the first media asset. The media guidance application may generate for display a title of the first media asset together with other information about the first media asset (e.g., series identifier, episode number, season number, and other suitable information).

At 630, the media guidance application, based on the determining that the user will consume the second media asset, generates for display (e.g., via control circuitry 404 on display 412) an indicator of the second media asset. The media guidance application may generate for display a title of the second media asset together with other information about the second media asset (e.g., series identifier, episode number, season number, and other suitable information).

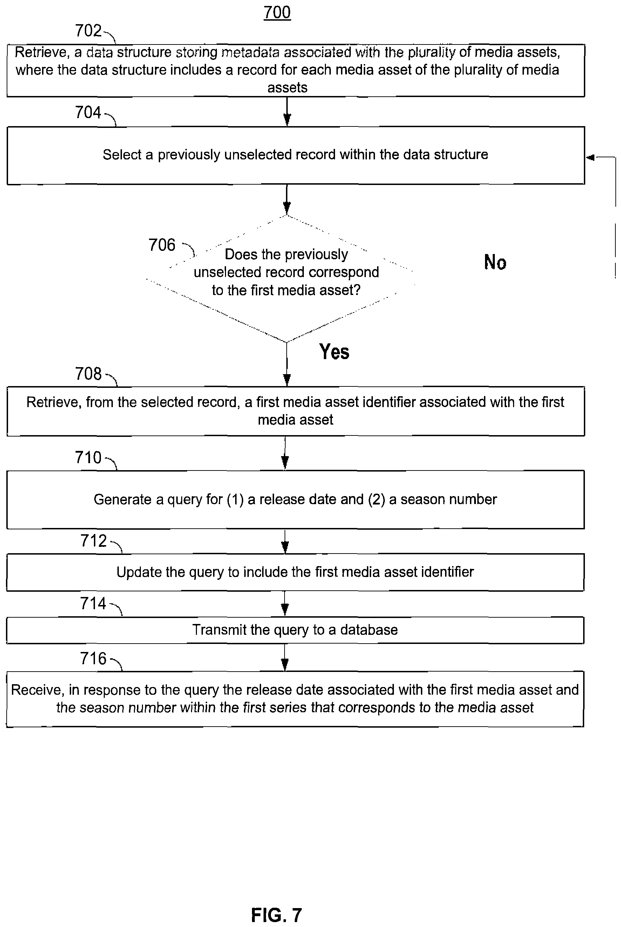

FIG. 7 is an illustrative process 700 for determining, for a media asset, a release date and season number within a series corresponding to the media asset. At 702, the media guidance application retrieves (e.g., via control circuitry 404) a data structure storing metadata associated with the plurality of media assets, where the data structure includes a record for each media asset of the plurality of media assets. For example, the media guidance application may retrieve the data structure from storage 408. In some embodiments, the media guidance application may retrieve the data structure from a remote server (e.g., media content source 516 or media guidance data source 518).

At 704, the media guidance application selects (e.g., via control circuitry 404) a previously unselected record within the data structure. For example, the media guidance application may iterate through the data structure, selecting a record associated with each media asset. At 706, the media guidance application determines (e.g., via control circuitry 404) whether the previously unselected record corresponds to the first media asset. If the media guidance application determines that the previously unselected record does not correspond to the first media asset, process 700 proceeds to action 704. If the media guidance application determines that the previously unselected record corresponds to the first media asset, process 700 proceeds to 708.

At 708, the media guidance application retrieves (e.g., via control circuitry 404) from the selected record a first media asset identifier associated with the first media asset. The media guidance application may retrieve the first media asset identifier from a record that is stored in storage 408. In some embodiments, the record may be stored at a remote server (e.g., media content source 516 or media guidance data source 518) and may be retrieved by the media guidance application through an Application Programming Interface.

At 710, the media guidance application generates (e.g., via control circuitry 404) a query for (1) a release date and (2) a season number. For example, if the database that will execute the query is an SQL server database, the media guidance application may generate a query in an SQL language. At 712, the media guidance application (e.g., via control circuitry 404) updates the query to include the first media asset identifier. The media guidance application may modify the SQL language to search for records associated with the first media asset identifier.

At 714, the media guidance application transmits (e.g., via control circuitry 404 through I/O path 402) the query to a database. The database may reside at a remote server (e.g., media content source 516 or media guidance data source 518). In some embodiments the database may reside in storage 408 on the same device as the media guidance application resides. At 716, the media guidance application receives (e.g., via control circuitry 404 through I/O path 402), in response to the query, the release date associated with the first media asset and the season number within the first series that corresponds to the media asset. The media guidance application may receive the query and store the received information in a data structure (e.g., in storage 408).

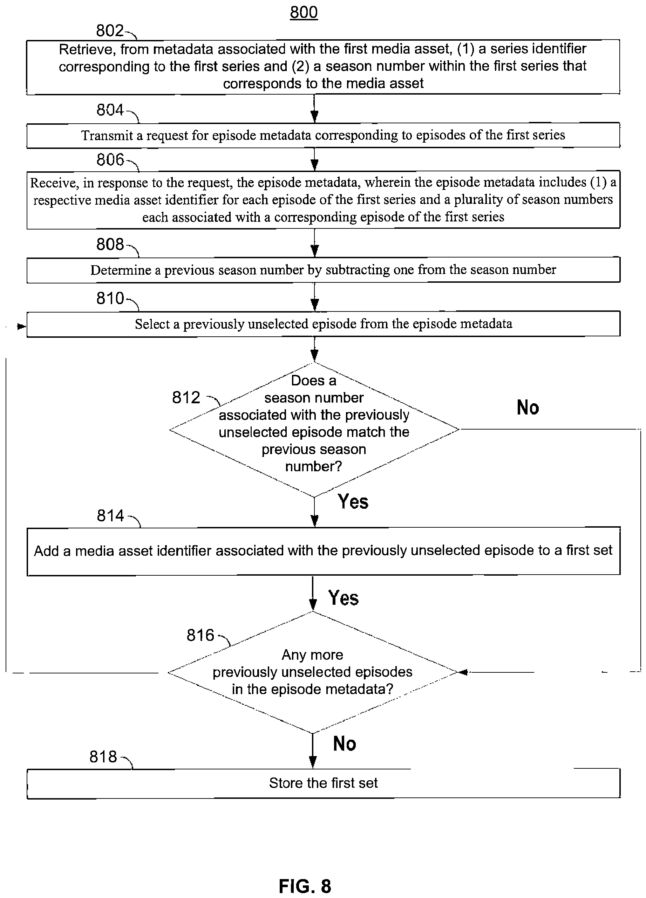

FIG. 8 is an illustrative process 800 for generating a set of media assets corresponding to episodes of a previous season of a series. At 802, the media guidance application retrieves (e.g., via control circuitry 404), from metadata associated with the first media asset, (1) a series identifier corresponding to the first series and (2) a season number within the first series that corresponds to the media asset. The media guidance application may perform the retrieval from storage 408 or a remote server (e.g., media content source 516 or media guidance data source 518).

At 804, the media guidance application transmits (e.g., via control circuitry 404 through I/O path 402) a request for episode metadata corresponding to episodes of the first series. For example, the media guidance application may transmit a query to a database server (e.g., media content source 516 or media guidance data source 518) for episode metadata corresponding to all episodes of the first series. In some embodiments, the media guidance application may transmit one query per episode.

At 816, the media guidance application receives (e.g., via control circuitry 404 through I/O path 402), in response to the request, the episode metadata, wherein the episode metadata includes (1) a respective media asset identifier for each episode of the first series and a plurality of season numbers, each associated with a corresponding episode of the first series. The media guidance application may store the received data in a data structure (e.g., a multidimensional array, a collection, or another suitable data structure) so it can be accessed at a later time. At 808, the media guidance application determines (e.g., via control circuitry 404) a previous season number by subtracting one from the season number. The media guidance application may perform the subtracting via a computer mathematical operation.

At 810, the media guidance application selects (e.g., via control circuitry 404) a previously unselected episode from the episode metadata. The media guidance application may iterate through each episode in the episode metadata using a loop (e.g., a for loop, a while loop, or another suitable loop). At 812, the media guidance application determines (e.g., via control circuitry 404) whether a season number associated with a previously unselected episode matches the previous season number. The media guidance application may perform the determination by a function comparing two numbers. If the media guidance application determines that the season number associated with the previously unselected episode does not match the previous season number, process 800 proceeds to 816. However, if the media guidance application determines that the season number associated with the previously unselected episode matches the previous season number, process 800 proceeds to 814.

At 814, the media guidance application adds (e.g., via control circuitry 404) a media asset identifier associated with the previously unselected episode to a first set. For example, the media guidance application may generate a data structure for the first set and store the media asset identifiers where the season number matches the previous season number in the data structure. The media guidance application may store the data structure in storage 408. In some embodiments, the media guidance application may store the data structure at a remote server (e.g., media content source 516 or media guidance data source 518).

At 816, the media guidance application determines (e.g., via control circuitry 404) whether there are any more previously unselected episodes in the episode metadata. If there are more previously unselected episodes in the episode metadata, process 800 proceeds to 812. However, if there are no more previously unselected episodes in the episode metadata, process 800 proceeds to 818. At 818, the media guidance application stores (e.g. via control circuitry 404 in storage 408) the first set. Additionally or alternatively, the media guidance application may store the first set at a remote server (e.g., media content source 516 or media guidance data source 518).

It is contemplated that the actions or descriptions of FIGS. 6-8 may be used with any other embodiment of this disclosure. In addition, the actions and descriptions described in relation to FIG. 6-8 may be done in alternative orders or in parallel to further the purposes of this disclosure. For example, each of these actions may be performed in any order or in parallel or substantially simultaneously to reduce lag or increase the speed of the system or method.

The above-described embodiments of the present disclosure are presented for purposes of illustration and not of limitation, and the present disclosure is limited only by the claims that follow. Furthermore, it should be noted that the features and limitations described in any one embodiment may be applied to any other embodiment herein, and flowcharts or examples relating to one embodiment may be combined with any other embodiment in a suitable manner, done in different orders, or done in parallel. In addition, the systems and methods described herein may be performed in real time. It should also be noted, the systems and/or methods described above may be applied to, or used in accordance with, other systems and/or methods.

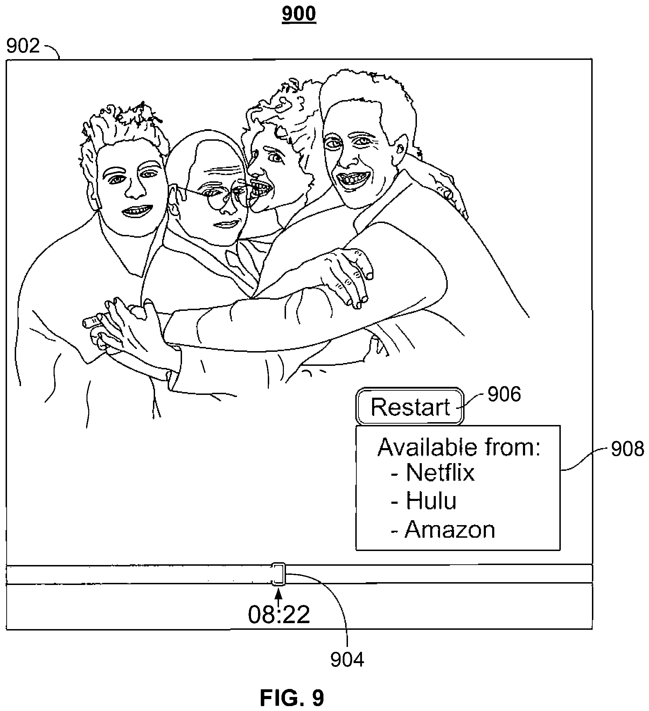

FIG. 9 depicts user equipment 900, which may be any user equipment, as described below with respect to FIGS. 2-5. A media guidance application (also described below with respect to FIGS. 2-5) generates for display media asset 902 on user equipment 900. As depicted, media asset 902 is an episode of the television sitcom series titled "Seinfeld." Media asset 902 is a linear media asset, and is transmitted to user equipment 900 and other user equipment simultaneously from a scheduled start time to a scheduled end time by a linear content source.

As used herein, the term "linear media asset" means a media asset that is scheduled for simultaneous transmission to a plurality of media assets. Examples of linear media assets are broadcast television programs, songs that are broadcast on the radio, videos or audio files that are simultaneously streamed from a linear content source to a plurality of user equipment, and the like. As used herein, the term "linear content provider" is a content provider that provides linear media assets. For example, service providers that provide access to television channels are linear content providers, as scheduled video is transmitted over those television channels. The term "content provider" is used interchangeably in this disclosure with "source," "content source," "service provider," and the like, and such interchanged use carries the same meaning as the defined meaning for the term "content provider."

Indicator 904 indicates an amount of time elapsed in media asset 902. For example, if transmission of media asset 902 began by the linear source at 5:00pm, and it is now 5:08:22pm, then indicator 904 may indicate that eight minutes and twenty-two seconds have elapsed, or may indicate a present time, or may indicate no time at all and instead use shading to show a proportion of the media asset. Indicator 904, like the other features of FIG. 9, is optional and need not be displayed.

Restart option 906 is a selectable option for restarting media asset 902. As will be described in further detail below, restart option 906 need not restart an exact copy of media asset 902; instead, a selection of restart option 906 may cause a non-linear copy of media asset 902 (i.e., a copy of media asset 902 that is not scheduled for transmission to a plurality of users at a pre-set time) to play back to the user. Menu 908 may optionally be displayed, and may indicate non-linear content providers from which a non-linear copy of media asset 902 may be obtained. The media guidance application may generate for display restart option 906 at any time during playback of media asset 902, including at a moment that the user requests playback of media asset 902.

In some embodiments, the media guidance application may receive a request from a user to access media asset 902 after a scheduled start time associated with media asset 902. For example, if the user subscribes to a cable television provider, that cable television provider acts as a linear content source of media asset 902. The media guidance application may receive the request from the user to access media asset 902 by way of the user accessing a channel on which media asset 902 is transmitted, by way of the user selecting a media asset identifier corresponding to media asset 902 from a program schedule guide, and the like. There are many ways for the media guidance application to receive a request from a user to access a linear media asset - for example, the linear media asset may be selected from a menu, listing, or the like (e.g., a media asset identifier may be selected on a website, which leads, upon selection, to a display of media asset 902). The request may be made in any known manner, including verbally, by tactile interaction with a user interface, or any other manner. Other manners in which a media guidance application receives requests from a user, and in which a user may request access to a media asset, are described in further detail below with respect to FIGS. 2-5, and that description applies equally here.

In some embodiments, in response to receiving the request, the media guidance application may generate for display, based on the transmission, the media asset to the user. Manners in which a media guidance application may output a media asset are described in further detail below with respect to FIGS. 2-5. Alternatively, if the media asset is an audio asset (e.g., a song or a radio show), the media asset may be generated for output by a speaker by the media guidance application. As depicted in FIG. 9, in response to receiving a request corresponding to media asset 902 at user equipment 900, the media guidance application would generate for display media asset 902 on user equipment 900.

In some embodiments, the media guidance application may receive, during display (or, e.g., audio output) of the media asset, a command from the user to start playback of the media asset over from the beginning. For example, the media guidance application may generate for display restart option 906. The command to start playback of the media asset over from the beginning may be received by the media guidance application by way of detecting a selection of restart option 906. Restart option 906 may be selected through any known manner of selection, such as voice input, manual selection by the user (e.g., tapping an icon corresponding to restart option 906), or any other manner of user input as described below with reference to FIGS. 2-5. Moreover, restart option 906 need not be displayed for a user to input the command to start playback of the media over from the beginning.

In some embodiments, in response to receiving the command, the media guidance application may retrieve information of a profile of the user. For example, the media guidance application may access a database (e.g., stored local to user equipment 900 or at a remote server, as described below with reference to FIGS. 2-5) and retrieve a user profile from the database. The media guidance application may determine, based on information of the retrieved user profile, which non-linear services the user subscribes to. The information may be populated based on user input that indicates which services the user subscribes to. Thus, the determination may be based on express user input. In other embodiments, the information may be automatically populated based on the media guidance application monitoring to which non-linear sources the user subscribes; the information may be updated when the media guidance application detects, from the monitoring, that the user has unsubscribed from a non-linear service. The media guidance application may determine, from the information, a plurality of non-linear services to which the user subscribes, where the non-linear services provide non-linear content over an Internet link.

In some embodiments, the media guidance application queries each non-linear service of the plurality of non-linear services to determine whether each non-linear service offers a non-linear copy of the video. For example, the media guidance application may have determined, based on the user profile, that the user subscribes to the non-linear video streaming services Netflix, Hulu, and Amazon. Thus, the media guidance application may query each of those video streaming services to determine which ones of Netflix, Hulu, and Amazon, if any, offer a copy of the program for streaming to the user. Alternatively, the media guidance application may query a database (e.g., media guidance data source) that indicates, for each program, which non-linear services offer a copy of the program for streaming to the user. The database may be populated by ingesting catalogs for all known non-linear services and mapping an indicator to a data structure corresponding to a given media asset that indicates which non-linear services offer the given media asset.

The media guidance application may determine, in response to the querying, that one or more of the non-linear services to which the user subscribes does in fact offer a copy of the program for streaming to the user. For example, the media guidance application may determine that Netflix offers a non-linear copy of media asset 902. In response to determining that the non-linear service offers the non-linear copy, the media guidance application may play back the non-linear copy of the video from the beginning. In some embodiments, the playback may be automatic and require no further input from the user other than a selection of restart option 906. For example, if only one recording at user equipment 900 exists and no other services offer the media asset, the media guidance application may automatically select that recording for playback. As another example, the media guidance application may select one of a plurality of non-linear sources for use for playback of a copy of media asset 902 if more than one offers a copy of media asset 902. This selection may be at random or may be based on known user preferences as indicated in the profile of the user.

In some embodiments, rather than generating for display restart option 906 in response to the user requesting to view media asset 902, the media guidance application may determine, using the methods described above, whether a non-linear service that the user subscribes to offers a non-linear copy of media asset 902. The media guidance application may refrain from generating for display restart option 906 unless a non-linear service to which the user subscribes does in fact offer the non-linear copy of media asset 902, in which case the media guidance application may responsively generate for display restart option 906. In this case, in response to receiving a user selection of restart option 906, the media guidance application may generate for display the non-linear copy of media asset 902.

In some embodiments, in order to play back the non-linear copy of the video from the beginning, the media guidance application may launch a platform corresponding to the non-linear service, where the platform corresponding to the non-linear service is different from a platform corresponding to the linear service that is used to generate for display the video using the linear service. As used herein, the term "platform" is defined to mean software required to access or play back the non-linear copy of media asset 902. For example, many non-linear service providers can be accessed through a web page, or through a proprietary application. The term "platform" encompasses such a web page, proprietary application, and any other software medium or service required to access the non-linear copy of the media asset. Thus, if the non-linear service that provides a non-linear copy of media asset 902 is Netflix, the media guidance application may cause user equipment 900 to automatically launch a proprietary application offered by Netflix. The media guidance application may play back the non-linear copy of the video using the platform corresponding to the non-linear service. The media guidance application may launch the proprietary application in a manner such that transitioning to the proprietary application is not noticeable by the user.

In some embodiments, the media guidance application may determine whether playback of the non-linear copy of media asset 902 has terminated. For example, the media guidance application may monitor for an end of playback of the non-linear copy of media asset 902 (e.g., the runtime of the non-linear copy of media asset 902 has completely elapsed). As another example, the media guidance application may monitor for a command from the user to terminate playback of the non-linear copy of media asset 902 (e.g., a pause or stop command). In response to detecting the end of playback of the non-linear copy of the video, or in response to detecting the command from the user to terminate playback of the non-linear copy of the video, the media guidance application may determine that playback of the non-linear copy of the video has terminated.

In some embodiments, in response to determining that playback of the non-linear copy of media asset 902 has terminated, the media guidance application may exit the platform corresponding to the non-linear service and may resume generating for display video using the platform corresponding to the linear service. The exiting of the platform corresponding to the non-linear service may be a seamless transition that is invisible to the user. Thus, the media guidance application may generate for display (and/or output audio relating to) a presently transmitted linear media asset from the linear content source that was transmitting media asset 902.

In some embodiments, the media guidance application may automatically determine, while media asset 902 is being generated for display (or otherwise output) using the transmission of the linear service, and without receiving the command, that the non-linear service offers the non-linear copy of the video. In other words, as described above, the media guidance application may automatically determine whether a non-linear copy of media asset 902 is available. This may be performed responsive to the user tuning to the linear source, or may be performed in advance (e.g., when schedule of media assets becomes known to the media guidance application).

In some embodiments, in response to the automatic determining, the media guidance application may automatically pre-cache the non-linear copy of the video at a cache local to the user. For example, the media guidance application may automatically access the non-linear service and buffer media asset 902 at user equipment 900 so that no buffer or download time will be experienced by the user if the user wants to restart the program. Thus, in response to receiving a selection of restart option 906, the media guidance application may access the pre-cached non-linear copy of media asset 902 and avoid any time loss in transitioning to playback of the non-linear copy of media asset 902.

In some embodiments, the media guidance application may determine, in response to the querying, that no non-linear service of the plurality of non-linear services to which the user subscribes offers the non-linear copy of media asset 902. Thus, if the user subscribes to Netflix, Amazon, and Hulu, the media guidance application would reach this determination if none of these three non-linear service providers offer a non-linear copy of media asset 902. In response to determining that no non-linear service of the plurality of non-linear services to which the user subscribes offers the non-linear copy of media asset 902, the media guidance application may query a second plurality of non-linear services to which the user does not subscribe to determine whether any of those providers offer a non-linear copy of media asset 902.

In response to determining that a non-linear service to which the user does not subscribe offers the second non-linear copy of the program, the media guidance application may generate for display to the user a selectable option to subscribe to the second non-linear service. In some embodiments, the media guidance application may offer an ability to access a non-linear copy of media asset 902 a-la-carte from the second non-linear service. In some embodiments, the media guidance application may require a broader subscription to the second non-linear service from the user before the user is enabled to access the non-linear copy of media asset 902 from the second service.

In some embodiments, the media guidance application, further in response to determining that the second non-linear service offers the second non-linear copy of the program, may pre-cache the second non-linear copy of the program at a cache local to the user. Pre-caching operations were described in detail above, and apply equally here. In response to receiving a selection of the selectable option to subscribe to the second non-linear service (or in response to receiving a selection of a selectable option to access the second non-linear copy of media asset 902 a-la-carte), the media guidance application may access the pre-cached second non-linear copy of media asset 902 in order to generate for display to the user the second non-linear copy of media asset 902.

In some embodiments, the media guidance application may generate for display, in response to the querying, a menu (e.g., menu 908) indicating each non-linear service to which the user subscribes that offers the copy of media asset 902. Menu 908 may include, for example, local non-linear content sources as well, such as local or network recordings or otherwise stored copies of media asset 902. The media guidance application may generate for display menu 908 upon a request by the user to access menu 908. Alternatively, the media guidance application may generate for display menu 908 in response to receiving a user selection of request option 906. The media guidance application may receive a user selection from menu 908 of an indication corresponding to the non-linear service, where the playing back the non-linear copy of the video from the beginning comprises playing back the non-linear copy of the video from the beginning in response to receiving the user selection. The menu may additionally indicate non-linear services to which the user does not subscribe that offer the copy of the non-linear program. If a user selects a non-linear service to which the user does not subscribe, the media guidance application may responsively subscribe the user to the non-linear service, and access the non-linear copy of media asset 902 from that non-linear service for playback from the beginning. Non-linear services that do not offer a subscription, and/or instead sell access to media asset 902 a-la-carte may be included in menu 908.

In some embodiments, the media guidance application may determine whether the non-linear service provider offers a premium version of the non-linear copy of the video. For example, the media guidance application may determine that media asset 902 was received in high definition from the linear source, but the non-linear service provider offers, in addition to a high definition copy, a better quality 4K copy of media asset 902. As another example, the non-linear service may offer enhanced features in a premium version of media asset 902, such as director or editorial commentary, additional subtitles not available by way of the linear service, and the like. In some embodiments, in response to determining that the non-linear service provider offers the premium version, the media guidance application may generate for display, during playback of the non-linear copy of media asset 902, a selectable option for accessing the premium version. In response to receiving a selection of the selectable option, the media guidance application may access the premium version of media asset 902 and generate for display the premium version. In some embodiments, the media guidance application may automatically, and without selection of restart option 906, play back a premium version of media asset 902 instead of the version provided by the linear service. This may be triggered upon detection of a premium version existing, or may be triggered upon a user command to access a premium version. Facets of the premium version (e.g., commentary, subtitles, etc) may also be retrieved and overlayed on top of the version provided by media asset 902 in order to enhance media asset 902 as provided by the linear service.

In some embodiments, when the media guidance application generates for display a media asset identifier (e.g., in connection with presenting a guide or listing of available media), the media guidance application determines all linear and non-linear providers that offer media corresponding to the media asset identifier. The media guidance application may display identifiers of all linear and non-linear providers that offer the media, or may display identifiers of only those providers that offer the media to which the user subscribes. In some embodiments, the media guidance application may display only identifiers of those providers who have the content available to watch immediately (e.g., as opposed to on a schedule for release or transmission at a later time).

In some embodiments, the media guidance application may generate for display a visual indicator over a media asset identifier, or over a grid guide, that indicates an amount of each media asset that has already elapsed, and/or that indicates how much of a media asset is still left to view.

In some embodiments, the media guidance application generates for display media asset identifiers that identify media from a linear content source that was transmitted in the past. In response to receiving a user selection of media that was transmitted in the past, the media guidance application may generate for display further information about that media, including an ability to access that media (e.g., from a linear or non-linear content provider to which the user subscribes), or to access related media (e.g., other episodes from a same series that the media corresponds to).

In some embodiments, the media guidance application profiles the user and tracks the users activity. Thus, the media guidance application may monitor and store information relating to a user's most watched channel. The profiled data may include both data relating to programs users have recorded, as well as those the user actively watched while the program was live. The profile may weight viewings differently (e.g., a recorded program may be weighted less than a weighting for a program viewed live), and the media guidance application may determine that a channel is most watched if that channel has a highest weighted score. Moreover, a user may have several most watched channels, and may designated one or more of those most watched channels as a favorite channel. The media guidance application may cause user equipment to automatically tune to the favorite channel when powered on. In some embodiments, channels may be watched less frequently over time, and thus may age out of the most watched channels of the user. Moreover, some most watched channels may only seasonally be "most watched" - that is, they may only be a most-watched channel when a favorite program is airing.

In some embodiments, the media guidance application may predict that a user would enjoy a different program from the program that the user is presently watching (e.g., based on profile information of the user). The media guidance application may generate for display a recommendation of that predicted program to the user. In response to receiving a user selection of the recommendation, the media guidance application may generate for display the predicted program. The prediction may change as the user's profile changes. The recommendation may be generated for display in a manner that does not obscure the program currently being played back, and may be generated for display automatically or in response to a user request for a prediction.

In some embodiments, a small guide including one line or only a small number of lines may be generated for display on top of media asset 902. The media guidance application may enable the user to use the small guide to browse all linear past, present, and future content without leaving a full-screen presentation of media asset 902. In some embodiments, the media guidance application may receive a request from the user to display what media is currently being cached on other tuners different from, e.g., a tuner being used to tune to media asset 902. The media guidance application responsively generates for display identifiers of the content, or thumbnail versions of the content itself, for the user to preview or otherwise browse without leaving the full-screen presentation of media asset 902.

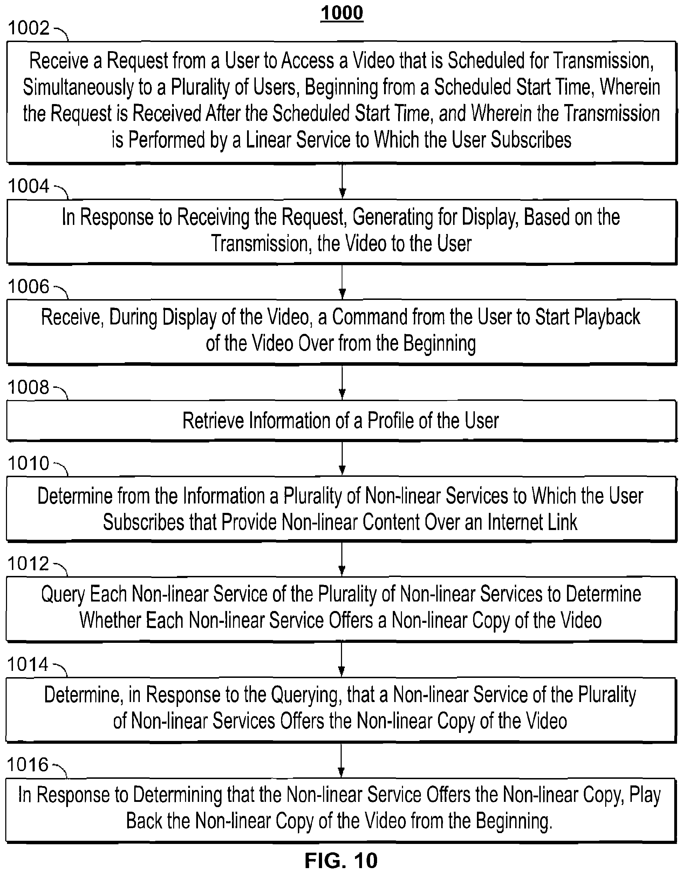

FIG. 10 depicts an illustrative flowchart of a process for enabling a user to restart a video provided by a linear service by playing back a copy of the video from a non-linear service to which the user subscribes, in accordance with the claimed invention. Process 1000 may be executed by control circuitry 404 (e.g., in a manner instructed to control circuitry 404 by the media guidance application). Control circuitry 404 may be part of user equipment (e.g., user equipment 100, which may have any or all of the functionality of user television equipment 502, user computer equipment 504, and/or wireless communications device 506), or of a remote server separated from the user equipment by way of communications network 514.

Process 1000 begins at 1002, where control circuitry 404 receives a request from a user to access a video (or any media asset 102) that is scheduled for transmission, simultaneously to a plurality of users, beginning from a scheduled start time, where the request is received after the scheduled start time, and where the transmission is performed by a linear service to which the user subscribes. The request may be received by way of user input interface 410. The linear service may be media content source 516, and may transmit the video over communications network 514.

At 1004, control circuitry 404, in response to receiving the request, generates for display (e.g., on display 412), based on the transmission, the video to the user. At 1006, control circuitry 404 receives, during display of the video, a command from the user to start playback of the video over from the beginning. The command may be received by way of user input interface 410. At 1008, control circuitry 404 retrieves information of a profile of the user. The information may be retrieved from media guidance data source 518 and/or storage 508.

At 1010, control circuitry 404 determines from the information a plurality of non-linear services to which the user subscribes that provide non-linear content over an Internet link. The non-linear services may each correspond to a database with the functionality of media content source 516 that houses copies of media assets. At 1012, control circuitry 404 queries each non-linear service of the plurality of non-linear services (or queries a database comprising data structures that indicate, for each media asset, which non-linear services provide a copy of the media asset, as described above) to determine whether each non-linear service offers a non-linear copy of the video. For example, control circuitry 404 queries databases with the functionality of media guidance data source 518 that each correspond to the non-linear services.

At 1014, control circuitry 404 determines, in response to the querying, that a non-linear service of the plurality of non-linear services offers the non-linear copy of the video (e.g., media asset 102). At 1016, in response to determining that the non-linear service offers the non-linear copy, control circuitry 404 plays back the non-linear copy of the video from the beginning.

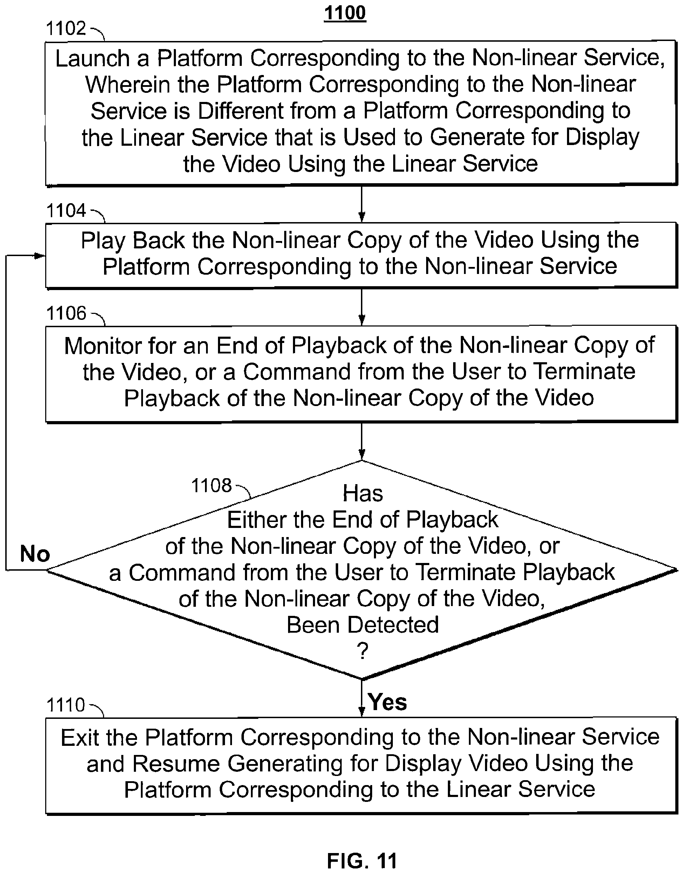

FIG. 11 depicts an illustrative flowchart of a process for launching a platform to play back a non-linear copy of the program, and exiting the program when playback of the non-linear copy of the video is terminated, in accordance with some embodiments of the disclosure. Process 1100 begins at 1102, where the media guidance application launches a platform corresponding to the non-linear service, wherein the platform corresponding to the non-linear service is different from a platform corresponding to the linear service that is used to generate for display the video using the linear service.

At 1104, control circuitry 404 plays back the non-linear copy of the video using the platform corresponding to the non-linear service (e.g., and displays the copy on display 412). At 1106, control circuitry monitors for an end of playback of the non-linear copy of the video, or for a command from the user to terminate playback of the non-linear copy of the video. The command from the user may be input by way of user input interface 410.

At 1108, control circuitry 404 determines whether either the end of playback of the non-linear copy of the video, or a command from the user to terminate playback of the non-linear copy of the video, has been detected. If neither is detected, process 1100 reverts to 1104. If either is detected, process 1100 continues to 1110, where control circuitry 404 causes the platform corresponding to the non-linear service to be exited. Control circuitry 404 resumes generating for display video using the platform corresponding to the linear service (e.g., from media content source 516).

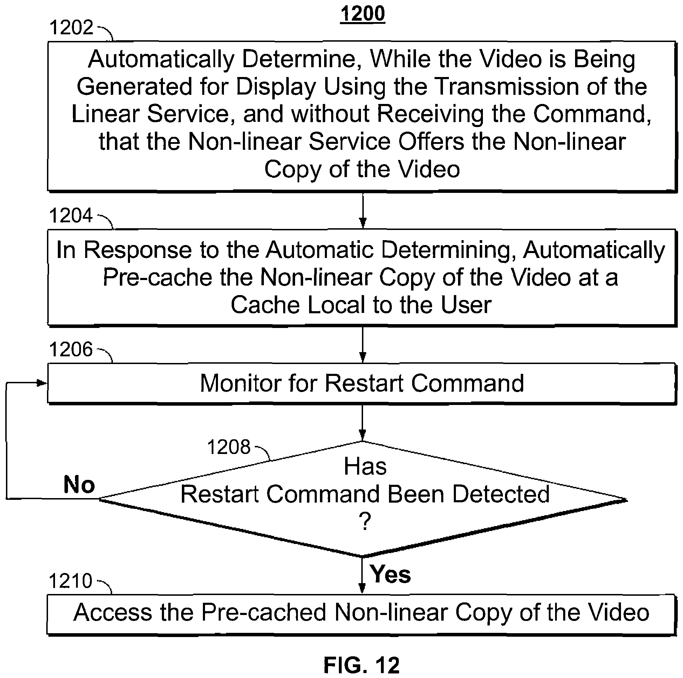

FIG. 12 depicts an illustrative flowchart of a process for accessing a pre-cached copy of the video when a restart command is received, in accordance with some embodiments of the disclosure. Process 1200 begins at 1202, where control circuitry 404 automatically determines, while the video is being generated for display using the transmission of the linear service, and without receiving the command, that the non-linear service offers the non-linear copy of the video (e.g., by querying a database corresponding to media guidance data source 518 that is associated with the non-linear service).

At 1204, in response to the automatic determining, control circuitry 404 automatically pre-caches the non-linear copy of the video at a cache local to the user (e.g., at memory 408). At 1206, control circuitry 404 monitors for a receipt of a restart command (e.g., a user selection of restart option 106 by way of user input interface 410). At 1208, control circuitry 404 determines whether the restart command has been detected; if it has not, process 1200 reverts to 1206 and control circuitry 404 continues to monitor, otherwise process 1200 continues to 1210. At 1210, control circuitry 404 accesses the pre-cached non-linear copy of the video.

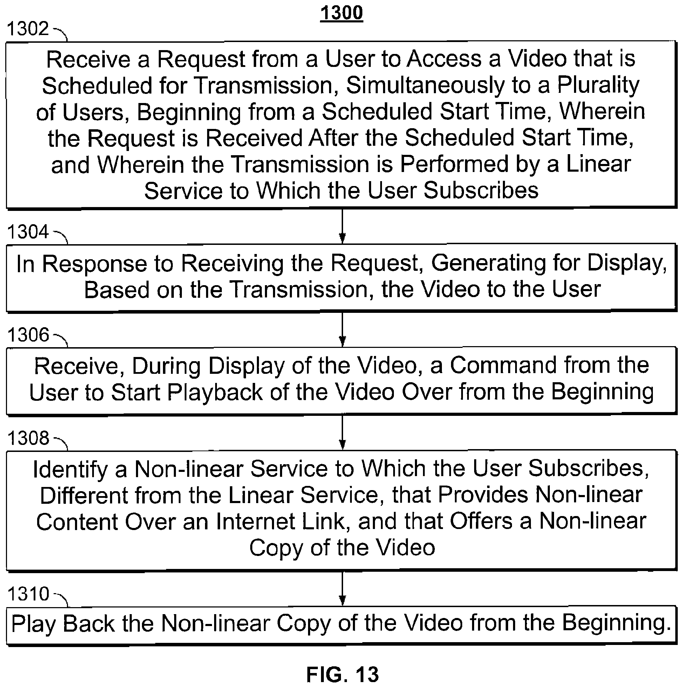

FIG. 13 depicts an illustrative flowchart of a process for restarting a video transmitted by a linear source when the linear source does not offer a restart mechanism, in accordance with some embodiments of the disclosure. Process 1300 begins at 1302, where control circuitry 404 receives a request from a user to access a video (e.g., media asset 102) that is scheduled for transmission (e.g., from media content source 516 by way of communications network 414), simultaneously to a plurality of users, beginning from a scheduled start time, where the request is received after the scheduled start time, and where the transmission is performed by a linear service (e.g., media content source 516) to which the user subscribes.

At 1304, in response to receiving the request, control circuitry 404 generates for display (e.g., by way of display 412), based on the transmission, the video to the user. At 1306, control circuitry 404 receives, during display of the video, a command from the user to start playback of the video over from the beginning (e.g., by way of user input interface 410 being used to select restart command 106). At 1308, control circuitry 404 identifies a non-linear service to which the user subscribes, different from the linear service, that provides non-linear content over an Internet link, and that offers a non-linear copy of the video. At 1310, control circuitry 404 plays back the non-linear copy of the video from the beginning.

It should be noted that processes 1000-1300 or any step thereof could be performed on, or provided by, any of the devices shown in FIGS. 1 and 4-5. For example, any of processes 1000-1300 may be executed by control circuitry 404 (FIG. 4) as instructed by control circuitry implemented on user equipment 502, 504, 506 (FIG. 5), and/or a user equipment for selecting a recommendation. In addition, one or more steps of processes 1000-1300 may be incorporated into or combined with one or more steps of any other process or embodiment.

It is contemplated that the steps or descriptions of each of FIGS. 10-13 may be used with any other embodiment of this disclosure. In addition, the steps and descriptions described in relation to FIGS. 10-12 may be done in alternative orders or in parallel to further the purposes of this disclosure. For example, each of these steps may be performed in any order or in parallel or substantially simultaneously to reduce lag or increase the speed of the system or method. Furthermore, it should be noted that any of the devices or equipment discussed in relation to FIGS. 1 and 4-5 could be used to perform one or more of the steps in FIGS. 10-13.

It will be apparent to those of ordinary skill in the art that methods involved in the present invention may be embodied in a computer program product that includes a computer-usable and/or readable medium. For example, such a computer-usable medium may consist of a read-only memory device, such as a CD-ROM disk or conventional ROM device, or a random access memory, such as a hard drive device or a computer diskette, having a computer-readable program code stored thereon. It should also be understood that methods, techniques, and processes involved in the present disclosure may be executed using processing circuitry. For instance, determining where restart option 106 is selected may be performed, e.g., by processing circuitry 406 of FIG. 4. The processing circuitry, for instance, may be a general purpose processor, a customized integrated circuit (e.g., an ASIC), or a field-programmable gate array (FPGA) within user equipment 400, media content source 516, or media guidance data source 518. For example, a profile, as described herein, may be stored in, and retrieved from, storage 408 of FIG. 4, or media guidance data source 518 of FIG. 5. Furthermore, processing circuitry, or a computer program, may update settings of the profile, such as subscription settings, stored within storage 408 of FIG. 4 or media guidance data source 518 of FIG. 5.

The processes discussed above are intended to be illustrative and not limiting. One skilled in the art would appreciate that the steps of the processes discussed herein may be omitted, modified, combined, and/or rearranged, and any additional steps may be performed without departing from the scope of the invention. More generally, the above disclosure is meant to be exemplary and not limiting. Only the claims that follow are meant to set bounds as to what the present invention includes. Furthermore, it should be noted that the features and limitations described in any one embodiment may be applied to any other embodiment herein, and flowcharts or examples relating to one embodiment may be combined with any other embodiment in a suitable manner, done in different orders, or done in parallel. In addition, the systems and methods described herein may be performed in real time. It should also be noted, the systems and/or methods described above may be applied to, or used in accordance with, other systems and/or methods.

While some portions of this disclosure may make reference to "convention" or "related art," any such reference is merely for the purpose of providing context to the invention(s) of the instant disclosure, and does not form any admission as to what constitutes the state of the art.

Systems and methods are described for navigating between groups of media assets based on multiple user inputs of directional navigation commands received within a period of time of each other. Specifically, the system may navigate through a number of ordered groups of media assets without presenting information to the user related to the specific groups (e.g., presenting to the user indicators of media assets associated with the group) in response to receiving the multiple directional navigation commands, thus allowing a user to navigate to a desired group of media assets with fewer distractions. To this end, a media guidance application may generate for display, based on a first display template, indicators for a plurality of groups of media assets and media asset identifiers associated with one of the groups of media assets. The media guidance application may receive a first user input corresponding to a directional navigation command (e.g., a user depressing a key on the remote control corresponding to a down direction) and a second user input corresponding to an additional directional navigational command within a threshold period of time (e.g., 0.5 seconds). In response, the media guidance application may generate for display, based on a second display template, indicators for additional groups of media assets, as well as the plurality of groups of media assets. The media guidance application may determine a new group of media assets to navigate to (e.g., 4 groups down) based on the received directional navigation commands and may generate for display, based on the first display template, indicators for media asset identifiers associated with the new group of media assets.

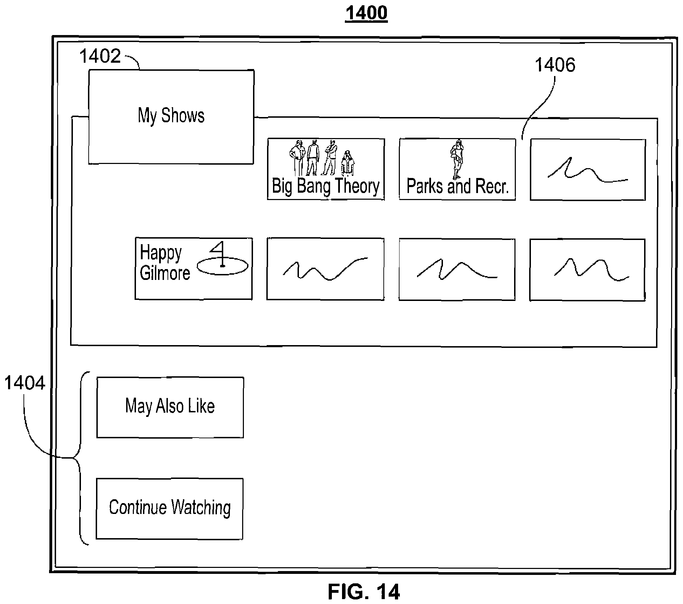

FIG. 14 shows an illustrative example of a display screen with indicators for both groups of media assets and media asset identifiers, in accordance with some embodiments of the disclosure. For example, user equipment may execute a media guidance application that may generate display 1400. Display 1400 may include groups of media assets 1402 and 1404. Display 1400 may also include media asset identifiers 1406 associated with group of media assets 1402, which is the currently selected group of media assets. Display 1400 may appear on one or more user devices.

As referred to herein, "a group of media assets" refers to two or more media assets that are related and grouped by a common criterion. In some embodiments, the criterion may comprise any or multiple of: actor, episode title, series title, genre, release date, keywords, director, writer, studio, producer, or another suitable criterion. In some embodiments, the criterion may be related to data stored in a user profile. For example, the group of media assets may include media assets recently viewed by a user (e.g., based on a stored viewing history), recommendations of media assets based on indications in the user profile of media assets the user enjoys, or media assets partially viewed by the user. In some embodiments, a group may be created based on a criterion, but may only be associated with a single media asset at specific times. For example, for a new series, a group of media assets may refer to the series, but after only the first episode has aired only one media asset (e.g., the first episode) may be associated with the group of media assets. As referred to herein, "a media asset identifier" refers to any graphics, text, or other data describing a media asset. In some embodiments, the media asset identifier may identify a series of media assets. In other embodiments, the media asset identifier may identify a movie, podcast, news article, or other form of consumable media content such that a user can recognize the content.

As referred to herein, a "directional navigation command" refers to any user input that requests to select a displayed indicator in the given direction. For example, a directional navigation command may be received based on a user depressing arrow keys on a remote control. In some embodiments, a directional navigation command may be received based on a user pressing a particular sequence of keys corresponding to movement in a specific direction. For example, a user may press a green button on a remote control three times, which may correspond to a request to navigate to a displayed indicator 9 down from a currently selected one.

In some embodiments, the media guidance application may be configured to accept commands to navigate from a first group of media assets to a second group of media assets based on receiving multiple directional navigation commands within a threshold period of time of each other. Specifically, the media guidance application may link a plurality of groups of media assets (e.g., groups of media assets 1402 and 1404) and a first plurality of media asset identifiers (e.g., media asset identifiers 1406) with a first instance of a first display template (e.g., used to generate display 1400), where the first plurality of media asset identifiers is associated with a first group of media assets of the plurality of groups of media assets. For example, the media guidance application may retrieve, either from local storage or from a remote server via a communications network, the first display template.

Specifically, the first display template may be any suitable data structure, such as a class or a table that contains parameters for displaying groups of media assets and media asset identifiers. The media guidance application may generate a first instance of the first display template. For example, if the first display template is a class, then the first instance may be an object of that class, or if the first display template is a table, the first instance may be a new instance of the table with a plurality of empty fields. The media guidance application may store links to particular locations in local storage or at a remote server (e.g., pointers) for the particular groups of media assets (e.g., groups of media assets 1402 and 1404) and media asset identifiers (e.g., media asset identifiers 1406) to be displayed. For example, the media guidance application may store identifiers in fields of the table, or by setting the values of attributes for the object (e.g., when the object is initialized). As a specific example, the media guidance application may store identifiers (e.g., corresponding to media asset identifiers 1406) in fields of a table for a group of media assets (e.g., group of media assets 1402) for the genre, "My Shows," which may be associated with media assets such as "Happy Gilmore."

The media guidance application may generate for display the first instance of the first display template including a first plurality of indicators for the plurality of groups of media assets and a second plurality of indicators for the first plurality of media asset identifiers. For example, the media guidance application may generate for display rectangular objects of a first size including identifiers for the first plurality of groups of media assets (e.g., groups of media assets 1402 and 1404) and rectangular objects of a second size including identifiers for the first plurality of media asset identifiers (e.g., media asset identifiers 1406). The media guidance application may generate each indicator based on formatting instructions for the indicator. For example, if one indicator corresponds to a media asset identifier with a long title, then the indicator may be larger than other indicators. Alternatively or additionally, the title may be scaled such that it fits in its entirety in a same-sized indicator as other displayed indicators.

In some embodiments, the media guidance application may generate a data structure containing a plurality of fields with information needed to generate for display indicators for media asset identifiers and groups of media assets appropriately on the screen (e.g., size and/or location). Specifically, the media guidance application may generate a first data structure according to the first display template, for the first instance of the first display template, where the first data structure includes for each of the plurality of groups of media assets and for each of the first plurality of media asset identifiers a first field, a second field, and a third field. For example, the media guidance application may generate, based on the first display template, a data structure containing a plurality of fields. The data structure may be organized as a table, where each row in the table corresponds to an indicator to be displayed, and each field in the row contains information relating to the indicator. Alternatively or additionally, the data structure may be organized as an object of a class, where the class contains attributes for each indicator corresponding to the first display template. The media guidance application may execute an instruction to create an object (e.g., the first instance) of the class (e.g., the first display template) and define the attributes for each indicator. For example, the attributes may be a string defining the type of information the indicator will display (e.g., a group of media assets or a media asset identifier) and a pointer to a location in storage containing the information to be displayed.

The media guidance application may store in each of the first field an identifier associated with one of the plurality of groups of media assets or one of the first plurality of media asset identifiers. For example, the media guidance application may generate pointers to locations in memory containing data associated with a group of media assets (e.g., one of groups of media assets 1402 and 1404) or a media asset identifier (e.g., one of media asset identifiers 1406). For example, the media guidance application may generate a pointer to a location in memory containing a title, pixel information for an image, or any other associated data that may be used to identify the group of media assets or a media asset identifier. Alternatively or additionally, the media guidance application may store an identifier that defines a location remote from a device executing the media guidance application containing the data associated with a group of media assets or a media asset identifier as described above.

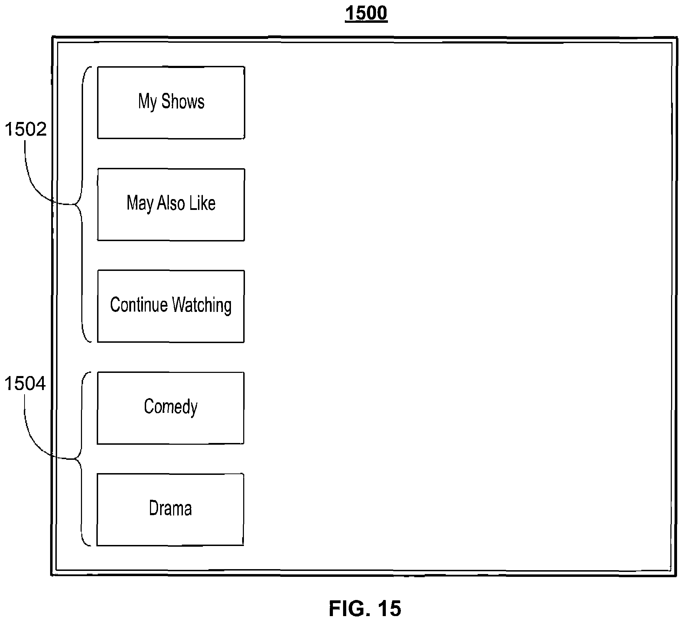

The media guidance application may store in each of the second field an indication of whether a corresponding identifier in the associated first field is associated with one of the plurality of groups of media assets or associated with one of the first plurality of media asset identifiers. For example, the media guidance application may store a single character, string of characters, or integer indicating whether an identifier stored in a first field corresponds to a group of media assets (e.g., one of groups of media assets 1402 or 1404) or a media asset identifier (e.g., one of media asset identifiers 1406). For example, if media asset identifiers and groups of media assets are the only types of identifiers, a single flag may be stored indicating whether the corresponding identifier is a group of media assets (e.g., a Boolean value set to "true"). If additional information is to be displayed based on the first display template that is not a group of media assets or media asset identifier, the media guidance application may either store multiple Boolean values, or a string such as "identifier" or "group," defining a media asset identifier and group of media assets, respectively. The media guidance application may also store in each of the third field a flag indicating whether an indicator associated with the corresponding identifier is to be displayed as selected. For example, as described further below with respect to FIG. 15, the media guidance application may determine that a particular group of media assets or media asset identifier was navigated to and thus was selected. In response, the media guidance application may set the flag in the third field corresponding to the appropriate identifier stored in the first field to "true." For example, the flag may be a Boolean value, which when set to "true" may indicate that the corresponding identifier is to be displayed as selected.

In some embodiments, the media guidance application may, when generating for display the first instance of the first display template, format (e.g., the size, location, shape, etc.) the indicators based on data contained in a data structure corresponding to the first instance of the first display template. Specifically, the media guidance application may retrieve, from each first field in the first data structure, a corresponding identifier. For example, the media guidance application may retrieve (e.g., by executing an instruction in a database query language such as SQL) each identifier stored in the data structure. The media guidance application may access the location in storage or at a server linked by the identifier to retrieve information (e.g., a title) to be displayed for the particular associated group of media assets (e.g., one of groups of media assets 1402 or 1404) or media asset identifier (e.g., one of media asset identifier 1406).

The media guidance application may retrieve, from each second field in the data structure, the indication of whether the identifier in the associated first field is for one of the plurality of groups of media assets or one of the first plurality of media asset identifiers. For example, the media guidance application may retrieve (e.g., by executing an instruction in a database query language such as SQL) the stored indication associated with each identifier of whether the identifier is a group of media assets (e.g., one of group of media assets 1402 or 1404) or a media asset identifier (e.g., one of media asset identifiers 1406). As a specific example, the media guidance application may retrieve "1" for a media asset identifier and "2" for a group of media assets, "id" for a media asset identifier and "group" for a group of media assets, or any other stored values indicating whether the identifier is a group of media assets or a media asset identifier, as described above.

The media guidance application may format indicators differently based on whether each indicator is for a group of media assets or a media asset identifier. Specifically, the media guidance application may format indicators for each retrieved identifier based on the indication of whether the identifier in the associated first field is for one of the plurality of groups of media assets or one of the first plurality of media asset identifiers. For example, the media guidance application may generate an instruction to an API which interfaces with graphics circuitry (e.g., a GPU) to format particular indicators with a set of attributes based on whether the associated identifier corresponds to a group of media assets (e.g., one of group of media assets 1402 or 1404) or a media asset identifier (e.g., one of media asset identifiers 1406). Further to the example, the media guidance application may generate an instruction to generate for display each indicator corresponding to a group of media assets twice as large in length and width as each indicator corresponding to a media asset identifier. The media guidance application may format the size, shape, color, or any other display properties of the indicators by generating instructions transmitted to the graphics circuitry.

The media guidance application may generate for display groups of media assets visually distinguished from media asset identifiers. Specifically, the media guidance application may generate for display each formatted indicator, where each formatted indicator associated with the plurality of groups of media assets is visually distinguished from each formatted indicator associated with the first plurality of media asset identifiers. For example, the media guidance application may generate display 1400 on a display (e.g., of user equipment such as a smart phone) including the groups of media assets (e.g., groups of media assets 1402 and 1404) and media asset identifiers (e.g., media asset identifiers 1406) such that the groups of media assets have a different size, shape, color, or other graphical property that allows them to be distinguished from the media asset identifiers.

The media guidance application may receive a user input of a first directional navigation command. For example, the media guidance application may receive a user input via a user input interface (e.g., as described below further with respect to FIGS. 4-7), such as a remote control. The media guidance application may determine whether the user input corresponds to a directional navigation command (e.g., navigating in the down direction with a "DOWN" button) or a different command (e.g., to enter a VOD menu with a "VOD" button) based on comparing the received user input with a stored list of commands associated with particular user inputs.

The media guidance application may determine whether a second directional navigation command is received within a threshold time period from when the first directional navigation command is received. For example, upon receiving the first directional navigation command the media guidance application may start a timer for the threshold period of time (e.g., 0.5 seconds). The media guidance application may monitor for additional user input corresponding to a second directional navigation command (e.g., another user input of the "DOWN" button on a remote control). If no additional directional navigation command is received before the timer indicates the threshold time period has lapsed, the media guidance application may determine a direction associated with the first directional navigation command. Based on the determined direction, the media guidance application may determine a second group of media assets of the plurality of groups of media assets to navigate to and update the first instance of the first display template to display media asset identifiers associated with the second group of media assets. For example, the media guidance application may update an indication in the first instance of the first display template of the newly selected group of media assets and generate for display, based on the updated template, a new display similar to FIG. 14. As a specific example, if the media guidance application receives one "DOWN" command and no additional commands within the time period, the media guidance application may navigate to a group of media assets 1404 that is one below the currently selected group of media assets 1402 (e.g., "May Also Like") and generate a new set of media asset identifiers associated with the newly selected group of media assets. However, if the media guidance application receives multiple directional navigation commands within the threshold time period of each other, then the media guidance application may generate for display the display shown in FIG. 15.

FIG. 15 shows an illustrative example of a display screen with indicators for groups of media assets, in accordance with some embodiments of the disclosure. For example, user equipment (e.g., as described further below with respect to FIGS. 4-7) may execute a media guidance application which generates display 1500. Display 1500 includes groups of media assets 1502 and 1504. Groups of media assets 1502 were previously displayed when generating display 1400. However, since display 1500 has more space, due to not displaying any media asset identifiers, additional groups of media assets 1504 are also displayed. Display 1500 may appear on one or more user devices (e.g., set-top box, smartphone, electronic table, or another suitable user device).

In some embodiments, the media guidance application may, in response to determining that the second directional navigation command is received within the threshold time period, determine a second group of media assets to navigate to and not generate media asset identifiers for groups of media assets between the initially selected group of media assets. Specifically, the media guidance application may link the plurality of groups of media assets (e.g., groups of media assets 1502) and additional groups of media assets (e.g., additional groups of media assets 1504) with a second instance of a second display template (e.g., to generate display 1500). For example, in order to fill the screen, since no media asset identifiers are generated with the second display template, the media guidance application may add additional groups of media assets which may allow the user to see more groups of media assets at a time for easier navigation. For example, the media guidance application may store pointers to locations in storage of identifiers for the plurality of groups of media assets and identifiers for the additional groups of media assets in fields of an instance of the second display template, similar to as described above for generating and storing pointers in the instance of the first display template.

In some embodiments, when linking the plurality of groups of media assets and additional groups of media assets with the second instance of the second display template, the media guidance application may generate a data structure containing a plurality of fields with information needed to generate for display indicators for groups of media assets in both rows and columns. Specifically, the media guidance application may generate a second data structure (e.g., used to generate display 1500) according to the second display template, for the second instance of the second display template, where the second data structure includes for each of the plurality of groups of media assets (e.g., groups of media assets 1502) and for each of the additional groups of media assets (e.g., additional groups of media assets 1504) a fourth field. For example, the media guidance application may generate, based on the first display template, a data structure containing a plurality of fields. The data structure may be organized as a table, where each row in the table corresponds to an indicator to be displayed, and each field contains information relating to the indicator. Alternatively or additionally, the data structure may be organized as an object of a class, where the class contains attributes for each indicator corresponding to the first display template. The media guidance application may execute an instruction to create an object (e.g., the first instance) of the class (e.g., the first display template) and define the attributes for each indicator. The media guidance application may store in each of the fourth field one or more coordinates defining a display location for a corresponding identifier stored in an associated first field, where the one or more coordinates define a row of a plurality of rows and a column of a plurality of columns for displaying an indicator associated with a corresponding identifier. For example, the media guidance application may store coordinates in Euclidean space corresponding to pixels where a given indicator should be displayed, or coordinates for specific rows and columns where the indicator should be displayed (e.g., (1,2) corresponding to column 1, row 2).

The media guidance application may generate for display additional groups of media assets in addition to the previously generated groups of media assets. Specifically, the media guidance application may generate for display the second instance of the second display template including a third plurality of indicators for (1) the plurality of groups of media assets and (2) the additional groups of media assets. For example, the media guidance application may generate for display rectangular objects including identifiers (e.g., a title) of each of both the plurality of groups of media assets (e.g., groups of media assets 1502) and the additional groups of media assets (e.g., additional groups of media assets 1504). The media guidance application may generate each indicator based on formatting instructions for the indicator (e.g., as described above with respect to FIG. 14). For example, if one indicator corresponds to a group of media assets with a large image, the indicator may be larger than other indicators. Alternatively, the image may be scaled such that it fits in its entirety in a same-sized indicator as other displayed indicators. In some embodiments, the media guidance application may generate the second instance of the second display template (e.g., display 1500) for display immediately upon receiving the second user directional navigation command. However, in some embodiments, the media guidance application may generate the second instance of the second display template (e.g., display 1500) for display upon receiving the first user directional navigation command.

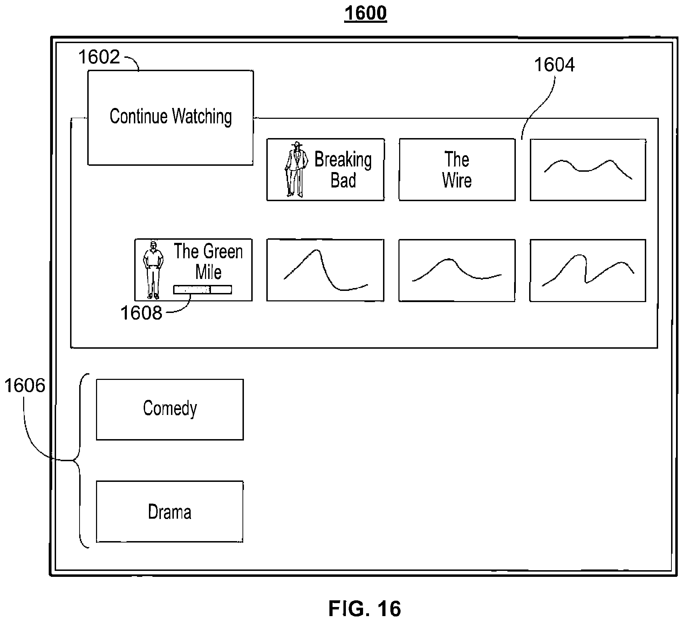

In some embodiments, the media guidance application, when generating for display the second instance of the second display template, may visually distinguish a selected indicator from other indicators. Specifically, the media guidance application may determine that a first indicator of the third plurality of indicators corresponds to a first identifier that is to be displayed as selected. For example, based on the value of a flag for whether an identifier is selected being "true" associated with the first identifier stored in a data structure for the second instance of the second display template, the media guidance application may determine that the first indicator is to be displayed as selected. The media guidance application may visually distinguish the first indicator from other indicators in the third plurality of indicators. For example, the media guidance application may generate a different graphical feature (e.g., a different color, size, location, or border) from the other indicators to visually distinguish that the first indicator is selected. As a specific example, after receiving a second user directional navigation command within the threshold time, the media guidance application may wait for additional user inputs to determine which indicator the user desires to select and generates display 1500. Further to the example, the media guidance application may continue to generate the indicator that was first selected (e.g., "My Shows") as selected or may select a different indicator based on a direction of each command received within the threshold time period (e.g., "May Also Like" may be visually distinguished as selected after the media guidance application receives a "DOWN" command). However, the media guidance application may wait to display media asset identifiers associated with a selected group of media assets (e.g., as described below in FIG. 16) until no additional commands are received within a threshold time of the last received command.

The media guidance application may compare the first directional navigation command and the second directional navigation command with a plurality of stored directional navigation commands to determine a first direction associated with the first directional navigation command and a second direction associated with the second directional navigation command. For example, the media guidance application may receive a first directional navigation command of a "DOWN" button and determine that the command corresponds to a request to move down (the first direction) to the next group of media assets (e.g., to one of group of media assets 1502 and 1504) that is displayed. The media guidance application may determine that the second received command, e.g., also of the "DOWN" button, is to move down (the second direction) one additional group of media assets. In some embodiments, groups of media assets may be arranged according to the second display template in rows and columns, such that the two directional navigation commands received by the media guidance application may correspond to navigation in two dimensions, which allows the user to see even more groups of media assets at a single time. After determining that the multiple received directional navigation commands correspond to a request to navigate to a specific indicator, the media guidance application may generate a new display screen including media asset identifiers associated with the indicator that is navigated to, as described in FIG. 16.

FIG. 16 shows another illustrative example of a display screen with indicators for both groups of media assets and media asset identifiers, in accordance with some embodiments of the disclosure. For example, user equipment (e.g., as described further below with respect to FIGS. 4-5) may execute a media guidance application which generates display 1600. Display 1600 includes groups of media assets 1602 and 1606. Display 1600 also includes media asset identifiers 1604 associated with group of media assets 1602, which is the group of media assets the media guidance application determined to navigate to based on the received directional navigation commands from the user. Additionally, display 1600 may include progress bar 1608 for media asset identifiers that a user has partially viewed. Display 1600 may appear on one or more user devices.

In some embodiments, the media guidance application may navigate, according to the first direction and the second direction, from a first indicator for the first group of media assets to a second indicator for a second group of media assets. For example, the media guidance application may navigate to the indicator corresponding to the group of media assets (e.g., group of media assets 1602) based on the ordered combination of the directions of the two directional navigation commands discussed above with respect to FIG. 15. As a specific example, if the ordered combination of the directions of the two directional navigation commands is to move two indicators down, then the media guidance application may navigate to the indicator corresponding to a second group of media assets two down from the previously selected one (e.g., to "Continue Watching" from "My Shows"). Because the two directional navigation commands were received within the threshold time period of each other, the media guidance application does not generate for display media asset identifiers associated with any of the groups of media assets that were navigated through (e.g., by updating the first display template). One of the advantages of this approach is to save processing time by not loading media asset identifiers that the user is uninterested in. Another advantage of this approach is allowing a user to navigate to a displayed indicator with fewer distractions, since the user quickly entering multiple directional navigation commands indicates a desire to navigate through a number of the displayed indicators. Yet another advantage of this is approach is allowing a user to see more groups of media assets on the display screen by removing media asset identifiers, which may help the user find a group of media assets that he or she is searching for.

In some embodiments, when navigating from a first indicator to a second indicator, the media guidance application may update a flag corresponding to whether a particular indicator is selected. Specifically, the media guidance application may update a first flag of a corresponding third field associated with the first indicator to indicate that the first indicator is no longer selected (e.g., that group of media assets 1402, "My Shows," which was previously selected in FIG. 14, is no longer selected). For example, the media guidance application may, in response to determining that the first indicator is no longer selected based on the received directional navigation commands, update the a Boolean value corresponding to the first flag to "false," indicating that the first indicator is no longer selected. The media guidance application may update a second flag of a corresponding third field associated with the second indicator to indicate that the second indicator is selected. For example, the media guidance application may, in response to determining that the second indicator (e.g., corresponding to group of media assets 1602) should now be selected based on the received directional navigation commands, update a Boolean value corresponding to the second flag to "true," indicating that the second indicator is now selected.

In some embodiments, when determining which indicator to navigate to responsive to the received directional navigation commands, the media guidance application may determine a number of indicators to navigate through based on a duration that the second directional navigation command was selected. Specifically, the media guidance application may determine a duration associated with the second navigation command. For example, the media guidance application may start a timer when the second directional navigation command is first received and stop the timer when the second directional navigation command ceases to be received. As a specific example, the media guidance application may start the timer when a user depresses a button and stop the timer when the button is no longer depressed. Alternatively or additionally, the media guidance application may determine a clock time when the button was initially depressed (e.g., 10:30:11) and a clock time when the button ceased to be depressed (e.g., 10:30:15) and, by subtracting the two values, determine the duration. As another specific example, the media guidance application may determine a clock time when a virtual button (e.g., a defined range of pixels) on a touchscreen device is initially depressed and a clock time when the virtual button ceases to be depressed.

The media guidance application may compare the duration with a plurality of stored durations, where each of the stored durations corresponds to instructions to a number of indicators to navigate through. For example, the media guidance application may access a data structure containing a plurality of durations and corresponding numbers of indicators (e.g., for groups of media assets) to navigate through. Because the duration measured may be a wide range of values, the media guidance application may round the duration prior to comparing with the data structure, which may only contain discrete values. For example, the media guidance application may determine the duration for a directional navigation command is 3.15 seconds. The media guidance application may round this value to the nearest second (e.g., 3 seconds) prior to comparing with the data structure. In some embodiments, the data structure may contain device-specific corresponding numbers of indicators to navigate through. For example, the media guidance application may, for the same command received for the same duration, retrieve different values for the number of indicators to navigate through for a different device (e.g., a cell phone and a computer). The media guidance application may, based on comparing the duration with a plurality of stored durations, determine the number of indicators to navigate through. For example, the media guidance application may determine that a "DOWN" key was depressed for 3 seconds, which may correspond to navigating through 5 indicators based on the comparison with the data structure. As another example, the media guidance application may determine that a user selected a directional navigation command using a touch-screen interface of a mobile phone for 3 seconds, which may correspond to navigating through 3 indicators based on the comparison with the data structure.

The media guidance application may link media asset identifiers associated with the newly selected second group of media assets to a display template. Specifically, the media guidance application may link a second plurality of media asset identifiers (e.g., corresponding to media asset identifiers 1604), instead of the first plurality of media asset identifiers (e.g., corresponding to media asset identifiers 1406 in FIG. 14), with the first instance of the first display template, where the second plurality of media asset identifiers is associated with the second group of media assets. For example, the media guidance application may update the first instance of the first display template to reflect that a new group of media assets is selected (e.g., group of media assets 1602 instead of group of media assets 1402 in FIG. 14). For example, the media guidance application may determine that the group of media assets that was previously ordered three groups below the previously selected group of media assets is now selected based on the two directional navigation commands. The media guidance application may link media asset identifiers associated with the newly selected group of media assets with the first instance of the display template instead of the media asset identifiers that were previously linked (e.g., by clearing pointers to locations in memory that correspond to media asset identifiers in the first instance of the first template and generating and storing new pointers in their place).

The media guidance application may generate for display the first instance of the first display template including a fourth plurality of indicators for the second plurality of media asset identifiers. For example, the media guidance application may generate display 1600 including rectangular objects including indicators for the second plurality of media asset identifiers (e.g., media asset identifiers 1604), in the same manner as described above for the first plurality of media asset identifiers (e.g., with respect to FIG. 14). In some embodiments, the media guidance application may generate for display, with an indicator, additional information based on data stored in a user profile related to the media asset identifier or group of media assets corresponding to the indicator. For example, if a user has viewed a portion of a media asset (e.g., "The Green Mile") for which an indicator for the corresponding media asset identifier (e.g., one of media asset identifiers 1606) is displayed, the media guidance application may add a progress bar (e.g., progress bar 1608) to denote the user's progress in the media asset.

In some embodiments, when generating for display the first instance of the first display template including the fourth plurality of indicators for the second plurality of media asset identifiers, the media guidance application may remove groups of media assets that were navigated through. Specifically, the media guidance application may determine a subset of (1) the plurality of groups of media assets and (2) the additional groups of media assets that were not navigated through based on the first directional navigation command and the second directional navigation command. For example, the media guidance application may determine that originally indicators for groups of media assets in the order "My Shows," "May Also Like," and "Continue Watching," were linked to the first instance of the first display template and displayed (e.g., groups of media assets 1402 and 1404 with respect to FIG. 14). The media guidance application may have added indicators of groups of media assets "Comedy" and "Drama" when the second instance of the second display template was generated for display (e.g., additional groups of media assets 1504 are also displayed with groups of media assets 1502 with respect to FIG. 15). If, based on the received directional navigation commands, the media guidance application navigates to "Continue Watching," then group of media assets "May Also Like" was navigated through. Thus, groups "My Shows," "Continue Watching," "Comedy," and "Drama" were not navigated through and comprise the subset. In some embodiments, the initial selected group is included as being navigated through, in which case groups "Continue Watching," "Comedy," and "Drama" were not navigated through (or initially selected) and comprise the subset.

The media guidance application may remove links in the first instance of the first display template to the plurality of groups of media assets. For example, if the subset comprises groups "Continue Watching," "Comedy," and "Drama" and groups "My Shows," "May Also Like," and "Continue Watching" are linked in the first instance of the first display template, then the media guidance application removes the links to groups "My Shows" and "May Also Like," as they have been navigated through. The media guidance application may link the subset with the first instance of the first display template. For example, the media guidance application may replace the removed links to groups of media assets "My Shows" and "May Also Like" with groups of media assets "Comedy" and "Drama". The media guidance application may generate for display a fifth plurality of indicators for the subset. For example, the media guidance application may generate, with the fourth plurality of indicators, indicators for the groups of media assets that are part of the subset of groups of media assets (e.g., groups of media assets 1606). In this way, the media guidance application does not generate for display groups of media assets that the user has already seen and chosen to navigate through.

In some embodiments, the media guidance application may determine a group of media assets to navigate to based on a sequence of user input received within a threshold time period. By utilizing a plurality of different sequences, a user can navigate quickly through groups of media assets more precisely and save time finding a category that he or she is looking for. Specifically, the media guidance application may receive a third directional navigation command within the threshold time period from when the second directional navigation command is received. For example, upon receiving the second directional navigation command the media guidance application may start a timer for the threshold period of time (e.g., 0.5 seconds). In some embodiments, the threshold period of time may be different depending on the previously received directional navigation command and/or the number of previously received directional navigation commands. The media guidance application may monitor for additional user input corresponding to a third directional navigation command (e.g., another user input of the "DOWN" button on a remote control). The media guidance application may monitor user input and determine that a user has completed a navigation sequence before or after generating the second instance of the second display template for display and/or without generating for display one or both of the second display template (e.g., FIG. 15) or the first display template (FIG. 16). For example, the media guidance application may receive a plurality of user inputs and, instead of generating for display the second navigation template, navigate based on the matched navigation sequence. In another example, the media guidance application may determine the first and second received user inputs from the user correspond to directional navigation commands and complete a stored navigation sequence. The media guidance application may navigate according to an associated instruction, as described below.

The media guidance application may compare the third directional navigation command with each initial directional navigation command associated with each navigation sequence of a plurality of stored navigation sequences, where each navigation sequence comprises a series of ordered directional navigation commands. For example, the media guidance application may access a data structure containing navigation sequences, stored either locally in memory or remotely at a server accessible via a communications network, and compare the received third directional navigation command with the first navigation command of each stored navigation sequence in the data structure. The media guidance application may determine based on the comparing, that the third directional navigation command is an initial directional navigation command for one or more stored navigation sequences. For example, the media guidance application may determine that the initial directional navigation command for one or more of the stored navigation sequences in the data structure corresponds to the third directional navigation command received from the user.

The media guidance application, in response to determining that the third directional navigation command is the initial directional navigation command for one or more stored navigation sequences may receive at least one subsequent directional navigation command, where each subsequent directional navigation command of the at least one subsequent directional navigation command is received within a threshold time from when an immediately preceding directional navigation command was received. For example, the media guidance application may receive a fourth directional navigation command from the user within the threshold period of time of the third directional navigation command. The media guidance application may continue to monitor for subsequent directional navigation commands until a directional navigation command is not received within the threshold time of the previous received directional navigation command.

The media guidance application may compare the at least one subsequent directional navigation command with remaining directional navigation commands of the one or more stored navigation sequences. For example, the media guidance application may compare the directional navigation commands, in the order that they were received, with directional navigation commands of navigation sequences that matched the third directional navigation command to determine if the subsequently received directional navigation commands complete any navigation sequences. The media guidance application may determine, based on the at least one subsequent directional navigation command matching the remaining directional navigation commands for a navigation sequence of the one or more navigation sequences, that the at least one subsequent directional navigation command completes the navigation sequence. For example, if the media guidance application receives four additional "DOWN" commands and a navigation sequence is completed by four additional "DOWN" commands, then the media guidance application may determine that the sequence matches the received input.

The media guidance application may navigate, based on an instruction associated with the completed navigation sequence, from the second indicator for the second group of media assets to a third indicator for a third group of media assets. For example, the media guidance application may retrieve a stored instruction associated with the completed navigation sequence from a field in a data structure. The media guidance application may determine, based on the instruction, a number of indicators to navigate through and a direction to navigate. In some embodiments, the instruction may contain multiple directions and numbers of indicators to navigate through in a particular order (e.g., if the indicators are arranged in a grid of rows and columns). As a specific example, an instruction for four "DOWN" commands received in a row may be to navigate to the indicator eight indicators down from the currently selected indicator. In response, the media guidance application may navigate to the indicator eight below the current indicator and update the first instance of the first display template, as described above.

In some embodiments, a user may enter a navigation sequence multiple times, or once with a portion of the navigation sequence reentered. In this instance, the particular sequence may not be stored, but the media guidance application may adjust the instruction associated with the navigation sequence. Specifically, the media guidance application may determine that the at least one subsequent directional navigation command includes additional commands after the completed navigation sequence. For example, the media guidance application may determine that after matching a navigation sequence that requires four "DOWN" commands, the user also input an additional two "DOWN" commands. The media guidance application may determine whether the additional received commands correspond to a portion of the completed navigation sequence. For example, the media guidance application may determine that since two "DOWN" commands correspond to two commands in the matched sequence, they correspond to a portion of the completed navigation sequence. In some embodiments, the media guidance application may determine whether a threshold number of commands are matched in order to determine that a portion of the navigation sequence is matched. For example, the media guidance application may determine that two additional "DOWN" commands do not correspond to any adjustment to the instruction, but four "DOWN" commands would (e.g., if the threshold is three additional commands matching a portion of the navigation sequence).

The media guidance application may, in response to determining that the additional commands correspond to the portion of the completed navigation sequence, adjust the instruction associated with the completed navigation sequence. For example, the media guidance application may, based on a predefined rule-set for the number of additional commands match to the navigation sequence, determine to adjust the instruction. For example, the media guidance application may determine that, if three additional "DOWN" commands are received, to increase the number of indicators that are navigated through by three from the number indicated in the instruction associated with the navigation sequence. The media guidance application may navigate, based on the adjusted instruction, to a fourth indicator for a fourth group of media assets. For example, if the instruction was to navigate to an indicator eight below the currently selected indicator, the media guidance application may navigate to the indicator eleven below, based on the adjusted instruction.

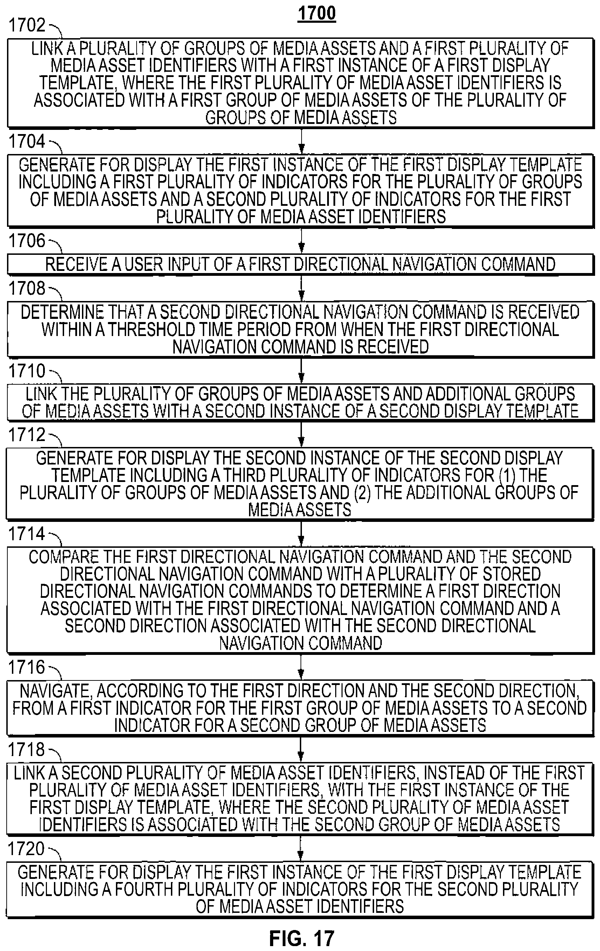

FIG. 17 is a flowchart of illustrative actions for navigating between groups of media assets, in accordance with some embodiments of the disclosure. For example, a media guidance application implementing process 1700 may be executed by control circuitry 404 (FIG. 4). It should be noted that process 1700 or any action thereof could be performed on, or provided by, any of the devices shown in FIGS. 4-5.

Process 1700 begins at 1702, where the media guidance application links (e.g., via control circuitry 404 (FIG. 4)) a plurality of groups of media assets and a first plurality of media asset identifiers with a first instance of a first display template, where the first plurality of media asset identifiers is associated with a first group of media assets of the plurality of groups of media assets. For example, the media guidance application may retrieve, either locally from storage (e.g., storage 408 (FIG. 4)) or remotely from a server (e.g., media guidance data source 518 (FIG. 5)) via a communications network (e.g., communications network 514 (FIG. 5)), the first display template. The first display template may be any suitable data structure, such as a class or a table that contains parameters for displaying groups of media assets and media asset identifiers. The media guidance application may generate (e.g., storage 408 (FIG. 4)) a first instance of the first display template. The media guidance application may store (e.g., storage 408 (FIG. 4)) links to particular locations in storage (e.g., pointers) for the particular groups of media assets and media asset identifiers to be displayed. For example, each group of media assets may be an object which has a plurality of associated media assets. As a specific example, a group of media assets may be for the genre, "Comedy," which may be associated with media assets such as "Happy Gilmore."

Process 1700 continues to 1704, where the media guidance application generates (e.g., via control circuitry 404 (FIG. 4)) for display (e.g., on display 412 (FIG. 4)) the first instance of the first display template including a first plurality of indicators for the plurality of groups of media assets and a second plurality of indicators for the first plurality of media asset identifiers. For example, the media guidance application may generate (e.g., via control circuitry 404 (FIG. 4)) for display (e.g., on display 412 (FIG. 4)) rectangular objects of a first size including identifiers for the first plurality of groups of media assets and rectangular objects of a second size including identifiers for the first plurality of media asset identifiers. The media guidance application may generate (e.g., via control circuitry 404 (FIG. 4)) each indicator based on formatting instructions for the indicator. For example, if one indicator corresponds to a media asset identifier with a long title, then the media guidance application may generate (e.g., via control circuitry 404 (FIG. 4)) the indicator to be larger than other indicators.

Process 1700 continues to 1706, where the media guidance application receives (e.g., via control circuitry 404 (FIG. 4)) a user input (e.g., via user input interface 410 (FIG. 4)) of a first directional navigation command. For example, the media guidance application may receive (e.g., via control circuitry 404 (FIG. 4)) a user input via a user input interface (e.g., via user input interface 410 (FIG. 4)), such as a remote control. The media guidance application may determine (e.g., via control circuitry 404 (FIG. 4)) whether the user input corresponds to a directional navigation command (e.g., navigating in the down direction with a "DOWN" button) or a different command (e.g., to enter a VOD menu with a "VOD" button) based on comparing the received user input with a stored list of commands associated with particular user inputs.

Process 1700 continues to 1708, where the media guidance application determines (e.g., via control circuitry 404 (FIG. 4)) that a second directional navigation command is received within a threshold time period from when the first directional navigation command is received. For example, upon receiving the first directional navigation command, the media guidance application may start (e.g., via control circuitry 404 (FIG. 4)) a timer for the threshold period of time (e.g., 0.5 seconds). The media guidance application may monitor (e.g., via control circuitry 404 (FIG. 4)) for additional user input corresponding to a second directional navigation command (e.g., another user input of the "DOWN" button on a remote control).

Process 1700 continues to 1710, where the media guidance application links (e.g., via control circuitry 404 (FIG. 4)) the plurality of groups of media assets and additional groups of media assets with a second instance of a second display template. For example, in order to fill the screen, since no media asset identifiers are generated with the second display template, the media guidance application may add (e.g., via control circuitry 404 (FIG. 4)) additional groups of media assets that may allow the user to see more groups of media assets at a time for easier navigation. For example, the media guidance application may store (e.g., via control circuitry 404 (FIG. 4)) pointers to locations in storage (e.g., storage 408 (FIG. 4)) of identifiers for the plurality of groups of media assets and identifiers for the additional groups of media assets in fields of an instance of the second display template, similar to as described above with respect to step 1702 and FIG. 1 for generating and storing pointers in the instance of the first display template.

Process 1700 continues to 1712, where the media guidance application generates (e.g., via control circuitry 404 (FIG. 4)) for display (e.g., on display 412 (FIG. 4)) the second instance of the second display template including a third plurality of indicators for (1) the plurality of groups of media assets and (2) the additional groups of media assets. For example, the media guidance application may generate (e.g., via control circuitry 404 (FIG. 4)) for display rectangular objects including identifiers (e.g., a title) of each of both the plurality of groups of media assets and the additional groups of media assets. The media guidance application may generate (e.g., via control circuitry 404 (FIG. 4)) each indicator based on formatting instructions for the indicator. For example, if one indicator corresponds to a group of media assets with a large image, the media guidance application (e.g., via control circuitry 404 (FIG. 4)) may generate the indicator to be larger than other indicators. Alternatively, the media guidance application may scale (e.g., via control circuitry 404 (FIG. 4)) the image such that it fits in its entirety in a same-sized indicator as other displayed indicators.

Process 1700 continues to 1714, where the media guidance application compares (e.g., via control circuitry 404 (FIG. 4)) the first directional navigation command and the second directional navigation command with a plurality of stored directional navigation commands to determine a first direction associated with the first directional navigation command and a second direction associated with the second directional navigation command. For example, the media guidance application may receive (e.g., via control circuitry 404 (FIG. 4)) a first directional navigation command of a "DOWN" button (e.g., via user input interface 410 (FIG. 4)) and determine that the command corresponds to a request to move down (the first direction) to the next group of media assets that is displayed. The media guidance application may determine (e.g., via control circuitry 404 (FIG. 4)) that the second received command, e.g., also of the "DOWN" button, is to move down (the second direction) one additional group of media assets. The media guidance application may determine (e.g., via control circuitry 404 (FIG. 4)) the direction and type of command by comparing each received command with a plurality of stored commands in a database, which may be local (e.g., storage 408 (FIG. 4)) or remote (e.g., at media guidance data source 518 accessible via communications network 514 (FIG. 5)) from the media guidance application.

Process 1700 continues to 1716, where the media guidance application navigates (e.g., via control circuitry 404 (FIG. 4)), according to the first direction and the second direction, from a first indicator for the first group of media assets to a second indicator for a second group of media assets. For example, the media guidance application may navigate (e.g., via control circuitry 404 (FIG. 4)) to the indicator corresponding to the group of media assets based on the ordered combination of the directions of the two directional navigation commands. For example, if the ordered combination of the directions of the two directional navigation commands is to move two indicators down, then the media guidance application may navigate (e.g., via control circuitry 404 (FIG. 4)) to the indicator corresponding to a second group of media assets two down from the previously selected one.

Process 1700 continues to 1718, where the media guidance application links (e.g., via control circuitry 404 (FIG. 4)) a second plurality of media asset identifiers, instead of the first plurality of media asset identifiers, with the first instance of the first display template, where the second plurality of media asset identifiers is associated with the second group of media assets. For example, the media guidance application may update (e.g., via control circuitry 404 (FIG. 4)) the first instance of the first display template to reflect that a new group of media assets is selected. For example, the media guidance application may determine (e.g., via control circuitry 404 (FIG. 4)) that the group of media assets that was previously ordered three below the previously selected group of media assets is now selected based on the two directional navigation commands. The media guidance application may link (e.g., via control circuitry 404 (FIG. 4)) media asset identifiers associated with the newly selected group of media assets with the first instance of the display template instead of the media asset identifiers that were previously linked (e.g., by clearing pointers to locations in memory that correspond to media asset identifiers in the first instance of the first template and generating and storing new pointers in their place).

Process 1700 continues to 1720, where the media guidance application generates (e.g., via control circuitry 404 (FIG. 4)) for display (e.g., on display 412 (FIG. 4)) the first instance of the first display template including a fourth plurality of indicators for the second plurality of media asset identifiers. For example, the media guidance application may generate (e.g., via control circuitry 404 (FIG. 4)) for display (e.g., on display 412 (FIG. 4)) rectangular objects including identifiers for the second plurality of media asset identifiers, in the same manner as described above with respect to step 1704 and FIG. 14 for the first plurality of media asset identifiers.

It is contemplated that the steps or descriptions of each of FIG. 17 may be used with any other embodiment of this disclosure. In addition, the steps and descriptions described in relation to FIG. 17 may be done in alternative orders or in parallel to further the purposes of this disclosure. For example, each of these steps may be performed in any order or in parallel or substantially simultaneously to reduce lag or increase the speed of the system or method. Furthermore, it should be noted that any of the devices or equipment discussed in relation to FIGS. 4-5 could be used to perform one or more of the steps in FIG. 17.

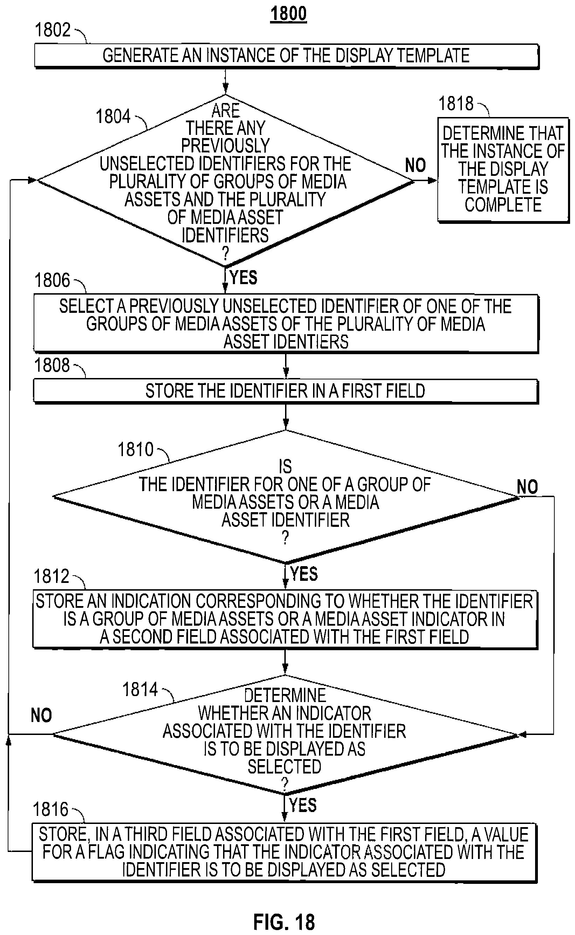

FIG. 18 is a flowchart of illustrative actions for linking a plurality of groups of media assets and a plurality of media asset identifiers with an instance of a display template, in accordance with some embodiments of the disclosure. For example, a media guidance application implementing process 1800 may be executed by control circuitry 404 (FIG. 4) to link a plurality of groups of media assets and a plurality of media asset identifiers with an instance of a display template. Specifically, the media guidance application may initialize the necessary variables and execute (e.g., via control circuitry 404 (FIG. 4)) a program script calling a particular method to execute process 1800. It should be noted that process 1800 or any step thereof could be performed on, or provided by, any of the devices shown in FIGS. 4-5.

Process 1800 begins at 1802, where the media guidance application generates (e.g., via control circuitry 404 (FIG. 4)) an instance of the display template. For example, the media guidance application may generate (e.g., via control circuitry 404 (FIG. 4)), based on the display template, a data structure containing a plurality of fields. The data structure may be organized as a table, where each row in the table corresponds to an indicator to be displayed, and each field contains information relating to the indicator. Alternatively, the data structure may be organized as an object of a class, where the class contains attributes for each indicator corresponding to the first display template. The media guidance application may execute (e.g., via control circuitry 404 (FIG. 4)) an instruction to create an object (e.g., the first instance) of the class (e.g., the first display template) and define the attributes for each indicator.

Process 1800 continues to 1804, where the media guidance application determines (e.g., via control circuitry 404 (FIG. 4)) if there are any previously unselected identifiers for the plurality of groups of media assets and the plurality of media asset identifiers. For example, the media guidance application may determine (e.g., via control circuitry 404 (FIG. 4)), based on the instance of the display template, whether each indicator defined in the display template has been linked to a particular identifier of a group of media assets or media asset identifier. The media guidance application may execute (e.g., via control circuitry 404 (FIG. 4)) a for-loop to link each indicator defined in the template with an identifier. Alternatively or additionally, the media guidance application may determine (e.g., via control circuitry 404 (FIG. 4)) a set of identifiers that should be generated for display and write (e.g., via control circuitry 404 (FIG. 4)) instructions for generating each identifier for display (e.g., an indicator) to the instance of the display template (e.g., also using a for-loop to iteratively write instructions for indicators corresponding to each identifier). If, at step 1804, the media guidance application determines (e.g., via control circuitry 404 (FIG. 4)) that there are no more previously unselected identifiers, then process 1800 continues to 1818, where the media guidance application (e.g., via control circuitry 404 (FIG. 4)) determines that the instance of the display template is complete. For example, after every identifier determined to be displayed is linked to the instance of the display template, the media guidance application may terminate (e.g., via control circuitry 404 (FIG. 4)) process 1800.

If, at step 1804, the media guidance application determines (e.g., via control circuitry 404 (FIG. 4)) that there are previously unselected identifiers, process 1800 continues to 1806, where the media guidance application selects (e.g., via control circuitry 404 (FIG. 4)) a previously unselected identifier of one of the groups of media assets of the plurality of media asset identifiers. For example, the media guidance application may retrieve (e.g., via control circuitry 404 (FIG. 4)) an identifier that has not been previously retrieved and store instructions for generating for display an indicator corresponding to the identifier in the instance of the display template. Specifically, the media guidance application may, based on an iterator, select (e.g., via control circuitry 404 (FIG. 4)) the next entry for an identifier in a data structure including a plurality of identifiers.

Process 1800 continues to 1808, where the media guidance application stores (e.g., via control circuitry 404 (FIG. 4)) the identifier in a first field. For example, the media guidance application may generate (e.g., via control circuitry 404 (FIG. 4)) pointers to locations in memory (e.g., storage 408 (FIG. 4)) containing data associated with a group of media assets or a media asset identifier and store respective pointers in the first field for each indicator. For example, the media guidance application may generate (e.g., via control circuitry 404 (FIG. 4)) a pointer to a location in memory containing a title, pixel information for an image, or any other associated data that may be used to identify the group of media assets or media asset identifier. Alternatively or additionally, the media guidance application may store (e.g., via control circuitry 404 (FIG. 4)) a URL or other identifier in the first field that defines a location remote from the media guidance application containing the data associated with a group of media assets or a media asset identifier as described above.

Process 1800 continues to 1810, where the media guidance application determines (e.g., via control circuitry 404 (FIG. 4)) whether the identifier is for one of a group of media assets or a media asset identifier. For example, for each stored identifier, the media guidance application determines (e.g., via control circuitry 404 (FIG. 4)), based on metadata associated with the identifier, whether it is a group of media assets, media asset identifier, or other. Specifically, the identifier may be associated with a flag or other stored indication indicating a type of identifier, which the media guidance application may retrieve (e.g., via control circuitry 404 (FIG. 4)) to determine whether the identifier is for a group of media assets or media asset identifier.

If, at step 1810, the media guidance application determines (e.g., via control circuitry 404 (FIG. 4)) that the identifier is for a group of media assets or a media asset identifier, then process 1800 continues to 1812, where the media guidance application stores (e.g., via control circuitry 404 (FIG. 4)) an indication corresponding to whether the identifier is a group of media assets or a media asset indicator in a second field associated with the first field. For example, the media guidance application may store (e.g., via control circuitry 404 (FIG. 4)) a single character, string of characters, or integer indicating whether an identifier stored in a first field corresponds to a group of media assets or a media asset identifier. For example, if media asset identifiers and groups of media assets are the only types of identifiers, a single flag may be stored by the media guidance application (e.g., via control circuitry 404 (FIG. 4)) indicating whether the corresponding identifier is a group of media assets (e.g., set to "true"). After storing the indication, process 1800 continues to 1814, as described further below.

If, at step 1810, the media guidance application determines (e.g., via control circuitry 404 (FIG. 4)) that the identifier is not for a group of media assets or a media asset identifier, then process 1800 continues to 1814, where the media guidance application determines (e.g., via control circuitry 404 (FIG. 4)) whether an indicator associated with the identifier is to be displayed as selected. For example, the media guidance application may determine (e.g., via control circuitry 404 (FIG. 4)) that a particular group of media assets or media asset identifier was navigated to and thus was selected. If, at step 1814, the media guidance application determines (e.g., via control circuitry 404 (FIG. 4)) that an indicator is not to be displayed as selected, process 1800 returns to 1804, where the media guidance application determines (e.g., via control circuitry 404 (FIG. 4)) if there are any previously unselected identifiers for the plurality of groups of media assets and the plurality of media asset identifiers, as described above.

If, at step 1814, the media guidance application determines (e.g., via control circuitry 404 (FIG. 4)) that an indicator associated with the identifier is to be displayed as selected, process 1800 continues to 1816, where the media guidance application stores (e.g., via control circuitry 404 (FIG. 4)), in a third field associated with the first field, a value for a flag indicating that the indicator associated with the identifier is to be displayed as selected. For example, the media guidance application may set (e.g., via control circuitry 404 (FIG. 4)) the flag in the third field corresponding to the appropriate identifier stored in the first field to "true." After storing the value for the flag, process 1800 returns to 1804, where the media guidance application determines (e.g., via control circuitry 404 (FIG. 4)) if there are any previously unselected identifiers for the plurality of groups of media assets and the plurality of media asset identifiers, as described above.

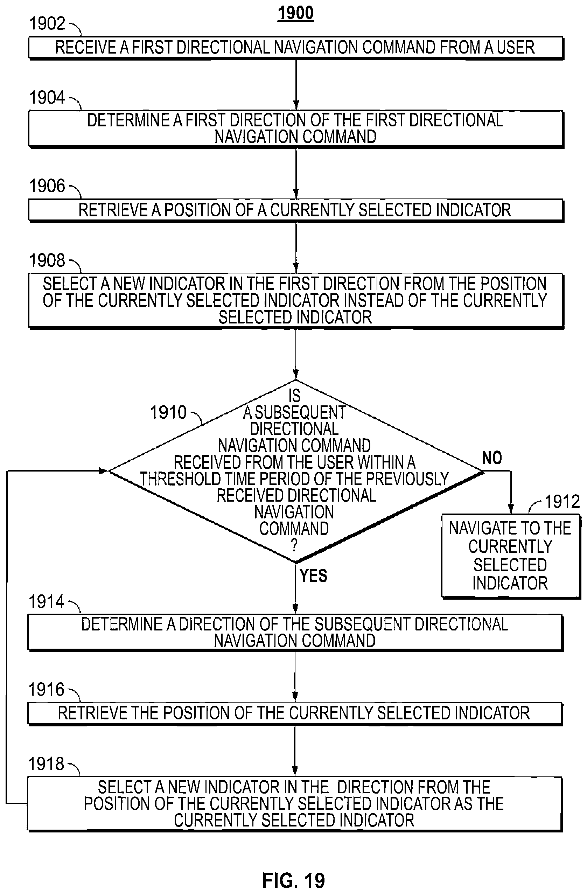

FIG. 19 is a flowchart of illustrative actions for navigating, according to directions corresponding to received user directional navigation commands, from a first indicator for a first group of media assets to a second indicator for a second group of media assets, in accordance with some embodiments of the disclosure. For example, a media guidance application implementing process 1900 may be executed by control circuitry 404 (FIG. 4) to navigate, according to directions corresponding to received user directional navigation commands, from a first indicator for a first group of media assets to a second indicator for a second group of media assets. Specifically, the media guidance application may initialize the necessary variables and execute (e.g., via control circuitry 404 (FIG. 4)) a program script calling a particular method to execute process 1900. It should be noted that process 1900 or any step thereof could be performed on, or provided by, any of the devices shown in FIGS. 4-5.

Process 1900 begins at 1902, where the media guidance application receives (e.g., via control circuitry 404 (FIG. 4)) a first directional navigation command from a user. For example, the media guidance application may receive (e.g., via control circuitry 404 (FIG. 4)) a user input via a user input interface (e.g., via user input interface 410 (FIG. 4)), such as a remote control. The media guidance application may determine (e.g., via control circuitry 404 (FIG. 4)) whether the user input corresponds to a directional navigation command (e.g., navigating in the down direction with a "DOWN" button) or a different command (e.g., to enter a VOD menu with a "VOD" button) based on comparing the received user input with a stored list of commands associated with particular user inputs.

It is contemplated that the steps or descriptions of each of FIG. 18 may be used with any other embodiment of this disclosure. In addition, the steps and descriptions described in relation to FIG. 18 may be done in alternative orders or in parallel to further the purposes of this disclosure. For example, each of these steps may be performed in any order or in parallel or substantially simultaneously to reduce lag or increase the speed of the system or method. Furthermore, it should be noted that any of the devices or equipment discussed in relation to FIGS. 4-5 could be used to perform one or more of the steps in FIG. 18.

Process 1900 continues to 1904, where the media guidance application determines (e.g., via control circuitry 404 (FIG. 4)) a first direction of the first directional navigation command. For example, the media guidance application may receive (e.g., via control circuitry 404 (FIG. 4)) a first directional navigation command of a "DOWN" button and determine that the command corresponds to a request to move down (the first direction) to the next group of media assets that is displayed.

Process 1900 continues to 1906, where the media guidance application retrieves (e.g., via control circuitry 404 (FIG. 4)) a position of a currently selected indicator. For example, the media guidance application may search (e.g., via control circuitry 404 (FIG. 4)) a data structure for an indication (e.g., a Boolean value set to true) of which indicator is currently selected. The media guidance application may, upon determining the currently selected indicator, retrieve (e.g., via control circuitry 404 (FIG. 4)) the position of the selected indicator on the screen from data (e.g., coordinates) associated with the indicator.

Process 1900 continues to 1908, where the media guidance application selects (e.g., via control circuitry 404 (FIG. 4)) a new indicator in the first direction from the position of the currently selected indicator instead of the currently selected indicator. For example, based on the position of the currently selected indicator and the direction of the first directional navigation command, the media guidance application selects (e.g., via control circuitry 404 (FIG. 4)) a new indicator to be displayed (e.g., by setting a Boolean value associated with the indicator to "true" for the new indicator).

Process 1900 continues to 1910, where the media guidance application determines (e.g., via control circuitry 404 (FIG. 4)) if there is a subsequent directional navigation command received from the user (e.g., via user input interface 410 (FIG. 4)) within a threshold time period of the previously received directional navigation command. For example, upon receiving a directional navigation command the media guidance application may start (e.g., via control circuitry 404 (FIG. 4)) a timer for the threshold period of time (e.g., 5 seconds). The media guidance application may monitor (e.g., via control circuitry 404 (FIG. 4)) for additional user input (e.g., via user input interface 410 (FIG. 4)) corresponding to another directional navigation command (e.g., another user input of the "DOWN" button on a remote control). If a subsequent directional navigation command is not received within the threshold time period, process 1900 continues to 1912, where the media guidance application navigates (e.g., via control circuitry 404 (FIG. 4)) to the currently selected indicator. For example, based on receiving no further directional navigation commands within the threshold time, the media guidance application may determine (e.g., via control circuitry 404 (FIG. 4)) that the user has selected the indicator he or she wishes to see more information for. Accordingly, the media guidance application may navigate (e.g., via control circuitry 404 (FIG. 4)) to the currently selected indicator (e.g., based on the stored flag) and generate (e.g., via control circuitry 404 (FIG. 4)) for display (e.g., on display 412 (FIG. 4)) media asset identifiers associated with the selected indicator (e.g., as described above with respect to FIG. 16).

If another directional navigation command is received within the threshold time period, process 1900 continues to 1914, where the media guidance application determines (e.g., via control circuitry 404 (FIG. 4)) a direction of the subsequent directional navigation command. For example, as described above with respect to step 1904, the media guidance application may receive (e.g., via control circuitry 404 (FIG. 4)) a directional navigation command of a "DOWN" button and determine that the command corresponds to a request to move down (another direction) to the next group of media assets that is displayed.

Process 1900 continues to 1916, where the media guidance application retrieves (e.g., via control circuitry 404 (FIG. 4)) the position of the currently selected indicator. For example, as discussed above with respect to 1906, the media guidance application may search (e.g., via control circuitry 404 (FIG. 4)) a data structure for an indication (e.g., a Boolean value set to true) of which indicator is currently selected. The media guidance application may, upon determining the currently selected indicator, retrieve (e.g., via control circuitry 404 (FIG. 4)) the position of the selected indicator on the screen from data (e.g., coordinates) associated with the indicator.

Process 1900 continues to 1918, where the media guidance application selects (e.g., via control circuitry 404 (FIG. 4)) a new indicator in the direction from the position of the currently selected indicator as the currently selected indicator. For example, as described above with respect to 1908, based on the position of the currently selected indicator and the direction of the most recently received directional navigation command, the media guidance application selects (e.g., via control circuitry 404 (FIG. 4)) a new indicator to be displayed (e.g., by setting a Boolean value associated with the indicator to "true" for the new indicator). Process 1900 returns to 1910 to determine (e.g., via control circuitry 404 (FIG. 4)) whether another directional navigation command was received from the user within the threshold time period of the previously received directional navigation command. In this way, the media guidance application selects (e.g., via control circuitry 404 (FIG. 4)), but does not navigate to or display, indicators based on a series of received user directional navigation commands within a threshold time of the previously received command. Once a command is not received within the threshold time, then the media guidance application navigates (e.g., via control circuitry 404 (FIG. 4)) to the currently selected indicator, as discussed above with respect to FIGS. 14-16 and 17 above.

It is contemplated that the steps or descriptions of each of FIG. 19 may be used with any other embodiment of this disclosure. In addition, the steps and descriptions described in relation to FIG. 19 may be done in alternative orders or in parallel to further the purposes of this disclosure. For example, each of these steps may be performed in any order or in parallel or substantially simultaneously to reduce lag or increase the speed of the system or method. Furthermore, it should be noted that any of the devices or equipment discussed in relation to FIGS. 4-5 could be used to perform one or more of the steps in FIG. 19.

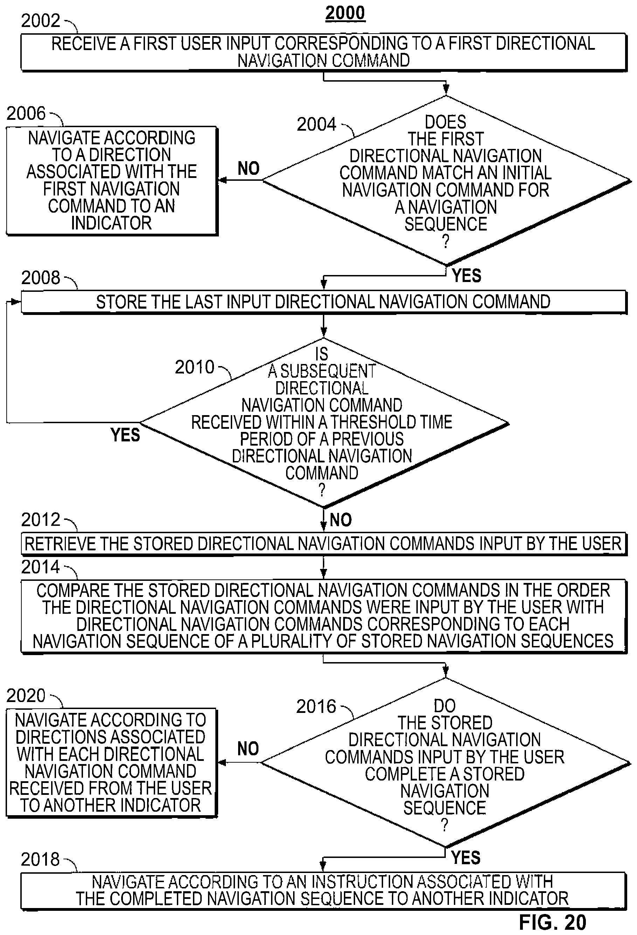

FIG. 20 is a flowchart of illustrative actions for determining whether received user inputs correspond to a navigation sequence, in accordance with some embodiments of the disclosure. For example, a media guidance application implementing process 2000 may be executed by control circuitry 404 (FIG. 4) to determine whether received user inputs correspond to a navigation sequence. Specifically, the media guidance application may initialize the necessary variables and execute (e.g., via control circuitry 404 (FIG. 4)) a program script calling a particular method to execute process 2000. It should be noted that process 2000 or any step thereof could be performed on, or provided by, any of the devices shown in FIGS. 4-5.

Process 2000 begins at 2002, where the media guidance application receives (e.g., via control circuitry 404 (FIG. 4)) a first user input (e.g., via user input interface 410 (FIG. 4)) corresponding to a first directional navigation command. For example, the media guidance application may receive (e.g., via control circuitry 404 (FIG. 4)) a user input via a user input interface (e.g., via user input interface 410 (FIG. 4)), such as a remote control. The media guidance application may determine (e.g., via control circuitry 404 (FIG. 4)) whether the user input corresponds to a directional navigation command (e.g., navigating in the down direction with a "DOWN" button) or a different command (e.g., to enter a VOD menu with a "VOD" button) based on comparing the received user input with a stored list of commands associated with particular user inputs.

Process 2000 continues to 2004, where the media guidance application determines (e.g., via control circuitry 404 (FIG. 4)) if the first directional navigation command matches an initial navigation command for a navigation sequence. For example, the media guidance application may access (e.g., via control circuitry 404 (FIG. 4)) a data structure containing navigation sequences, stored either locally in memory (e.g., storage 408 (FIG. 4)) or remotely at a server (e.g., media guidance data source 518 (FIG. 5)) accessible via a communications network (e.g., communications network 514 (FIG. 5)), and compare the received directional navigation command with the first navigation command of each stored navigation sequence in the data structure. If, at step 2004, the media guidance application determines that the first directional navigation command does not match an initial navigation command for a navigation sequence, process 2000 continues to 2006, where the media guidance application navigates (e.g., via control circuitry 404 (FIG. 4)) according to a direction associated with the first navigation command to an indicator. For example, the media guidance application may navigate (e.g., via control circuitry 404 (FIG. 4)) based on a direction associated with the received command (e.g., down one indicator) as described above with respect to FIG. 19.

If, at step 2004, the media guidance application determines that the first directional navigation command does match an initial navigation command for a navigation sequence, process 2000 continues to 2008, where the media guidance application stores (e.g., via control circuitry 404 (FIG. 4)) the last input directional navigation command. For example, the media guidance application may store (e.g., via control circuitry 404 (FIG. 4)) in a data structure (e.g., in storage 408 (FIG. 4)) each received directional navigation command from the user (e.g., via user input interface 410 (FIG. 4)) in the order each command was received.

Process 2000 continues to 2010, where the media guidance application determines (e.g., via control circuitry 404 (FIG. 4)) if a subsequent directional navigation command was received within a threshold time period of a previous directional navigation command. For example, as described above with respect to FIGS. 1-16 and 17-19, the media guidance application may start (e.g., via control circuitry 404 (FIG. 4)) a timer for the threshold period of time (e.g., 0.5 seconds). If a subsequent directional navigation command is received within the threshold time period, process 2000 may return to 2008, described above. For example, for each directional navigation command received from the user within the threshold period of time of the previously received directional navigation command, the media guidance application may store (e.g., via control circuitry 404 (FIG. 4)) an indication of the received command in a data structure.

If another directional navigation command is not received within the threshold time period of the previous directional navigation command, process 2000 continues to 2012, where the media guidance application retrieves (e.g., via control circuitry 404 (FIG. 4)) the stored directional navigation commands input by the user. For example, the media guidance application may retrieve (e.g., via control circuitry 404 (FIG. 4)) from storage (e.g., storage 410 (FIG. 4)) an array containing each received command in the order it was received.

Process 2000 continues to 2014, where the media guidance application compares (e.g., via control circuitry 404 (FIG. 4)) the stored directional navigation commands in the order the directional navigation commands were input by the user with directional navigation commands corresponding to each navigation sequence of a plurality of stored navigation sequences. For example, the media guidance application may retrieve (e.g., via control circuitry 404 (FIG. 4)) each ordered sequence of commands corresponding to a navigation sequence and compare them with the stored commands received from the user. Specifically, the media guidance application may retrieve (e.g., via control circuitry 404 (FIG. 4)) a second received command from the user and compare (e.g., via control circuitry 404 (FIG. 4)) to a second command of a stored navigation sequence (e.g., based on indices of arrays). The media guidance application (e.g., via control circuitry 404 (FIG. 4)) may execute a for-loop to iterate through each navigation sequence and compare the navigation commands for the sequence to the navigation commands received from the user.

Process 2000 continues to 2016, where the media guidance application determines (e.g., via control circuitry 404 (FIG. 4)) whether the stored directional navigation commands input by the user complete a stored navigation sequence. For example, the media guidance application may determine (e.g., via control circuitry 404 (FIG. 4)) that each command of an ordered series of commands received from the user matches commands (in the same order) of a navigation sequence. In some embodiments, a navigation sequence is completed regardless of whether a user enters additional extraneous directional navigation commands (i.e., additional commands after the sequence). In other embodiments, the extraneous directional navigation commands may be compared to the sequence to see if they are a portion of the sequence, which may lead to the navigation instruction corresponding to the sequence being adjusted, as described above with respect to FIG. 16.

If, at 2016, the media guidance application determines that the stored directional navigation commands input by the user do complete the stored navigation sequence, process 2000 continues to 2018, where the media guidance application navigates (e.g., via control circuitry 404 (FIG. 4)) according to an instruction associated with the completed navigation sequence to another indicator. For example, the media guidance application may retrieve (e.g., via control circuitry 404 (FIG. 4)) a stored instruction associated with the completed navigation sequence from a field in a data structure. The media guidance application may determine (e.g., via control circuitry 404 (FIG. 4)), based on the instruction instead of the received commands themselves, a number of indicators to navigate through and a direction to navigate. The media guidance application may then navigate (e.g., update display 412 (FIG. 4)) based on an indicator determined to be selected based on the number of indicators to navigate through and the direction to navigate.

If, at 2016, the media guidance application determines that the stored directional navigation commands input by the user do not complete the stored navigation sequence, process 2000 continues to 2020, where the media guidance application navigates (e.g., via control circuitry 404 (FIG. 4)) according to directions associated with each directional navigation command received from the user to another indicator. For example, as described above with respect to FIG. 10, the media guidance application may determine (e.g., via control circuitry 404 (FIG. 4)), based on directions associated with each received directional navigation command, a particular indicator to navigate to. The media guidance application may navigate (e.g., via control circuitry 404 (FIG. 4)) to that particular indicator.

It is contemplated that the steps or descriptions of each of FIG. 20 may be used with any other embodiment of this disclosure. In addition, the steps and descriptions described in relation to FIG. 20 may be done in alternative orders or in parallel to further the purposes of this disclosure. For example, each of these steps may be performed in any order or in parallel or substantially simultaneously to reduce lag or increase the speed of the system or method. Furthermore, it should be noted that any of the devices or equipment discussed in relation to FIGS. 4-5 could be used to perform one or more of the steps in FIG. 20.

The processes discussed above are intended to be illustrative and not limiting. One skilled in the art would appreciate that the steps of the processes discussed herein may be omitted, modified, combined, and/or rearranged, and any additional steps may be performed without departing from the scope of the invention. More generally, the above disclosure is meant to be exemplary and not limiting. Only the claims that follow are meant to set bounds as to what the present invention includes. Furthermore, it should be noted that the features and limitations described in any one embodiment may be applied to any other embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

## Claims

1. A system comprising:
means for receiving by a media guidance application a request from a user to access a media asset that is scheduled for transmission, simultaneously to a plurality of users, beginning from a scheduled start time, wherein the request is received after the scheduled start time, and wherein the transmission is performed by a linear service to which the user subscribes;
means for generating for display, based on the transmission, the media asset to the user in response to the request;
means for receiving by the media guidance application, during display of the media asset, a command from the user to start playback of the media asset over from the beginning; and
means for, in response to receiving the command:
retrieving information of a profile of the user;
determining, from the information, a plurality of non-linear services to which the user subscribes that provide non-linear content over an Internet link;
querying a database corresponding to each non-linear service of the plurality of non-linear services to determine whether each non-linear service offers a non-linear copy of the media asset; and
based on the querying, identifying a non-linear service to which the user subscribes, different from the linear service, that provides non-linear content over an Internet link, and that offers a non-linear copy of the media asset; and
means for playing back the non-linear copy of the media asset from the beginning.

2. The system of claim 1, wherein at least one of:
(a) the means for playing back the non-linear copy of the media asset from the beginning comprises means for launching a platform corresponding to the non-linear service, wherein the platform corresponding to the non-linear service is different from a platform corresponding to the linear service that is used to generate for display the media asset using the linear service, and means for playing back the non-linear copy of the media asset using the platform corresponding to the non-linear service;
(b) the means for automatically determining, while the media asset is being generated for display using the transmission of the linear service, and without receiving the command, that the non-linear service offers the non-linear copy of the media asset, means for, in response to the automatic determining, automatically pre-caching the non-linear copy of the media asset at a cache local to the user, and means for, in response to receiving the command, accessing the pre-cached non-linear copy of the media asset;
(c) the system further comprises means for determining, in response to the querying, that no non-linear service of the plurality of non-linear services to which the user subscribes offers the non-linear copy of the media asset, means for, in response to determining that no non-linear service of the plurality of non-linear services to which the user subscribes offers the non-linear copy of the media asset, querying a second plurality of non-linear services to which the user does not subscribe to determine whether a second non-linear service of the second plurality of non-linear services offers a second non-linear copy of the media asset, and means for, in response to determining that the second non-linear service offers the second non-linear copy of the media asset, generating for display to the user a selectable option to subscribe to the second non-linear service;
(d) the system further comprises means for generating for display, in response to the querying, a menu indicating each non-linear service to which the user subscribes that offers the copy of the non-linear program, and means for receiving a user selection from the menu of an indication corresponding to the non-linear service, wherein the means for playing back the non-linear copy of the media asset from the beginning comprise means for playing back the non-linear copy of the media asset from the beginning in response to receiving the user selection;
(e) the system further comprises means for determining whether the non-linear service provider offers a premium version of the non-linear copy of the media asset, and means for, in response to determining that the non-linear service provider offers the premium version, generating for display, during playback of the non-linear copy of the media asset, a selectable option for accessing the premium version.

3. The system of claim 1, wherein:
the means for playing back the non-linear copy of the media asset from the beginning comprises:
means for launching a platform corresponding to the non-linear service, wherein the platform corresponding to the non-linear service is different from a platform corresponding to the linear service that is used to generate for display the media asset using the linear service; and
means for playing back the non-linear copy of the media asset using the platform corresponding to the non-linear service; and
the system further comprises:
means for determining whether playback of the non-linear copy of the media asset has terminated; and
means for, in response to determining that playback of the non-linear copy of the media asset has terminated, exiting the platform corresponding to the non-linear service and resuming generating for display media asset using the platform corresponding to the linear service.

4. The system of claim 3, wherein the means for determining whether playback of the non-linear copy of the media asset has terminated comprises:
means for monitoring for an end of playback of the non-linear copy of the media asset, or a command from the user to terminate playback of the non-linear copy of the media asset; and
means for, in response to detecting the end of playback of the non-linear copy of the media asset, or the command from the user to terminate playback of the non-linear copy of the media asset, determining that playback of the non-linear copy of the media asset has terminated.

5. The system of claim 1, 3, or 4, further comprising:
means for determining, in response to the querying, that no non-linear service of the plurality of non-linear services to which the user subscribes offers the non-linear copy of the media asset;
means for, in response to determining that no non-linear service of the plurality of non-linear services to which the user subscribes offers the non-linear copy of the media asset, querying a second plurality of non-linear services to which the user does not subscribe to determine whether a second non-linear service of the second plurality of non-linear services offers a second non-linear copy of the media asset; and
means for, in response to determining that the second non-linear service offers the second non-linear copy of the media asset:
generating for display to the user a selectable option to subscribe to the second non-linear service;
pre-caching the second non-linear copy of the media asset at a cache local to the user; and
in response to receiving a selection of the selectable option to subscribe to the second non-linear service, accessing the pre-cached second non-linear copy of the media asset.

6. The system of claim 1, 3, 4, or 5, further comprising:
means for generating for display, in response to the querying, a menu indicating each non-linear service to which the user subscribes that offers the copy of the non-linear media asset; and
means for receiving a user selection from the menu of an indication corresponding to the non-linear service, wherein the means for playing back the non-linear copy of the media asset from the beginning comprise means for playing back the non-linear copy of the media asset from the beginning in response to receiving the user selection;
wherein the menu additionally indicates non-linear services to which the user does not subscribe that offer the copy of the non-linear media asset.

7. A method comprising:
receiving a request from a user by a media guidance application to access a media asset that is scheduled for transmission, simultaneously to a plurality of users, beginning from a scheduled start time, wherein the request is received after the scheduled start time, and wherein the transmission is performed by a linear service to which the user subscribes;
in response to receiving the request, generating for display, based on the transmission, the media asset to the user;
receiving, during display of the media asset, a command from the user by the media guidance application to start playback of the media asset over from the beginning;
in response to receiving the command:
retrieving information of a profile of the user;
determining, from the information, a plurality of non-linear services to which the user subscribes that provide non-linear content over an Internet link;
querying a database corresponding to each non-linear service of the plurality of non-linear services to determine whether each non-linear service offers a non-linear copy of the media asset; and
based on the querying, identifying a non-linear service to which the
user subscribes, different from the linear service, that provides non-linear content over an Internet link, and that offers a non-linear copy of the media asset; and
playing back the non-linear copy of the media asset from the beginning.

8. The method of claim 7, wherein at least one of:
(a) playing back the non-linear copy of the media asset from the beginning comprises:
launching a platform corresponding to the non-linear service, wherein the platform corresponding to the non-linear service is different from a platform corresponding to the linear service that is used to generate for display the media asset using the linear service; and
playing back the non-linear copy of the media asset using the platform corresponding to the non-linear service;
(b) the method further comprises automatically determining, while the media asset is being generated for display using the transmission of the linear service, and without receiving the command, that the non-linear service offers the non-linear copy of the media asset, in response to the automatic determining, automatically pre-caching the non-linear copy of the media asset at a cache local to the user, and, in response to receiving the command, accessing the pre-cached non-linear copy of the media asset;
(c) the method further comprises determining, in response to the querying, that no non-linear service of the plurality of non-linear services to which the user subscribes offers the non-linear copy of the media asset, in response to determining that no non-linear service of the plurality of non-linear services to which the user subscribes offers the non-linear copy of the media asset, querying a second plurality of non-linear services to which the user does not subscribe to determine whether a second non-linear service of the second plurality of non-linear services offers a second non-linear copy of the media asset, and, in response to determining that the second non-linear service offers the second non-linear copy of the media asset, generating for display to the user a selectable option to subscribe to the second non-linear service;
(d) the method further comprises generating for display, in response to the querying, a menu indicating each non-linear service to which the user subscribes that offers the copy of the non-linear media asset, and receiving a user selection from the menu of an indication corresponding to the non-linear service, wherein the playing back the non-linear copy of the media asset from the beginning comprises playing back the non-linear copy of the media asset from the beginning in response to receiving the user selection;
(e) the method further comprises determining whether the non-linear service provider offers a premium version of the non-linear copy of the media asset, and, in response to determining that the non-linear service provider offers the premium version, generating for display, during playback of the non-linear copy of the media asset, a selectable option for accessing the premium version.

9. The method of claim 7, wherein:
playing back the non-linear copy of the media asset from the beginning comprises:
launching a platform corresponding to the non-linear service, wherein the platform corresponding to the non-linear service is different from a platform corresponding to the linear service that is used to generate for display the media asset using the linear service; and
playing back the non-linear copy of the media asset using the platform corresponding to the non-linear service; and
the method further comprises:
determining whether playback of the non-linear copy of the media asset has terminated; and
in response to determining that playback of the non-linear copy of the media asset has terminated, exiting the platform corresponding to the non-linear service and resuming generating for display media asset using the platform corresponding to the linear service.

10. The method of claim 9, wherein determining whether playback of the non-linear copy of the media asset has terminated comprises:
monitoring for an end of playback of the non-linear copy of the media asset, or a command from the user to terminate playback of the non-linear copy of the media asset; and
in response to detecting the end of playback of the non-linear copy of the media asset, or the command from the user to terminate playback of the non-linear copy of the media asset, determining that playback of the non-linear copy of the media asset has terminated.

11. The method of claim 7, 9, or 10, further comprising:
determining, in response to the querying, that no non-linear service of the plurality of non-linear services to which the user subscribes offers the non-linear copy of the media asset;
in response to determining that no non-linear service of the plurality of non-linear services to which the user subscribes offers the non-linear copy of the media asset, querying a second plurality of non-linear services to which the user does not subscribe to determine whether a second non-linear service of the second plurality of non-linear services offers a second non-linear copy of the media asset;
in response to determining that the second non-linear service offers the second non-linear copy of the media asset:
generating for display to the user a selectable option to subscribe to the second non-linear service;
pre-caching the second non-linear copy of the media asset at a cache local to the user; and
in response to receiving a selection of the selectable option to subscribe to the second non-linear service, accessing the pre-cached second non-linear copy of the media asset.

12. The method of claim 7, 9, 10, or 11, further comprising:
generating for display, in response to the querying, a menu indicating each non-linear service to which the user subscribes that offers the copy of the non-linear media asset; and
receiving a user selection from the menu of an indication corresponding to the non-linear service, wherein the playing back the non-linear copy of the media asset from the beginning comprises playing back the non-linear copy of the media asset from the beginning in response to receiving the user selection;
wherein the menu additionally indicates non-linear services to which the user does not subscribe that offer the copy of the non-linear media as.

13. A computer program comprising computer readable instructions that, when executed by one or more processors, cause the one or more processors to perform the method of any of claims 7-12.

## Patentansprüche

1. System, das Folgendes umfasst:
ein Mittel zum Empfangen einer Anforderung von einem Benutzer durch eine Medienführungsanwendung zum Zugreifen auf ein Medienelement, das für die Übertragung gleichzeitig an eine Vielzahl von Benutzern, beginnend zu einer vorgesehenen Startzeit, vorgesehen ist, wobei die Anforderung nach der vorgesehenen Startzeit empfangen wird, und wobei die Übertragung durch einen linearen Dienst ausgeführt wird, den der Benutzer abonniert;
ein Mittel zum Erzeugen des Medienelements zur Anzeige basierend auf der Übertragung für den Benutzer als Reaktion auf die Anforderung;
ein Mittel zum Empfangen eines Befehls von dem Benutzer durch die Medienführungsanwendung während der Anzeige des Medienelements zum erneuten Starten der Wiedergabe des Medienelements von Anfang an; und
als Reaktion auf das Empfangen des Befehls ein Mittel zum:
Abrufen von Informationen eines Profils des Benutzers;
Bestimmen einer Vielzahl von nichtlinearen Diensten, die der Benutzer abonniert und die nichtlineare Inhalte über eine Internetverbindung bereitstellen, aus den Informationen;
Abfragen einer Datenbank, die jedem nichtlinearen Dienst aus der Vielzahl von nichtlinearen Diensten entspricht, um zu bestimmen, ob jeder nichtlineare Dienst eine nichtlineare Kopie des Medienelements anbietet; und
basierend auf dem Abfragen Ermitteln eines nichtlinearen Dienstes, den der Benutzer abonniert, der sich von dem linearen Dienst unterscheidet, der nichtlineare Inhalte über eine Internetverbindung bereitstellt, und der eine nichtlineare Kopie des Medienelements anbietet; und
ein Mittel zum Wiedergeben der nichtlinearen Kopie des Medienelements von Anfang an.

2. System nach Anspruch 1, wobei mindestens eines des Folgenden gilt:
(a) das Mittel zum Wiedergeben der nichtlinearen Kopie des Medienelements von Anfang an umfasst ein Mittel zum Starten einer Plattform, die dem nichtlinearen Dienst entspricht, wobei sich die Plattform, die dem nichtlinearen Dienst entspricht, von einer Plattform unterscheidet, die dem linearen Dienst entspricht, der zum Erzeugen des Medienelements zur Anzeige unter Verwendung des linearen Dienstes verwendet wird, und ein Mittel zum Wiedergeben der nichtlinearen Kopie des Medienelements unter Verwendung der Plattform, die dem nichtlinearen Dienst entspricht;
(b) das Mittel zum automatischen Bestimmen, dass der nichtlineare Dienst die nichtlineare Kopie des Medienelements anbietet, während das Medienelement zur Anzeige unter Verwendung der Übertragung des linearen Dienstes erzeugt wird und ohne Empfangen des Befehls, ein Mittel zum automatischen Vorspeichern der nichtlinearen Kopie des Medienelements in einem für den Benutzer lokalen Zwischenspeicher als Reaktion auf das automatische Bestimmen und ein Mittel zum Zugreifen auf die vorgespeicherte nichtlineare Kopie des Medienelements als Reaktion auf das Empfangen des Befehls;
(c) das System umfasst ferner ein Mittel zum Bestimmen, dass kein nichtlinearer Dienst aus der Vielzahl von nichtlinearen Diensten, die der Benutzer abonniert, die nichtlineare Kopie des Medienelements anbietet, als Reaktion auf das Abfragen, ein Mittel zum Abfragen einer zweiten Vielzahl von nichtlinearen Diensten, die der Benutzer nicht abonniert, als Reaktion auf das Bestimmen, dass kein nichtlinearer Dienst aus der Vielzahl von nichtlinearen Diensten, die der Benutzer abonniert, die nichtlineare Kopie des Medienelements anbietet, um zu bestimmen, ob ein zweiter nichtlinearer Dienst aus der zweiten Vielzahl von nichtlinearen Diensten eine zweite nichtlineare Kopie des Medienelements anbietet, und ein Mittel zum Erzeugen einer auswählbaren Option zum Abonnieren des zweiten nichtlinearen Dienstes zur Anzeige für den Benutzer, als Reaktion auf das Bestimmen, dass der zweite nichtlineare Dienst die zweite nichtlineare Kopie des Medienelements anbietet;
(d) das System umfasst ferner ein Mittel zum Erzeugen eines Menüs zur Anzeige, das jeden nichtlinearen Dienst angibt, den der Benutzer abonniert und der die Kopie des nichtlinearen Programms anbietet, als Reaktion auf das Abfragen und ein Mittel zum Empfangen einer Benutzerauswahl aus dem Menü von einer Angabe, die dem nichtlinearen Dienst entspricht, wobei das Mittel zum Wiedergeben der nichtlinearen Kopie des Medienelements von Anfang an ein Mittel zum Wiedergeben der nichtlinearen Kopie des Medienelements von Anfang an als Reaktion auf das Empfangen der Benutzerauswahl umfasst;
(e) das System umfasst ferner ein Mittel zum Bestimmen, ob der nichtlineare Dienstanbieter eine Premiumversion der nichtlinearen Kopie des Medienelements anbietet, und ein Mittel zum Erzeugen einer auswählbaren Option zum Zugreifen auf die Premiumversion zur Anzeige während des Wiedergebens der nichtlinearen Kopie des Medienelements als Reaktion auf das Bestimmen, dass der nichtlineare Dienstanbieter die Premiumversion anbietet.

3. System nach Anspruch 1, wobei:
das Mittel zum Wiedergeben der nichtlinearen Kopie des Medienelements von Anfang an Folgendes umfasst:
ein Mittel zum Starten einer Plattform, die dem nichtlinearen Dienst entspricht, wobei sich die Plattform, die dem nichtlinearen Dienst entspricht, von einer Plattform unterscheidet, die dem linearen Dienst entspricht, der zum Erzeugen des Medienelements zur Anzeige unter Verwendung des linearen Dienstes verwendet wird; und
ein Mittel zum Wiedergeben der nichtlinearen Kopie des Medienelements unter Verwendung der Plattform, die dem nichtlinearen Dienst entspricht; und
das System ferner Folgendes umfasst:
ein Mittel zum Bestimmen, ob die Wiedergabe der nichtlinearen Kopie des Medienelements beendet ist; und
ein Mittel zum Verlassen der Plattform, die dem nichtlinearen Dienst entspricht, und zum Wiederaufnehmen des Erzeugens des Medienelements zur Anzeige unter Verwendung der Plattform, die dem linearen Dienst entspricht, als Reaktion auf das Bestimmen, dass die Wiedergabe der nichtlinearen Kopie des Medienelements beendet ist.

4. System nach Anspruch 3, wobei das Mittel zum Bestimmen, ob die Wiedergabe der nichtlinearen Kopie des Medienelements beendet ist, Folgendes umfasst:
ein Mittel zum Überwachen eines Endes einer Wiedergabe der nichtlinearen Kopie des Medienelements oder eines Befehls des Benutzers zum Beenden der Wiedergabe der nichtlinearen Kopie des Medienelements; und
ein Mittel zum Bestimmen, dass die Wiedergabe der nichtlinearen Kopie des Medienelements beendet ist, als Reaktion auf das Erfassen des Endes der Wiedergabe der nichtlinearen Kopie des Medienelements oder des Befehls des Benutzers zum Beenden der Wiedergabe der nichtlinearen Kopie des Medienelements.

5. System nach Anspruch 1, 3 oder 4, das ferner Folgendes umfasst:
ein Mittel zum Bestimmen, dass kein nichtlinearer Dienst aus der Vielzahl von nichtlinearen Diensten, die der Benutzer abonniert, die nichtlineare Kopie des Medienelements anbietet, als Reaktion auf das Abfragen;
ein Mittel zum Abfragen einer zweiten Vielzahl von nichtlinearen Diensten, die der Benutzer nicht abonniert, um zu bestimmen, ob ein zweiter nichtlinearer Dienst aus der zweiten Vielzahl nichtlinearer Dienste eine zweite nichtlineare Kopie des Medienelements anbietet, als Reaktion auf das Bestimmen, dass kein nichtlinearer Dienst aus der Vielzahl von nichtlinearen Diensten, die der Benutzer abonniert, die nichtlineare Kopie des Medienelements anbietet; und
ein Mittel, als Reaktion auf das Bestimmen, dass der zweite nichtlineare Dienst die zweite nichtlineare Kopie des Medienelements anbietet:
zum Erzeugen einer auswählbaren Option zum Abonnieren des zweiten nichtlinearen Dienstes zur Anzeige für den Benutzer;
zum Vorspeichern der zweiten nichtlinearen Kopie des Medienelements in einem für den Benutzer lokalen Zwischenspeicher; und
zum Zugreifen auf die vorgespeicherte zweite nichtlineare Kopie des Medienelements als Reaktion auf das Empfangen einer Auswahl der auswählbaren Option zum Abonnieren des zweiten nichtlinearen Dienstes.

6. System nach Anspruch 1, 3, 4 oder 5, das ferner Folgendes umfasst:
ein Mittel zum Erzeugen eines Menüs zur Anzeige, das jeden nichtlinearen Dienst angibt, den der Benutzer abonniert und der die Kopie des nichtlinearen Medienelements anbietet, als Reaktion auf das Abfragen; und
ein Mittel zum Empfangen einer Benutzerauswahl aus dem Menü von einer Angabe, die dem nichtlinearen Dienst entspricht, wobei das Mittel zum Wiedergeben der nichtlinearen Kopie des Medienelements von Anfang an ein Mittel zum Wiedergeben der nichtlinearen Kopie des Medienelements von Anfang an als Reaktion auf das Empfangen der Benutzerauswahl umfasst;
wobei das Menü zusätzlich nichtlineare Dienste angibt, die der Benutzer nicht abonniert und die die Kopie des nichtlinearen Medienelements anbieten.

7. Verfahren, das Folgendes umfasst:
Empfangen einer Anforderung von einem Benutzer durch eine Medienführungsanwendung zum Zugreifen auf ein Medienelement, das für die Übertragung gleichzeitig an eine Vielzahl von Benutzern, beginnend zu einer vorgesehenen Startzeit, vorgesehen ist, wobei die Anforderung nach der vorgesehenen Startzeit empfangen wird, und wobei die Übertragung durch einen linearen Dienst ausgeführt wird, den der Benutzer abonniert;
Erzeugen des Medienelements zur Anzeige basierend auf der Übertragung für den Benutzer als Reaktion auf das Empfangen der Anforderung;
Empfangen eines Befehls von dem Benutzer durch die Medienführungsanwendung während der Anzeige des Medienelements zum erneuten Starten der Wiedergabe des Medienelements von Anfang an;
als Reaktion auf das Empfangen des Befehls:
Abrufen von Informationen eines Profils des Benutzers;
Bestimmen einer Vielzahl von nichtlinearen Diensten, die der Benutzer abonniert und die nichtlineare Inhalte über eine Internetverbindung bereitstellen, aus den Informationen;
Abfragen einer Datenbank, die jedem nichtlinearen Dienst aus der Vielzahl von nichtlinearen Diensten entspricht, um zu bestimmen, ob jeder nichtlineare Dienst eine nichtlineare Kopie des Medienelements anbietet; und
basierend auf der Abfrage Ermitteln eines nichtlinearen Dienstes, den der Benutzer abonniert, der sich von dem linearen Dienst unterscheidet, der nichtlineare Inhalte über eine Internetverbindung bereitstellt, und der eine nichtlineare Kopie des Medienelements anbietet; und
Wiedergeben der nichtlinearen Kopie des Medienelements von Anfang an.

8. Verfahren nach Anspruch 7, wobei mindestens eines von Folgendem gilt:
(a) das Wiedergeben der nichtlinearen Kopie des Medienelements von Anfang an umfasst Folgendes:
Starten einer Plattform, die dem nichtlinearen Dienst entspricht, wobei sich die Plattform, die dem nichtlinearen Dienst entspricht, von einer Plattform unterscheidet, die dem linearen Dienst entspricht, der zum Erzeugen des Medienelements zur Anzeige unter Verwendung des linearen Dienstes verwendet wird; und
Wiedergeben der nichtlinearen Kopie des Medienelements unter Verwendung der Plattform, die dem nichtlinearen Dienst entspricht;
(b) das Verfahren umfasst ferner das automatische Bestimmen, dass der nichtlineare Dienst die nichtlineare Kopie des Medienelements anbietet, während das Medienelement zur Anzeige unter Verwendung der Übertragung des linearen Dienstes erzeugt wird und ohne Empfangen des Befehls, das automatische Vorspeichern der nichtlinearen Kopie des Medienelements in einem für den Benutzer lokalen Zwischenspeicher als Reaktion auf das automatische Bestimmen und das Zugreifen auf die vorgespeicherte nichtlineare Kopie des Medienelements als Reaktion auf das Empfangen des Befehls;
(c) das Verfahren umfasst ferner das Bestimmen, dass kein nichtlinearer Dienst aus der Vielzahl von nichtlinearen Diensten, die der Benutzer abonniert, die nichtlineare Kopie des Medienelements anbietet, als Reaktion auf das Abfragen, das Abfragen einer zweiten Vielzahl von nichtlinearen Diensten, die der Benutzer nicht abonniert, als Reaktion auf das Bestimmen, dass kein nichtlinearer Dienst aus der Vielzahl von nichtlinearen Diensten, die der Benutzer abonniert, die nichtlineare Kopie des Medienelements anbietet, um zu bestimmen, ob ein zweiter nichtlinearer Dienst aus der zweiten Vielzahl von nichtlinearen Diensten eine zweite nichtlineare Kopie des Medienelements anbietet, und das Erzeugen einer auswählbaren Option zum Abonnieren des zweiten nichtlinearen Dienstes zur Anzeige für den Benutzer als Reaktion auf das Bestimmen, dass der zweite nichtlineare Dienst die zweite nichtlineare Kopie des Medienelements anbietet;
(d) das Verfahren umfasst ferner das Erzeugen eines Menüs zur Anzeige, das jeden nichtlinearen Dienst angibt, den der Benutzer abonniert und der die Kopie des nichtlinearen Medienelements anbietet, als Reaktion auf das Abfragen und das Empfangen einer Benutzerauswahl aus dem Menü von einer Angabe, die dem nichtlinearen Dienst entspricht, wobei das Wiedergeben der nichtlinearen Kopie des Medienelements von Anfang an das Wiedergeben der nichtlinearen Kopie des Medienelements von Anfang an als Reaktion auf das Empfangen der Benutzerauswahl umfasst;
(e) das Verfahren umfasst ferner das Bestimmen, ob der nichtlineare Dienstanbieter eine Premiumversion der nichtlinearen Kopie des Medienelements anbietet, und das Erzeugen einer auswählbaren Option zum Zugreifen auf die Premiumversion zur Anzeige während des Wiedergebens der nichtlinearen Kopie des Medienelements als Reaktion auf das Bestimmen, dass der nichtlineare Dienstanbieter die Premiumversion anbietet.

9. Verfahren nach Anspruch 7, wobei:
das Wiedergeben der nichtlinearen Kopie des Medienelements von Anfang an Folgendes umfasst:
Starten einer Plattform, die dem nichtlinearen Dienst entspricht, wobei sich die Plattform, die dem nichtlinearen Dienst entspricht, von einer Plattform unterscheidet, die dem linearen Dienst entspricht, der zum Erzeugen des Medienelements zur Anzeige unter Verwendung des linearen Dienstes verwendet wird; und
Wiedergeben der nichtlinearen Kopie des Medienelements unter Verwendung der Plattform, die dem nichtlinearen Dienst entspricht; und
das Verfahren ferner Folgendes umfasst:
Bestimmen, ob die Wiedergabe der nichtlinearen Kopie des Medienelements beendet ist; und
Verlassen der Plattform, die dem nichtlinearen Dienst entspricht, und das Wiederaufnehmen des Erzeugens des Medienelements zur Anzeige unter Verwendung der Plattform, die dem linearen Dienst entspricht, als Reaktion auf das Bestimmen, dass die Wiedergabe der nichtlinearen Kopie des Medienelements beendet ist.

10. Verfahren nach Anspruch 9, wobei das Bestimmen, ob die Wiedergabe der nichtlinearen Kopie des Medienelements beendet ist, Folgendes umfasst:
Überwachen eines Endes einer Wiedergabe der nichtlinearen Kopie des Medienelements oder eines Befehls des Benutzers zum Beenden der Wiedergabe der nichtlinearen Kopie des Medienelements; und
Bestimmen, dass die Wiedergabe der nichtlinearen Kopie des Medienelements beendet ist, als Reaktion auf das Erfassen des Endes der Wiedergabe der nichtlinearen Kopie des Medienelements oder des Befehls des Benutzers zum Beenden der Wiedergabe der nichtlinearen Kopie des Medienelements.

11. Verfahren nach Anspruch 7, 9 oder 10, das ferner Folgendes umfasst:
Bestimmen, dass kein nichtlinearer Dienst aus der Vielzahl von nichtlinearen Diensten, die der Benutzer abonniert, die nichtlineare Kopie des Medienelements anbietet, als Reaktion auf das Abfragen;
Abfragen einer zweiten Vielzahl von nichtlinearen Diensten, die der Benutzer nicht abonniert, um zu bestimmen, ob ein zweiter nichtlinearer Dienst aus der zweiten Vielzahl nichtlinearer Dienste eine zweite nichtlineare Kopie des Medienelements anbietet, als Reaktion auf das Bestimmen, dass kein nichtlinearer Dienst aus der Vielzahl von nichtlinearen Diensten, die der Benutzer abonniert, die nichtlineare Kopie des Medienelements anbietet;
als Reaktion auf das Bestimmen, dass der zweite nichtlineare Dienst die zweite nichtlineare Kopie des Medienelements anbietet:
Erzeugen einer auswählbaren Option zum Abonnieren des zweiten nichtlinearen Dienstes zur Anzeige für den Benutzer;
Vorspeichern der zweiten nichtlinearen Kopie des Medienelements in einem für den Benutzer lokalen Zwischenspeicher; und
Zugreifen auf die vorgespeicherte zweite nichtlineare Kopie des Medienelements als Reaktion auf das Empfangen einer Auswahl der auswählbaren Option zum Abonnieren des zweiten nichtlinearen Dienstes.

12. Verfahren nach Anspruch 7, 9, 10 oder 11, das ferner Folgendes umfasst:
Erzeugen eines Menüs zur Anzeige, das jeden nichtlinearen Dienst angibt, den der Benutzer abonniert und der die Kopie des nichtlinearen Medienelements anbietet, als Reaktion auf das Abfragen; und
Empfangen einer Benutzerauswahl aus dem Menü von einer Angabe, die dem nichtlinearen Dienst entspricht, wobei das Wiedergeben der nichtlinearen Kopie des Medienelements von Anfang an das Wiedergeben der nichtlinearen Kopie des Medienelements von Anfang an als Reaktion auf das Empfangen der Benutzerauswahl umfasst;
wobei das Menü zusätzlich nichtlineare Dienste angibt, die der Benutzer nicht abonniert und die die Kopie des nichtlinearen Medienelements anbieten.

13. Computerprogramm, das computerlesbare Anweisungen umfasst, die bei Ausführung durch einen oder mehrere Prozessoren den einen oder die mehreren Prozessoren dazu veranlassen, das Verfahren nach einem der vorhergehenden Ansprüche 7-12 durchzuführen.

## Revendications

1. Système comprenant :
un moyen pour recevoir par une application de guidage multimédia une requête d'un utilisateur pour accéder à un contenu multimédia qui est programmé pour une transmission, simultanément à une pluralité d'utilisateurs, en commençant à partir d'une heure de début programmée, dans lequel la requête est reçue après l'heure de début programmée, et dans lequel la transmission est effectuée par un service linéaire auquel l'utilisateur souscrit ;
un moyen pour générer pour affichage, sur la base de la transmission, le contenu multimédia à l'utilisateur en réponse à la requête ;
un moyen pour recevoir par l'application de guidage multimédia, pendant l'affichage du contenu multimédia, une commande de l'utilisateur pour démarrer la lecture du contenu multimédia depuis le début ; et
un moyen pour, en réponse à la réception de la commande :
récupérer des informations d'un profil de l'utilisateur ;
déterminer, à partir des informations, une pluralité de services non linéaires auxquels l'utilisateur souscrit qui fournissent un contenu non linéaire via un lien Internet ;
interroger une base de données correspondant à chaque service non linéaire de la pluralité de services non linéaires afin de déterminer si chaque service non linéaire offre une copie non linéaire du contenu multimédia ; et
sur la base de l'interrogation, identifier un service non linéaire auquel l'utilisateur souscrit, différent du service linéaire, qui fournit un contenu non linéaire via un lien Internet et qui offre une copie non linéaire du contenu multimédia ; et
un moyen pour lire la copie non linéaire du contenu multimédia depuis le début.

2. Système selon la revendication 1, dans lequel au moins l'un parmi :
(a) le moyen pour lire la copie non linéaire du contenu multimédia depuis le début comprend un moyen pour lancer une plateforme correspondant au service non linéaire, dans lequel la plateforme correspondant au service non linéaire est différente d'une plateforme correspondant au service linéaire qui est utilisée pour générer pour affichage le contenu multimédia à l'aide du service linéaire, et un moyen pour lire la copie non linéaire du contenu multimédia à l'aide de la plateforme correspondant au service non linéaire ;
(b) le moyen pour déterminer automatiquement, pendant que le contenu multimédia est généré pour affichage à l'aide de la transmission du service linéaire, et sans recevoir la commande, que le service non linéaire offre la copie non linéaire du contenu multimédia, un moyen pour, en réponse à la détermination automatique, mettre en cache préalablement automatiquement la copie non linéaire du contenu multimédia dans un cache local pour l'utilisateur, et un moyen pour, en réponse à la réception de la commande, accéder à la copie non linéaire mise en cache préalablement du contenu multimédia ;
(c) le système comprend en outre un moyen pour déterminer, en réponse à l'interrogation, qu'aucun service non linéaire de la pluralité de services non linéaires auxquels l'utilisateur souscrit n'offre la copie non linéaire du contenu multimédia, un moyen pour, en réponse à la détermination qu'aucun service non linéaire de la pluralité de services non linéaires auxquels l'utilisateur souscrit n'offre la copie non linéaire du contenu multimédia, interroger une seconde pluralité de services non linéaires auxquels l'utilisateur ne souscrit pas pour déterminer si un second service non linéaire de la seconde pluralité de services non linéaires offre une seconde copie non linéaire du contenu multimédia, et un moyen pour, en réponse à la détermination que le second service non linéaire offre la seconde copie non linéaire du contenu multimédia, générer pour affichage à l'utilisateur une option sélectionnable pour souscrire au second service non linéaire ;
(d) le système comprend en outre un moyen pour générer pour affichage, en réponse à l'interrogation, un menu indiquant chaque service non linéaire auquel l'utilisateur souscrit qui offre la copie du programme non linéaire, et un moyen pour recevoir une sélection d'utilisateur depuis le menu d'une indication correspondant au service non linéaire, dans lequel les moyens pour lire la copie non linéaire du contenu multimédia depuis le début comprennent un moyen pour lire la copie non linéaire du contenu multimédia depuis le début en réponse à la réception de la sélection d'utilisateur ;
(e) le système comprend en outre un moyen pour déterminer si le fournisseur de service non linéaire offre une version premium de la copie non linéaire du contenu multimédia, et un moyen pour, en réponse à la détermination que le fournisseur de service non linéaire offre la version premium, générer pour affichage, pendant la lecture de la copie non linéaire du contenu multimédia, une option sélectionnable pour accéder à la version premium.

3. Système selon la revendication 1, dans lequel :
le moyen pour lire la copie non linéaire du contenu multimédia depuis le début comprend :
un moyen pour lancer une plateforme correspondant au service non linéaire, dans lequel la plateforme correspondant au service non linéaire est différente d'une plateforme correspondant au service linéaire qui est utilisée pour générer pour affichage le contenu multimédia à l'aide du service linéaire ; et
un moyen pour lire la copie non linéaire du contenu multimédia à l'aide de la plateforme correspondant au service non linéaire ; et
le système comprend en outre :
un moyen pour déterminer si la lecture de la copie non linéaire du contenu multimédia est terminée ; et
un moyen pour, en réponse à la détermination de la fin de la lecture de la copie non linéaire du contenu multimédia, quitter la plateforme correspondant au service non linéaire et reprendre la génération pour affichage du contenu multimédia à l'aide de la plateforme correspondant au service linéaire.

4. Système selon la revendication 3, dans lequel le moyen pour déterminer si la lecture de la copie non linéaire du contenu multimédia est terminée comprend :
un moyen pour surveiller une fin de lecture de la copie non linéaire du contenu multimédia, ou une commande de l'utilisateur pour terminer la lecture de la copie non linéaire du contenu multimédia ; et
un moyen pour, en réponse à la détection de la fin de lecture de la copie non linéaire du contenu multimédia, ou de la commande de l'utilisateur pour terminer la lecture de la copie non linéaire du contenu multimédia, déterminer que la lecture de la copie non linéaire du contenu multimédia est terminée.

5. Système selon la revendication 1, 3 ou 4, comprenant en outre :
un moyen pour déterminer, en réponse à l'interrogation, qu'aucun service non linéaire de la pluralité de services non linéaires auxquels l'utilisateur souscrit n'offre la copie non linéaire du contenu multimédia ;
un moyen pour, en réponse à la détermination qu'aucun service non linéaire de la pluralité de services non linéaires auxquels l'utilisateur souscrit n'offre la copie non linéaire du contenu multimédia, interroger une seconde pluralité de services non linéaires auxquels l'utilisateur ne souscrit pas pour déterminer si un second service non linéaire de la seconde pluralité de services non linéaires offre une seconde copie non linéaire du contenu multimédia ; et
un moyen pour, en réponse à la détermination que le second service non linéaire offre la seconde copie non linéaire du contenu multimédia :
générer pour affichage à l'utilisateur une option sélectionnable pour souscrire au second service non linéaire ;
mettre en cache préalablement la seconde copie non linéaire du contenu multimédia dans un cache local pour l'utilisateur ; et
en réponse à la réception d'une sélection de l'option sélectionnable pour souscrire au second service non linéaire, accéder à la seconde copie non linéaire mise en cache préalablement du contenu multimédia.

6. Système selon la revendication 1, 3, 4 ou 5, comprenant en outre :
un moyen pour générer pour affichage, en réponse à l'interrogation, un menu indiquant chaque service non linéaire auquel l'utilisateur souscrit qui offre la copie du contenu multimédia non linéaire ; et
un moyen pour recevoir une sélection d'utilisateur depuis le menu d'une indication correspondant au service non linéaire, dans lequel les moyens pour lire la copie non linéaire du contenu multimédia depuis le début comprennent un moyen pour lire la copie non linéaire du contenu multimédia depuis le début en réponse à la réception de la sélection d'utilisateur ;
dans lequel le menu indique en outre des services non linéaires auxquels l'utilisateur ne souscrit pas qui offrent la copie du contenu multimédia non linéaire.

7. Procédé comprenant :
la réception d'une requête d'un utilisateur par une application de guidage multimédia pour accéder à un contenu multimédia qui est programmé pour une transmission, simultanément à une pluralité d'utilisateurs, en commençant à partir d'une heure de début programmée, dans lequel la requête est reçue après l'heure de début programmée, et dans lequel la transmission est effectuée par un service linéaire auquel l'utilisateur souscrit ;
en réponse à la réception de la requête, la génération pour affichage, sur la base de la transmission, du contenu multimédia à l'utilisateur ;
la réception, pendant l'affichage du contenu multimédia, d'une commande de l'utilisateur par l'application de guidage multimédia pour démarrer la lecture du contenu multimédia depuis le début ;
en réponse à la réception de la commande :
la récupération d'informations d'un profil de l'utilisateur ;
la détermination, à partir des informations, d'une pluralité de services non linéaires auxquels l'utilisateur souscrit qui fournissent un contenu non linéaire via un lien Internet ;
l'interrogation d'une base de données correspondant à chaque service non linéaire de la pluralité de services non linéaires pour déterminer si chaque service non linéaire offre une copie non linéaire du contenu multimédia ; et
sur la base de l'interrogation, l'identification d'un service non-linéaire auquel l'utilisateur souscrit, différent du service linéaire, qui fournit un contenu non linéaire via un lien Internet et qui offre une copie non linéaire du contenu multimédia ; et
la lecture de la copie non linéaire du contenu multimédia depuis le début.

8. Procédé selon la revendication 7, dans lequel au moins l'un parmi :
(a) la lecture de la copie non linéaire du contenu multimédia depuis le début comprend :
le lancement d'une plateforme correspondant au service non linéaire, dans lequel la plateforme correspondant au service non linéaire est différente d'une plateforme correspondant au service linéaire qui est utilisée pour générer pour affichage le contenu multimédia à l'aide du service linéaire ; et
la lecture de la copie non linéaire du contenu multimédia à l'aide de la plateforme correspondant au service non linéaire ;
(b) le procédé comprend en outre la détermination automatique, pendant que le contenu multimédia est généré pour affichage à l'aide de la transmission du service linéaire, et sans recevoir la commande, que le service non linéaire offre la copie non linéaire du contenu multimédia, en réponse à la détermination automatique, la mise en cache préalable automatique de la copie non linéaire du contenu multimédia dans un cache local pour l'utilisateur et, en réponse à la réception de la commande, l'accès à la copie non linéaire mise en cache préalablement du contenu multimédia ;
(c) le procédé comprend en outre la détermination, en réponse à l'interrogation, qu'aucun service non linéaire de la pluralité de services non linéaires auxquels l'utilisateur souscrit n'offre la copie non linéaire du contenu multimédia, en réponse à la détermination qu'aucun service non linéaire de la pluralité de services non linéaires auxquels l'utilisateur souscrit n'offre la copie non linéaire du contenu multimédia, l'interrogation d'une seconde pluralité de services non linéaires auxquels l'utilisateur ne souscrit pas pour déterminer si un second service non linéaire de la seconde pluralité de services non linéaires offre une seconde copie non linéaire du contenu multimédia et, en réponse à la détermination que le second service non linéaire offre la seconde copie non linéaire du contenu multimédia, la génération pour affichage à l'utilisateur d'une option sélectionnable pour souscrire au second service non linéaire ;
(d) le procédé comprend en outre la génération pour affichage, en réponse à l'interrogation, d'un menu indiquant chaque service non linéaire auquel l'utilisateur souscrit qui offre la copie du contenu multimédia non linéaire, et la réception d'une sélection d'utilisateur depuis le menu d'une indication correspondant au service non linéaire, dans lequel la lecture de la copie non linéaire du contenu multimédia depuis le début comprend la lecture de la copie non linéaire du contenu multimédia depuis le début en réponse à la réception de la sélection d'utilisateur ;
(e) le procédé comprend en outre le fait de déterminer si le fournisseur de service non linéaire offre une version premium de la copie non linéaire du contenu multimédia et, en réponse à la détermination que le fournisseur de service non linéaire offre la version premium, la génération pour affichage, lors de la lecture de la copie non linéaire du contenu multimédia, d'une option sélectionnable pour accéder à la version premium.

9. Procédé selon la revendication 7, dans lequel :
la lecture de la copie non linéaire du contenu multimédia depuis le début comprend :
le lancement d'une plateforme correspondant au service non linéaire, dans lequel la plateforme correspondant au service non linéaire est différente d'une plateforme correspondant au service linéaire qui est utilisée pour générer pour affichage le contenu multimédia à l'aide du service linéaire ; et
la lecture de la copie non linéaire du contenu multimédia à l'aide de la plateforme correspondant au service non linéaire ; et
le procédé comprend en outre :
le fait de déterminer si la lecture de la copie non linéaire du contenu multimédia est terminée ; et
en réponse à la détermination de la fin de la lecture de la copie non linéaire du contenu multimédia, le fait de quitter la plateforme correspondant au service non linéaire et la reprise de la génération pour affichage du contenu multimédia à l'aide de la plateforme correspondant au service linéaire.

10. Procédé selon la revendication 9, dans lequel le fait de déterminer si la lecture de la copie non linéaire du contenu multimédia est terminée comprend :
la surveillance d'une fin de lecture de la copie non linéaire du contenu multimédia, ou d'une commande de l'utilisateur pour terminer la lecture de la copie non linéaire du contenu multimédia ; et
en réponse à la détection de la fin de la lecture de la copie non linéaire du contenu multimédia, ou de la commande de l'utilisateur pour terminer la lecture de la copie non linéaire du contenu multimédia, la détermination de la fin de la lecture de la copie non linéaire du contenu multimédia.

11. Procédé selon la revendication 7, 9 ou 10, comprenant en outre :
la détermination, en réponse à l'interrogation, qu'aucun service non linéaire de la pluralité de services non linéaires auxquels l'utilisateur souscrit n'offre la copie non linéaire du contenu multimédia ;
en réponse à la détermination qu'aucun service non linéaire de la pluralité de services non linéaires auxquels l'utilisateur souscrit n'offre la copie non linéaire du contenu multimédia, l'interrogation d'une seconde pluralité de services non linéaires auxquels l'utilisateur ne souscrit pas pour déterminer si un second service non linéaire de la seconde pluralité de services non linéaires offre une seconde copie non linéaire du contenu multimédia ;
en réponse à la détermination que le second service non linéaire offre la seconde copie non linéaire du contenu multimédia :
la génération pour affichage à l'utilisateur d'une option sélectionnable pour souscrire au second service non linéaire ;
la mise en cache préalable de la seconde copie non linéaire du contenu multimédia dans un cache local pour l'utilisateur ; et
en réponse à la réception d'une sélection de l'option sélectionnable pour souscrire au second service non linéaire, l'accès à la seconde copie non linéaire mise en cache préalablement du contenu multimédia.

12. Procédé selon la revendication 7, 9, 10 ou 11, comprenant en outre :
la génération pour affichage, en réponse à l'interrogation, d'un menu indiquant chaque service non linéaire auquel l'utilisateur souscrit et qui offre la copie du contenu multimédia non linéaire ; et
la réception d'une sélection d'utilisateur depuis le menu d'une indication correspondant au service non linéaire, dans lequel la lecture de la copie non linéaire du contenu multimédia depuis le début comprend la lecture de la copie non linéaire du contenu multimédia depuis le début en réponse à la réception de la sélection d'utilisateur ;
dans lequel le menu indique en outre des services non linéaires auxquels l'utilisateur ne souscrit pas qui offrent la copie du contenu multimédia non linéaire.

13. Programme informatique comprenant des instructions lisibles par ordinateur qui, lorsqu'elles sont exécutées par un ou plusieurs processeurs, amènent les un ou plusieurs processeurs à exécuter le procédé selon l'une quelconque des revendications précédentes 7 à 12.
